# EUROPEAN PATENT APPLICATION

(11) **EP 2 012 532 A2**
(43) Date of publication of application: **07.01.2009**
(21) Application number: 08252260.8
(22) Date of filing: 02.07.2008
(51) Int. Cl.: H04N 5/44

(54) **Video displaying apparatus, video signal processing apparatus and video signal processing method**

(30) Priority: 05.07.2007 JP 2007176862; 05.07.2007 JP 2007176863; 05.07.2007 JP 2007176865
(71) Applicant: Hitachi Ltd., Chiyoda-ku Tokyo 100-8280 (JP)
(72) Inventor: Kageyama, Masahiro, Tokyo 100-8220 (JP); Hamada, Koichi, Tokyo 100-8220 (JP); Nagaya, Shigeki, Tokyo 100-8220 (JP); Fujita, Takehiro, Tokyo 100-8220 (JP)
(74) Representative: Calderbank, Thomas Roger

(57) **Abstract**

The present invention provides a technology for achieving high resolution of video signals, preferably, with a small number of frames of a video signal or a motion picture.

The video signal processing apparatus comprises an input unit, into which a plural number of video frames, and a resolution converter unit, having characteristics for resolution conversion differing depending on the direction, in which an object to be photographed moves on that input video frame, by composing the plural number of video frames inputted, and for obtaining an output video frame by increasing a number of pixels building up the video frame, whereby obtaining high resolution video with using an output result of that resolution converter unit.

## Description

### BACKGROUND OF THE INVENTION

### (1) Field of the Invention

The present invention relates to a technology for obtaining a high-resolution video signal from a video signal, and in particular, it relates to a technology for achieving the high resolution, with increasing a number of pixels building up a video frame and removing unnecessary aliasing,while composing orcombing a plural number of video frames.

### (2) Description of the Related Art

In recent years, advancement is made on large sizing of the screen, for television receivers, and accompanying with this, it is common that the video signal inputted from broadcasting, communication and/or storage medium, etc., is not displayed on it as it is, but is displayed with increasing the pixel numbers in the horizontal/vertical directions through digital signal processing. In this instance, however, it is impossible to increase the resolution only by increasing the pixel number, through an interpolation low-pass filter using sinc function or spline function, being well-know in general.

Then, as is already described in the following Patent Documents 1 and 2, and Non-Patent Document 1, there is proposed a technology (hereinafter, the conventional art) for increasing the pixel number while achieving the high resolution at the same time, by composing or synthesizing a plural number of picture or video frames (hereinafter, being called only "frame", in brief) .
[Patent Document 1] Japanese Patent Laying-Open No. Hei 8-336046 (1996);
[Patent Document 2] Japanese Patent Laying-Open No. Hei 9-69755 (1997); and
[Non-Patent Document 1] Shin AOKI "Super Resolution Processing by Plural Number of Lower Resolution image", Ricoh Technical Report pp.19-25, No.24, NOVEMBER, 1998;

### SUMMARY OF THE INVENTION

With those conventional arts, the high resolution can be obtained through three processes, (1) position estimation, (2) broadband interpolation, and (3) a weighted sum. Herein, the (1) position estimation is a process for assuming or estimating difference in the sampling phase (or sampling position) for each video data, with using the each video data of the plural number of video frames inputted. The (2) broadband interpolation is a process for increasing the pixel number (i.e., sampling points) of the each video data, including the aliasing components therein, through interpolation, with use of a wideband low-pass filter for transmitting all of the high-frequency components of an original signal, thereby obtaining high resolution of the video data. The (3) weighted sum is a process for negating the aliasing components generated when sampling the pixels, by taking the weighted sum depending on the sampling phase of each high-density data, so as to remove them, and at the same time restoring the high-frequency components of the original signal.

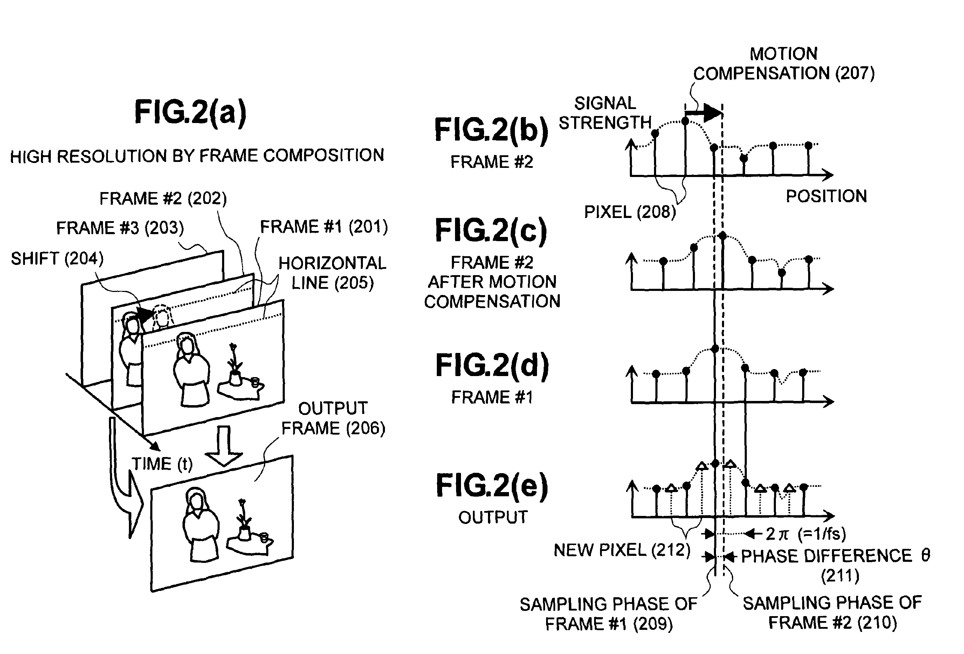

Figs. 2 (a) to 2(e) show this high-resolution technology, in brief. As is shown in Fig. 2(a), herein it is assumed that a frame #1 (201), a frame #2 (202) and a frame #3 (203) on different time axes are inputted, to be composed with, thereby obtaining an output frame (206). For the purpose of simplification, first of all, consideration is paid upon case where the target moves into the horizontal direction (204), i.e., achieving the high resolution through a linear signal processing on a horizontal line (205) . In this instance, as is shown in Figs. 2(b) and 2(d), between the frame #2 (202) and the frame #1 (201) is generated a positional difference depending on an amount of moving (204) of the target. This positional difference is obtained through the (1) position estimation mentioned above, thereby to make such motion compensation (207) upon the frame #2 (202) that no positional difference is generated, as is shown in Fig. 2(c), and at the same time, phase difference θ is obtained between the sampling phases (209) and (210) of pixels (208) for each frame. Through conducting the (2) broadband interpolation and the (3) weighted sum mentioned above, upon this phase difference θ (211), a new pixel (212) can be produced at a position just between the original pixels (208) (i.e., phase difference θ=π); thereby achieving the high resolution. The (3) weighted sum will be mentioned later.

However, in actual, it must be also considered that the movement of the target includes, not only the parallel movement, but also accompanying movements of rotation, expansion and reduction, etc.; however, in case where the time distance between the frames is very small and/or when the target moves slowly, it is possible to consider those movements with approximating them into a local parallel movement.

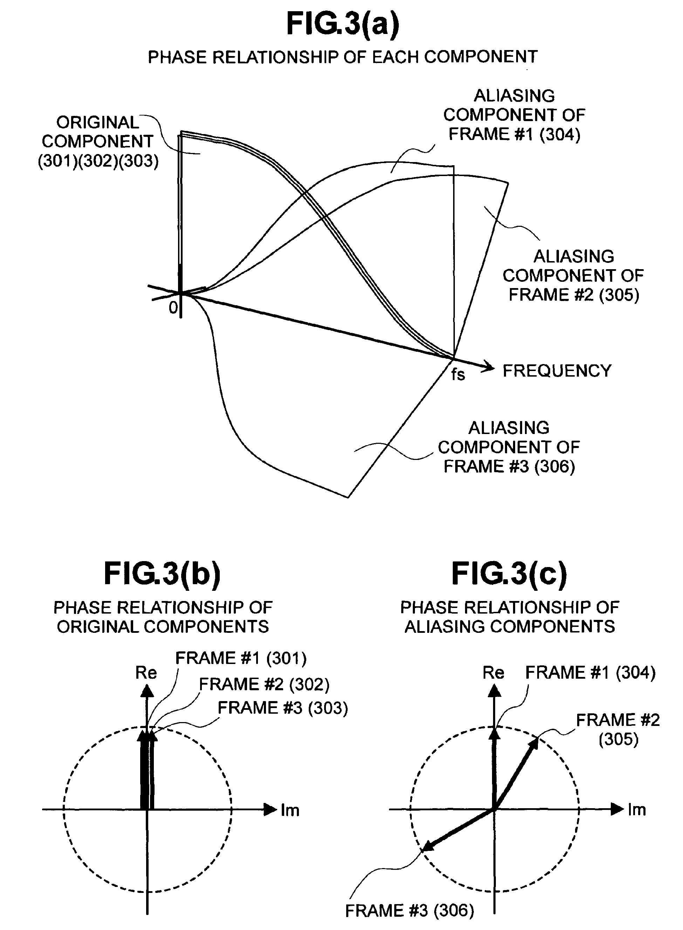

In case when achieving the high resolution of 2-times in the one-dimensional direction with the conventional technologies mentioned in the Patent Documents 1 and 2, and Non-Patent Document 1, as is shown in Figs. 3(a) to 3(c), it is necessary to use signals of at least three (3) pieces of frame pictures or videos when conducting the weighted sum of the above (3). Herein, Figs. 3(a) to 3(c) are views for showing frequency spectrums of each component, within the one-dimensional frequency region. In those figures, distance from the frequency axis shows signal strength, while rotation angle around the frequency axis shows the phase thereof. With the weighted sum of the above (3), detailed explanation thereof will be given below.

As was mentioned above, when conducting an interpolation upon pixels through a wideband low-pass filter for transmitting the frequency band (frequency band from 0 to sampling frequency fs) being 2-times of the Nyquist frequency, by the wideband interpolation of the above (2), sum can be obtained of the component same to the original signal (hereinafter, being called "original component") and the aliasing component depending on the sampling phase. In this instance, when conducting the wideband interpolation of the above (2) upon the signals of three (3) pieces of frame videos, as is shown in Fig. 3(a), it is well-known that all phases of the original components (301), (302) and (303) of each frame are coincident with one another, and that the phases of aliasing components (304), (305) and (306) rotate depending on the sampling phase of the each frame. For easy understanding of phase relationship between the respective ones, the phase relationship of the original components of the each frame is shown in Fig. 3(b), and the relationship of the aliasing components of the each frame in Fig. 3(c).

Herein, by conducting the weighted sum of the above (3) upon three (3) pieces of the signals of frame pictures or videos, while appropriately selecting the coefficients to be multiplied thereon, it is possible to remove the aliasing components (304), (305) and (306) of each frame, negating one another, and thereby to extract only the original component. In this instance, for the purpose of making the vectrial sum of aliasing components (304), (305) and (306) of the each frame zero (0), i.e., bringing both components on Re axis (i.e., a real axis) and Im axis (i.e., an imaginary axis) into zero (0), at least three (3) pieces of the aliasing components are necessary. Accordingly, for realizing the 2-times high resolution, i.e. , for removing one (1) piece of the aliasing component, it is necessary to use the signals of at least three (3) pieces of frame video.

In the similar manner, as is described in those Patent Documents 1 and 2, and Non-Patent Document 1, for achieving the high resolution upon two-dimensional input signals, including the vertical signal and the horizontal signal, since the aliasing component comes in from two (2) directions, i.e., the vertical direction and the horizontal direction, then three (3) aliasing components overlap on one another if the band width of the original signal is widen by two (2) times, in both the vertical and horizontal directions, and then it is necessary to use 2M+1 pieces digital data (=seven (7) pieces of the frame video signals) for canceling those.

Accordingly, with the conventional technology, frame memory and the signal processing circuit becomes large in the scales thereof, and therefore not economic. Also, the necessity for conducting the position estimation, correctly, upon a large number of frame videos separated on timing, brings the structures to be complex. Thus, with the conventional technology, it is difficult to obtain the high resolution of the moving pictures, such as, on the television broadcast signal, for example.

Also, the present television broadcast signal applies an interlace scanning therein, mainly, but in the Patent Documents 1 and 2 and the Non-Patent Document 1, there is not disclosure nor teaching about the high resolution for an interlace scanning signal itself and an interlace progressive scanning conversion (I-P conversion).

Also, in the present digital television broadcasting with using the terrestrial waves or satellite (i.e., BS, CS), programs are put on the air through a video signal of HD (high Definition), in addition to the conventional video signal of SD (Standard Definition). However, all of the programs are not yet replaced by the video signals, which are picked up by a HD camera, and therefore, it is well known to convert the video signal, which is picked up by a SD camera, into a signal having the same pixel number to that of HD (i.e., up converting), through a SD/HD converter, so as to broadcast it while exchanging for each of programs or scenes.

With the conventional receiver, video of high resolution is reproduced when the received signal is the video signal, which is picked up by the HD camera, and video of low resolution is reproduced when it is the video signal after the SD/HD conversion (i.e., the up conversion), and therefore the resolution is switched over, frequency, in each of the programs or scenes, and thereby bringing about a problem of causing it to be difficult to be seen.

The present invention provides a technology for converting the video signal into one being high in the resolution thereof, preferably.

Thus, according to the present invention, it is possible to achieve the high resolution of the video signal, more preferably.

### BRIEF DESCRIPTION OF THE DRAWINGS

Those and other features, objects and advantages of the present invention will become more apparent from the following description when taken in conjunction with the accompanying drawings wherein:
Fig. 1 is a block diagram for showing the configuration of a video signal processing apparatus, according to an embodiment 1 of the present invention;
Figs. 2(a) to 2(e) are views for explaining operations of a general video signal processing for high resolution;
Figs. 3(a) to 3(c) are views for explaining the operations of the prior art;
Figs. 4(a) to 4(c) are views for explaining the operations in the embodiment 1, according to the present invention;
Fig. 5 is a view for explaining the embodiment 1, according to the present invention;
Fig. 6 is a view for explaining the embodiment 1, according to the present invention;
Figs. 7(a) and 7(b) are views for explaining the embodiment 1, according to the present invention;
Fig. 8 is a view for explaining the embodiment 1, according to the present invention;
Figs. 9(a) to 9(d) are views for explaining the embodiment 1, according to the present invention;
Fig. 10 is a view for explaining an embodiment 3, according to the present invention;
Fig. 11 is a view for explaining an embodiment 5, according to the present invention;
Fig. 12 is a view for explaining the embodiment 5, according to the present invention;
Fig. 13 is a view for explaining the third embodiment, according to the present invention;
Fig. 14 is a view for explaining an embodiment 2, according to the present invention;
Fig. 15 is a view for explaining an embodiment 4, according to the present invention;
Fig. 16 is a view for explaining an embodiment 6, according to the present invention;
Figs. 17(a) to 17(c) are views for explaining difference in the operations thereof, between the present invention and the prior arts;
Fig. 18 is a view for explaining the embodiment 2, according to the present invention;
Fig. 19 is a view for explaining an embodiment 12, according to the present invention;
Fig. 20 is a view for explaining an embodiment 7, according to the present invention;
Fig. 21 is a view for explaining an embodiment 8, according to the present invention;
Fig. 22 is a view for explaining the embodiment 7, according to the present invention;
Fig. 23 is a view for explaining the embodiment 7, according to the present invention;
Fig. 24 is a view for explaining the embodiment 7, according to the present invention;
Fig. 25 is a view for explaining the embodiment 7, according to the present invention;
Fig. 26 is a view for explaining the embodiment 7, according to the present invention;
Fig. 27 is a view for explaining an embodiment 9, according to the present invention;

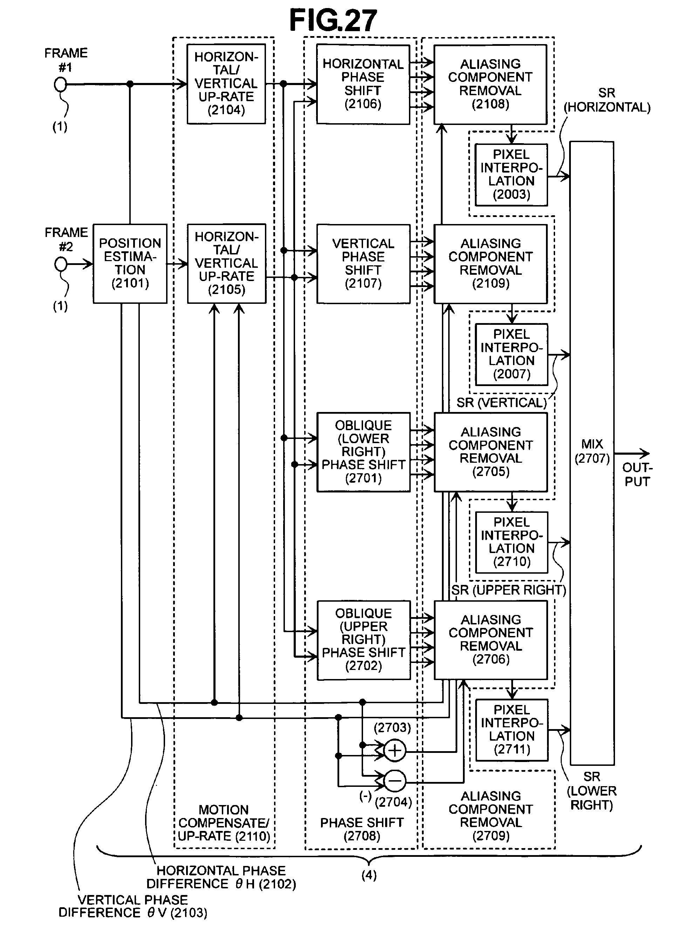

Fig. 27 is a view for explaining the tenth embodiment 9, according to the present invention;

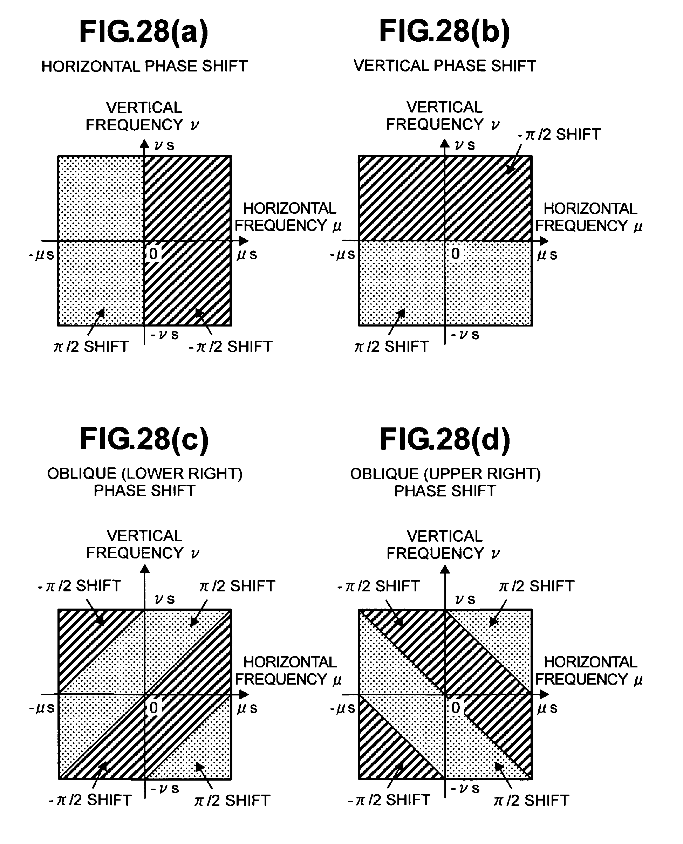

Figs. 28(a) to 28(b) are views for explaining the embodiment 9, according to the present invention;

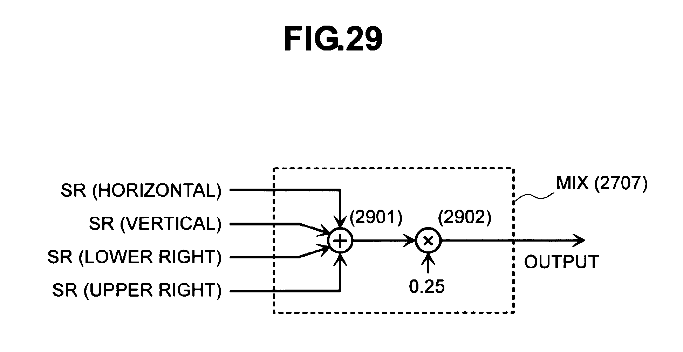

Fig. 29 is a view for explaining the embodiment 9, according to the present invention;

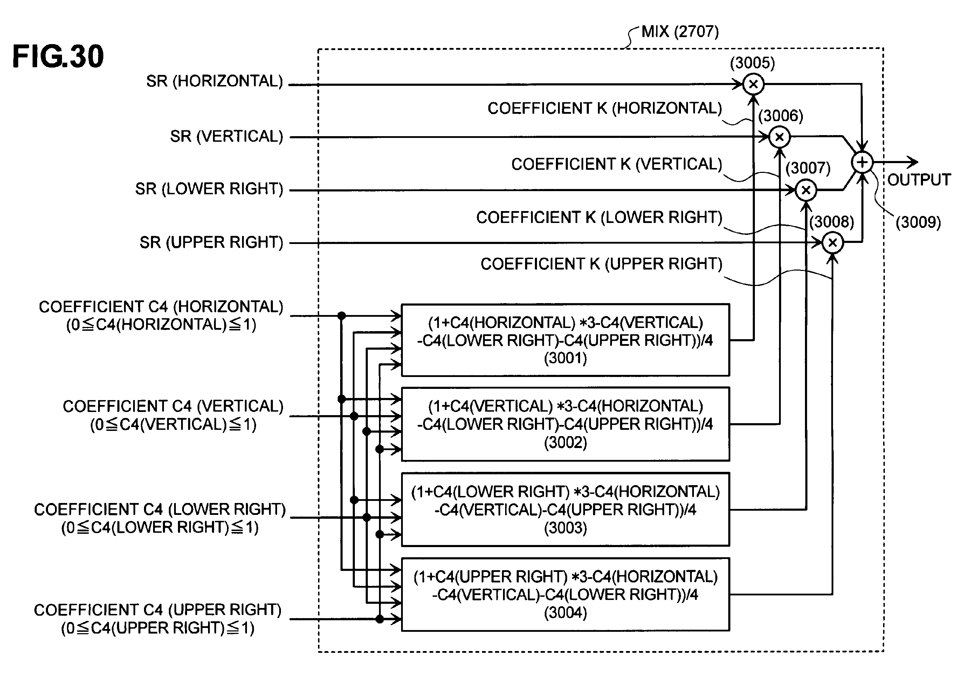

Fig. 30 is a view for explaining the embodiment 9, according to the present invention;

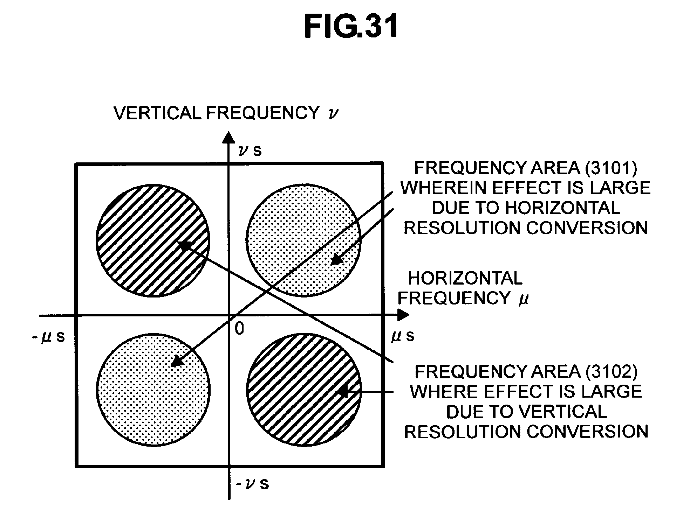

Fig. 31 is a view for explaining the embodiment 9, according to the present invention;

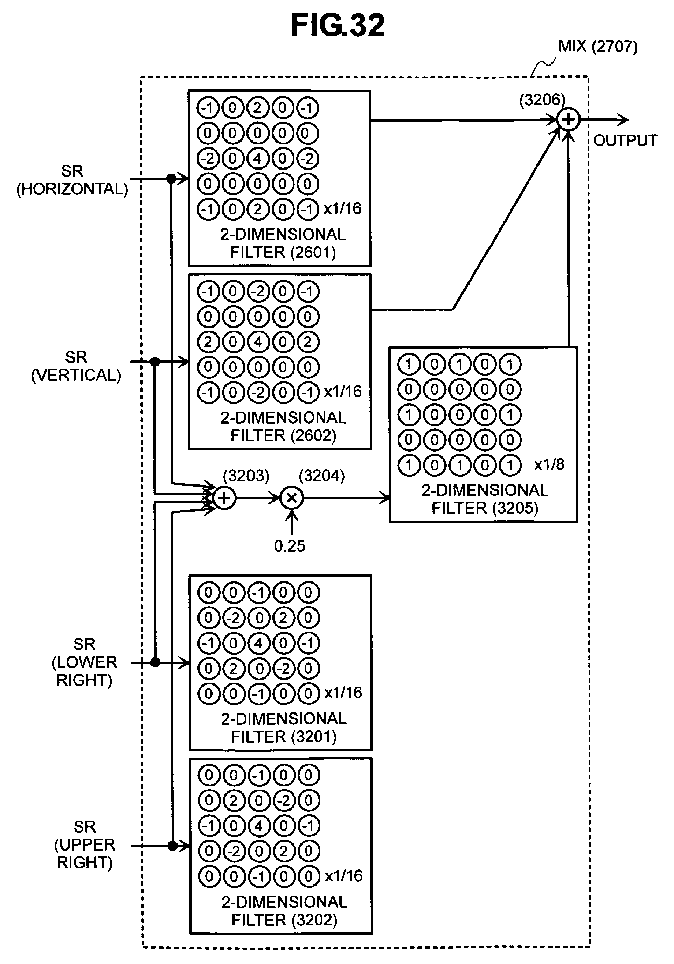

Fig. 32 is a view for explaining the embodiment 9, according to the present invention;

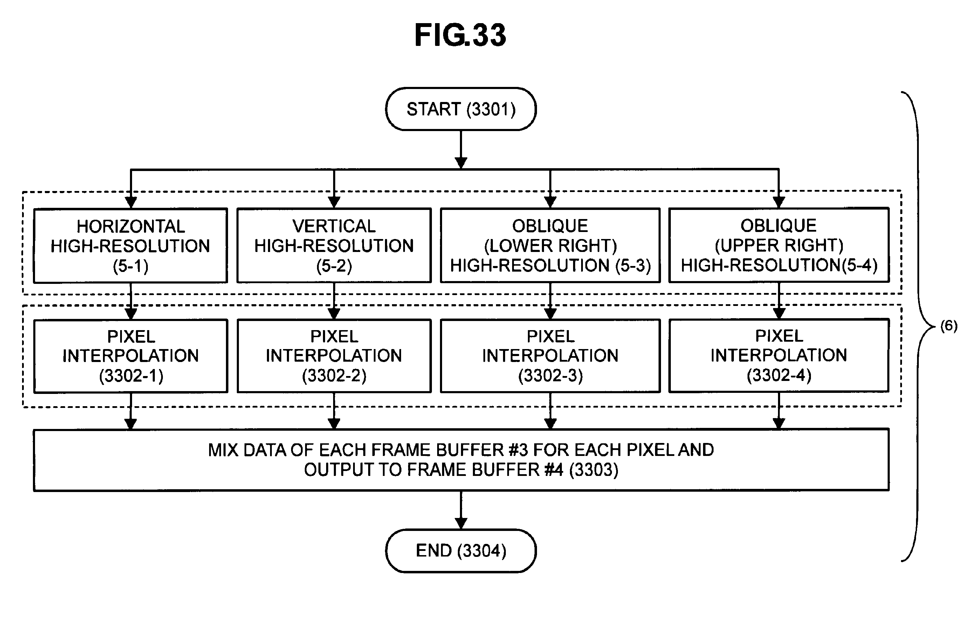

Fig. 33 is a view for explaining an embodiment 10, according to the present invention;

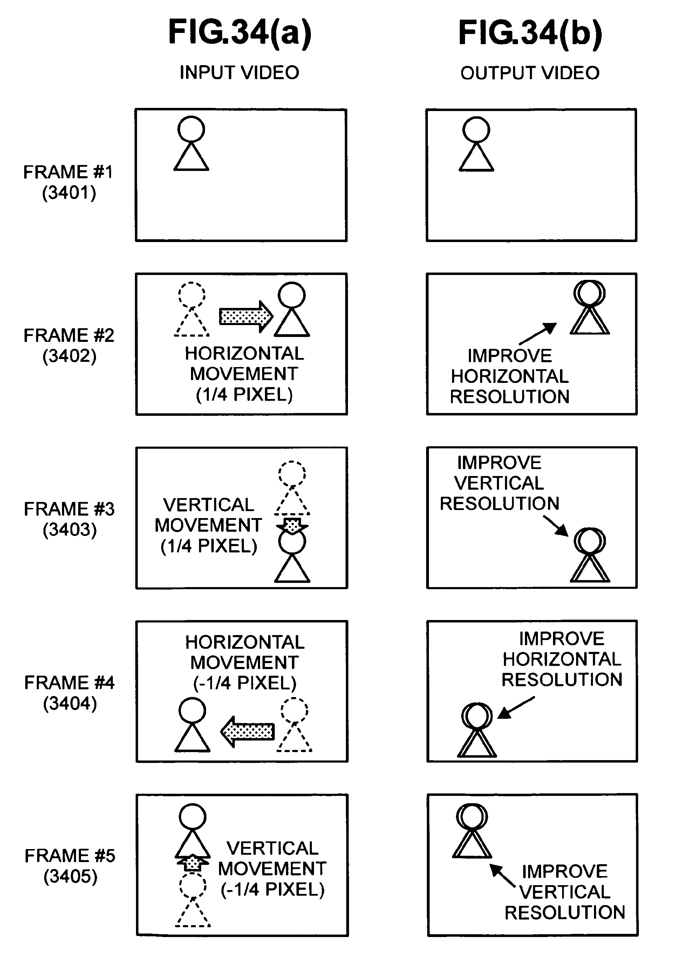

Figs. 34(a) and 34(b) are views for explaining difference in the operations, between one embodiment of the present invention and the prior arts;

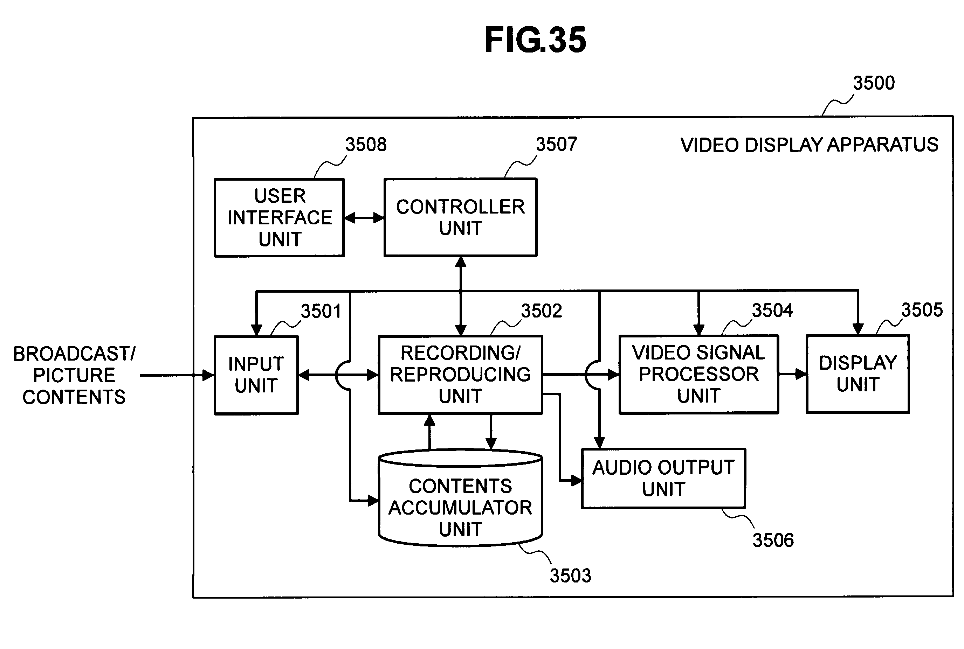

Fig. 35 is a view for explaining an embodiment 13, according to the present invention;

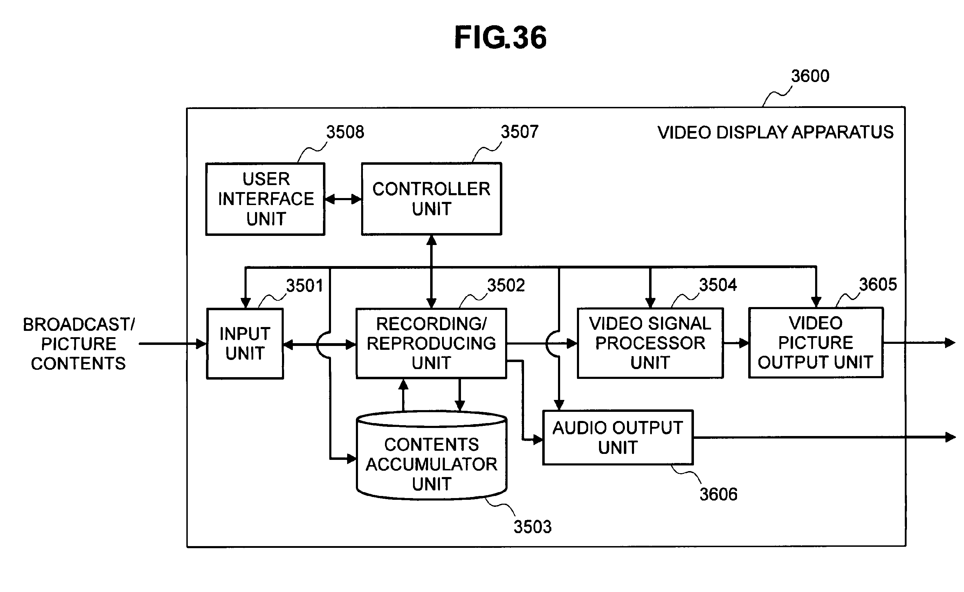

Fig. 36 is a view for explaining an embodiment 17, according to the present invention;

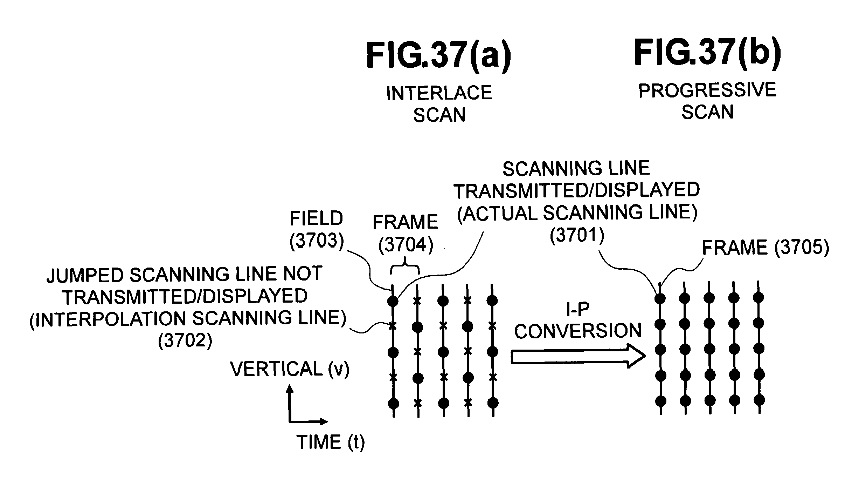

Fig. 37 is a view for explaining the prior art;

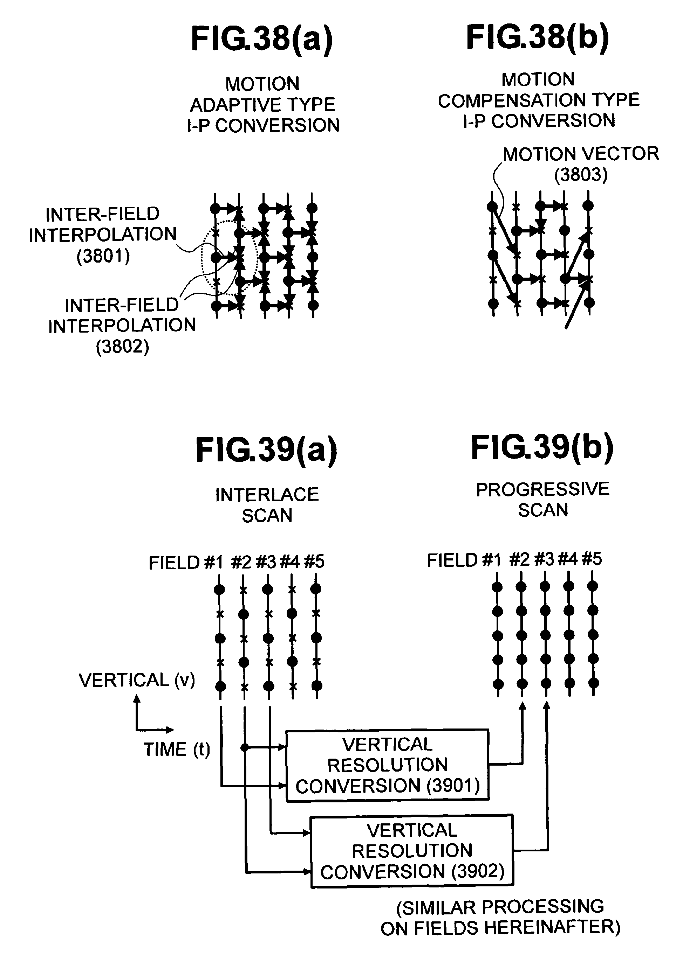

Figs. 38(a) and 38(b) are view for explaining the prior art;
Fig. 39 is a view for explaining an embodiment 21, according to the present invention;

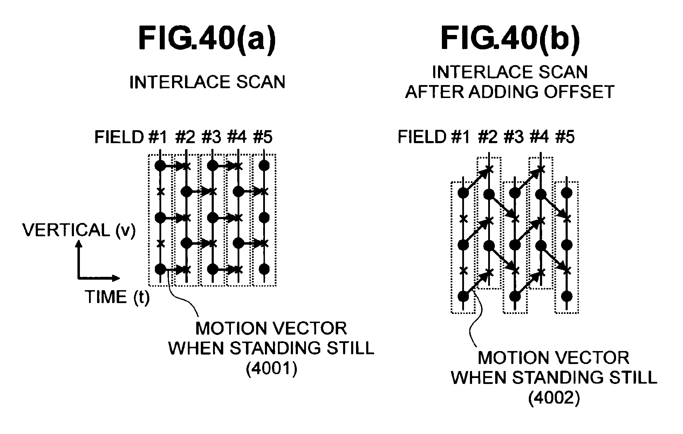

Figs. 40(a) and 40(b) are views for explaining an embodiment 21, according to the present invention;

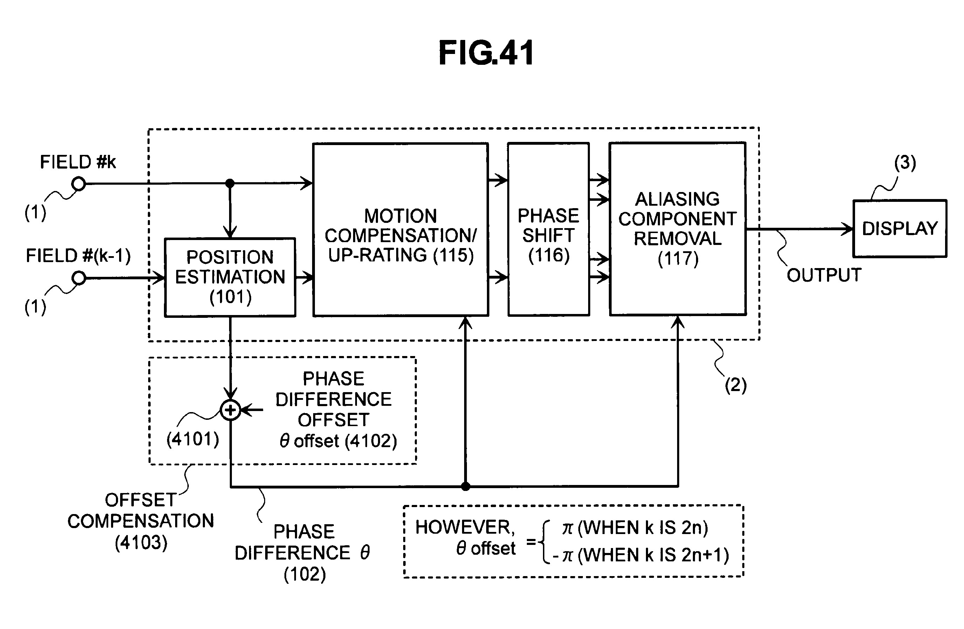

Fig. 41 is a view for explaining the embodiment 21, according to the present invention;

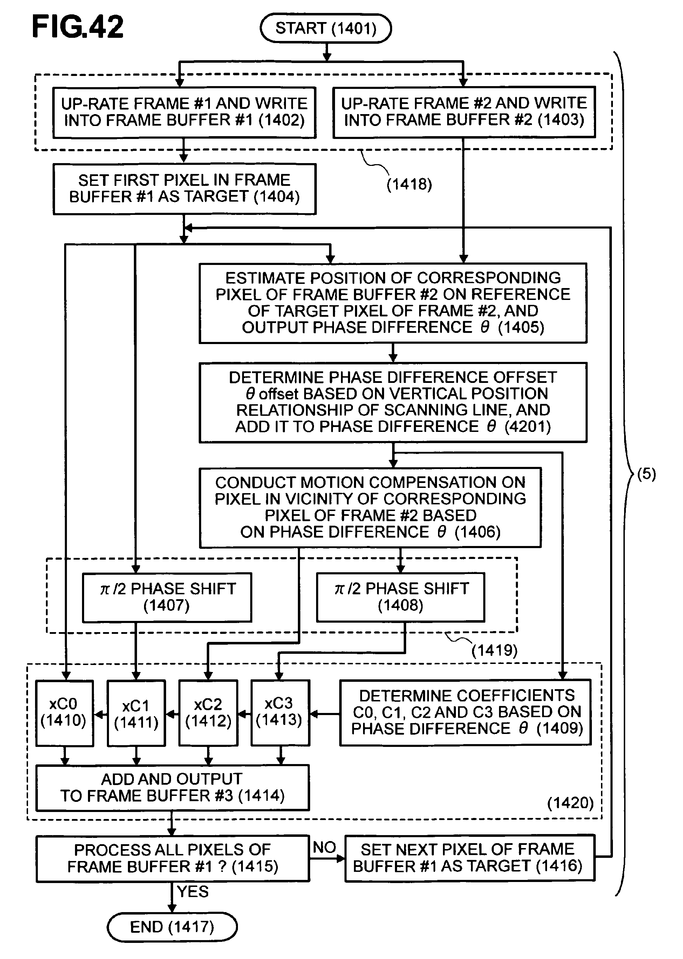

Fig. 42 is a view for explaining an embodiment 22, according to the present invention;

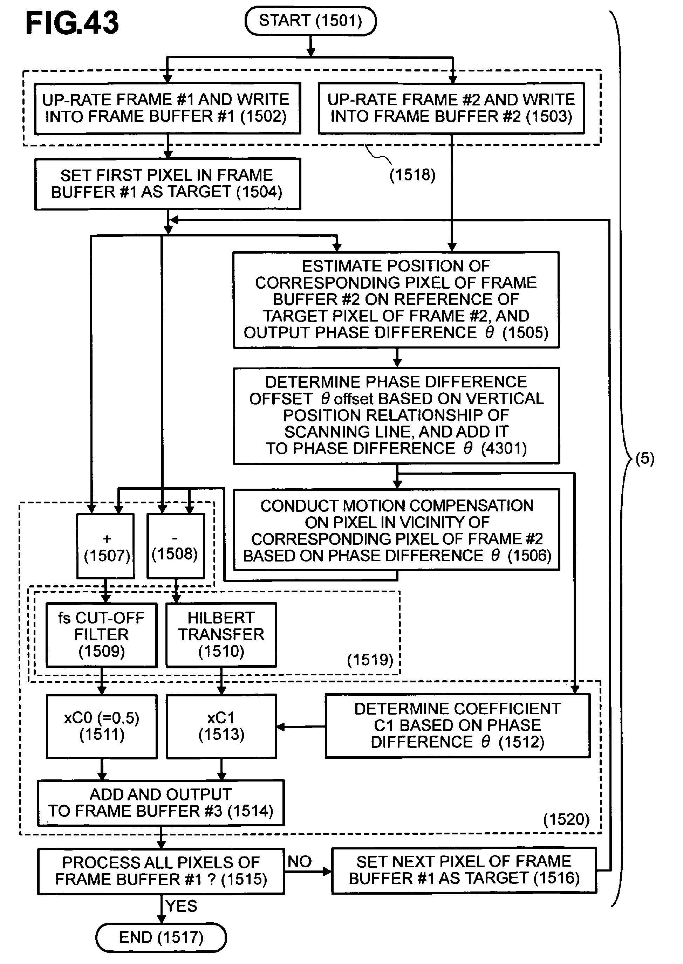

Fig. 43 is a view for explaining an embodiment 24, according to the present invention;

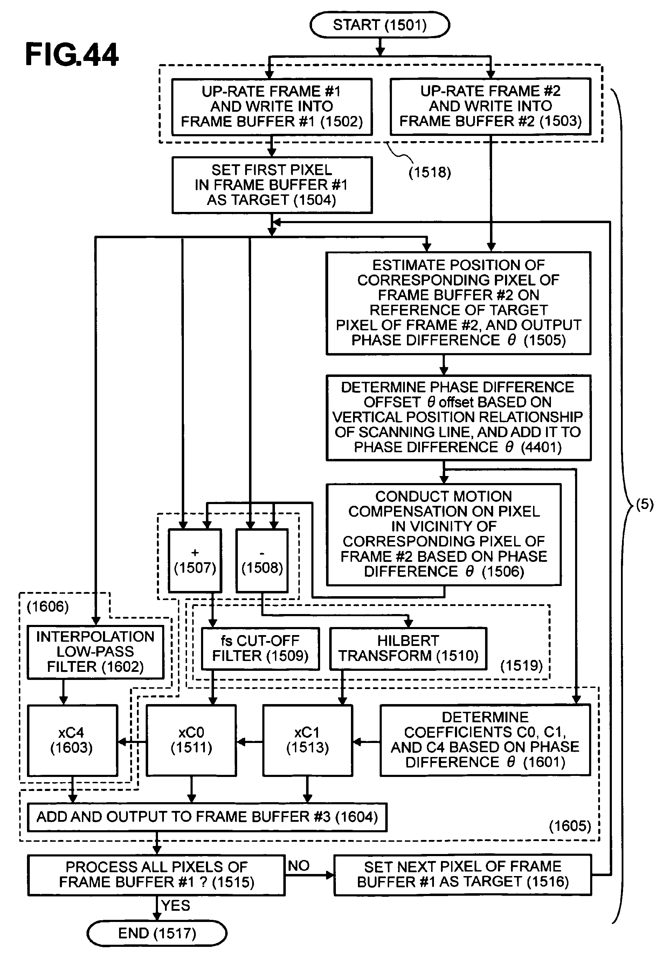

Fig. 44 is a view for explaining an embodiment 26, according to the present invention;

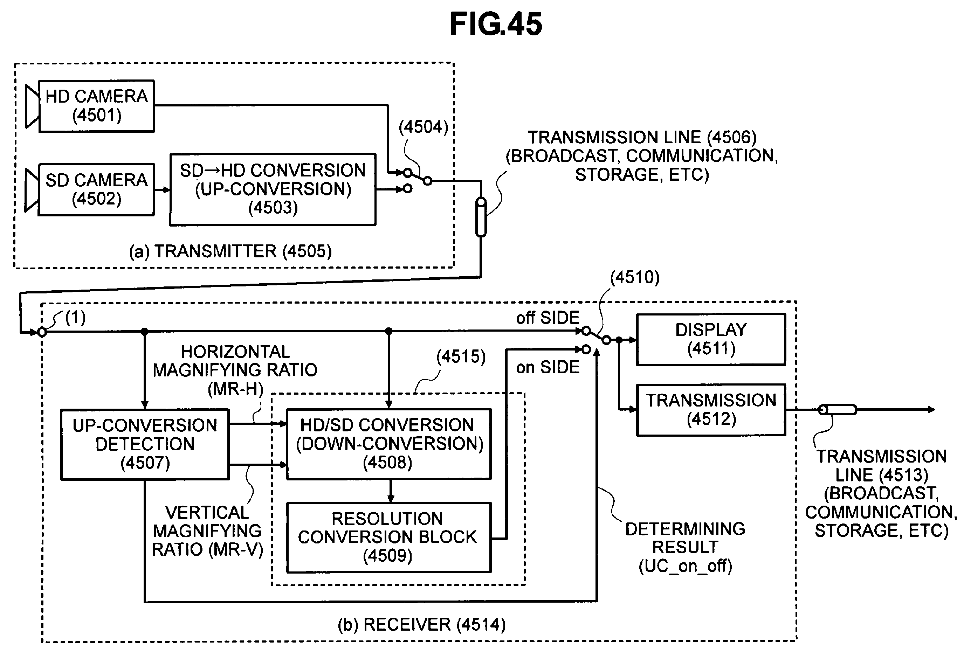

Fig. 45 is a view for explaining an embodiment 29, according to the present invention;

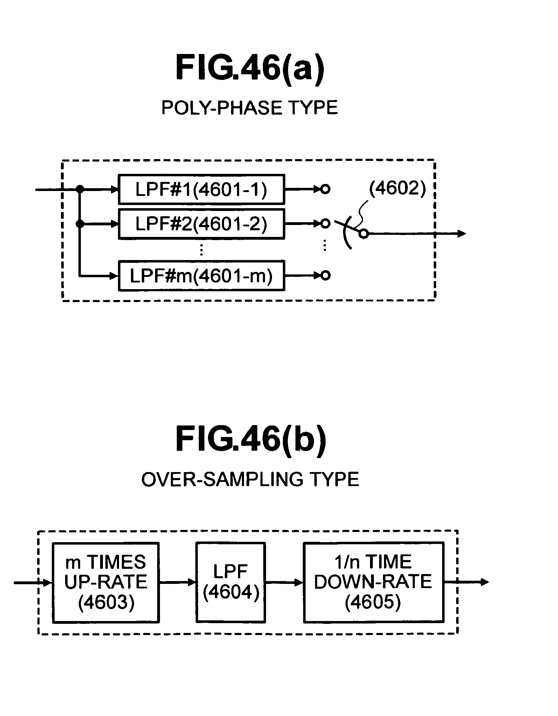

Fig. 46 is a view for explaining the prior art;

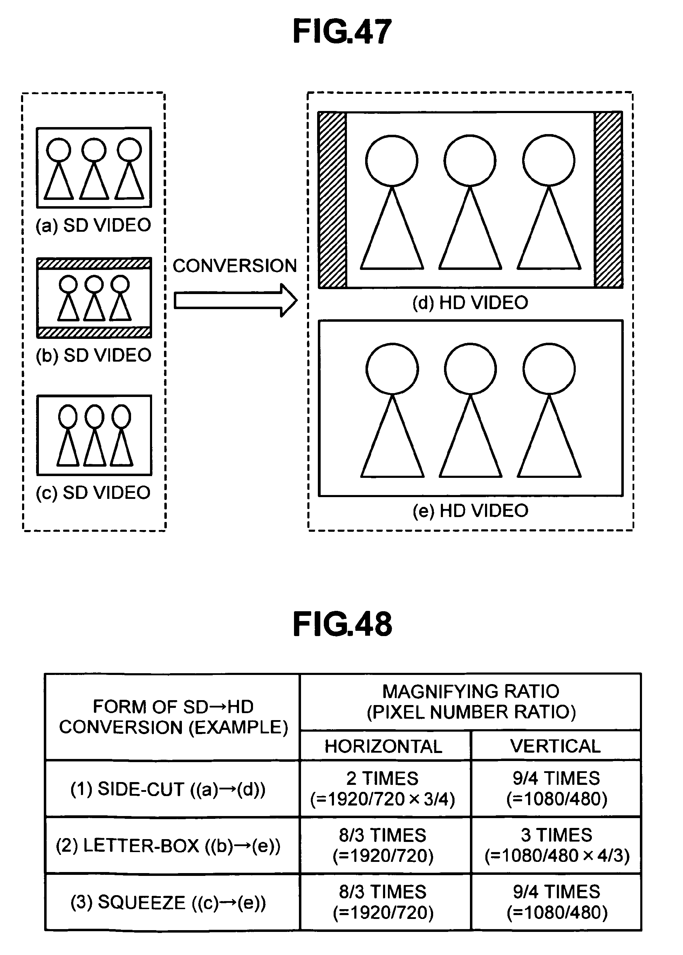

Fig. 47 is views for explaining the prior art;
Fig. 48 is a view for explaining the prior art;

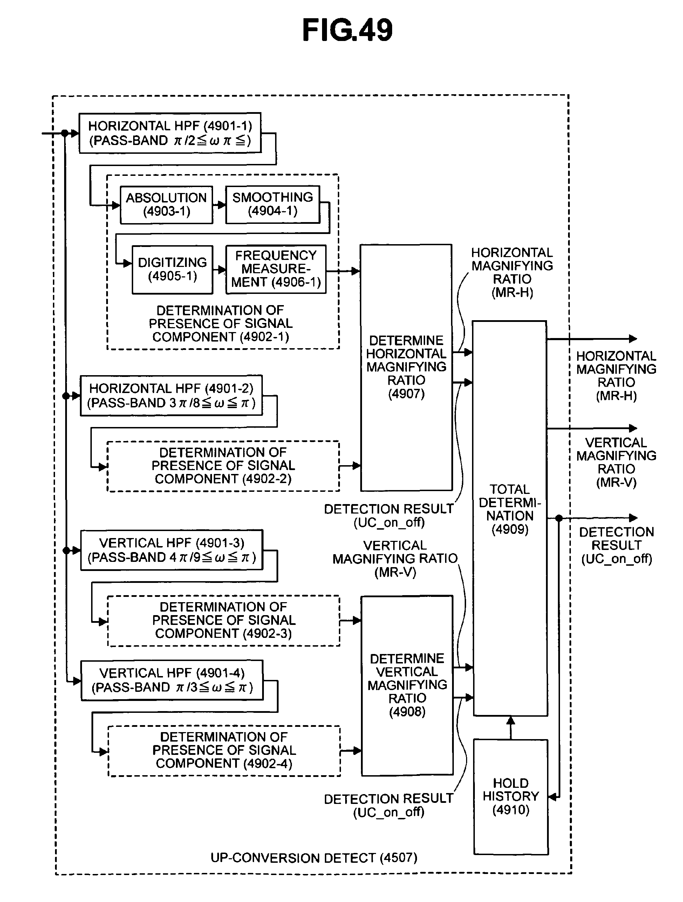

Fig. 49 is a view for explaining the embodiment 29, according to the present invention;

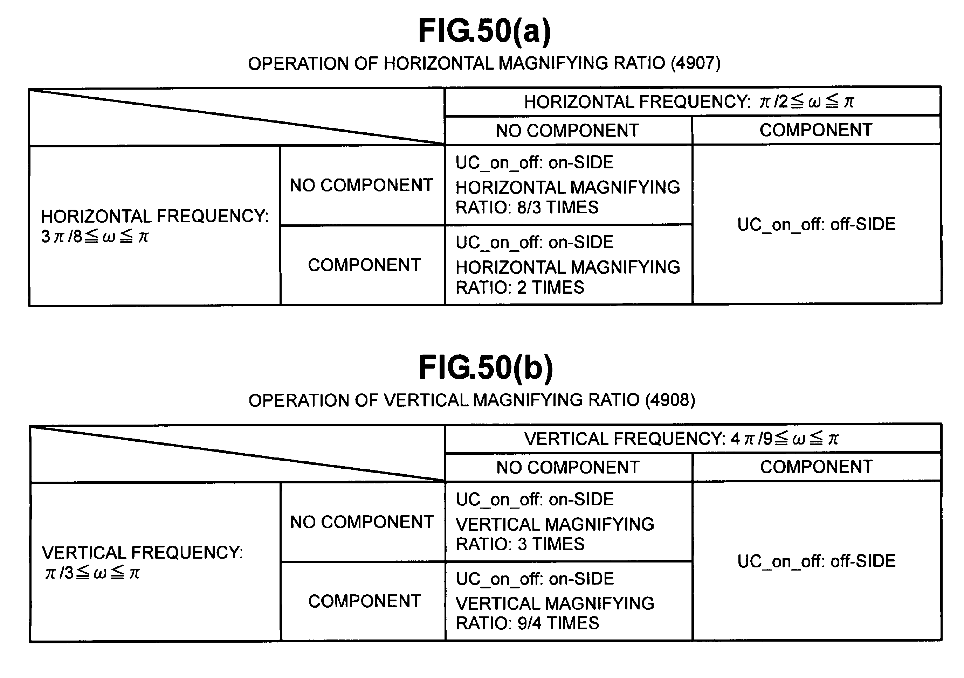

Figs. 50(a) and 50(b) are views for explaining the embodiment 29 through an embodiment 31, according to the present invention;

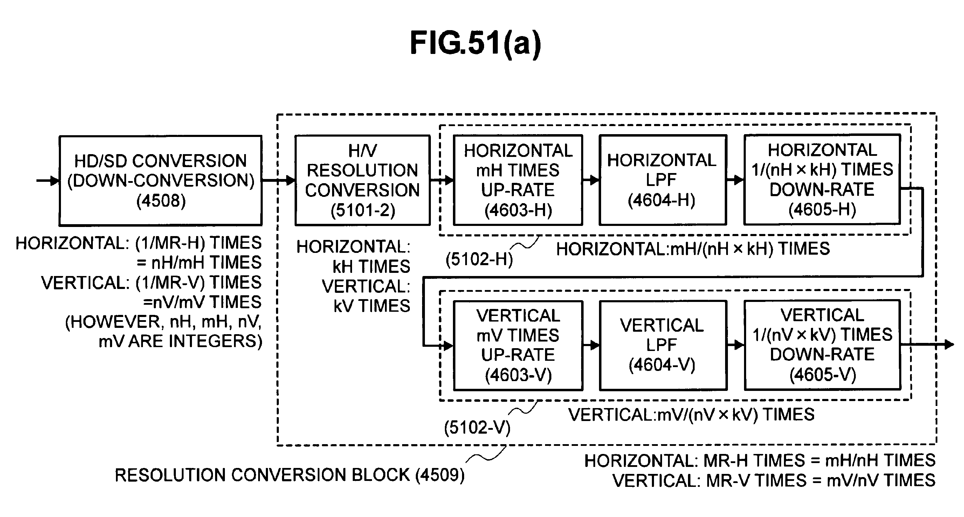

Figs. 51(a) to 51(c) are views for explaining the embodiment 29, according to the present invention;

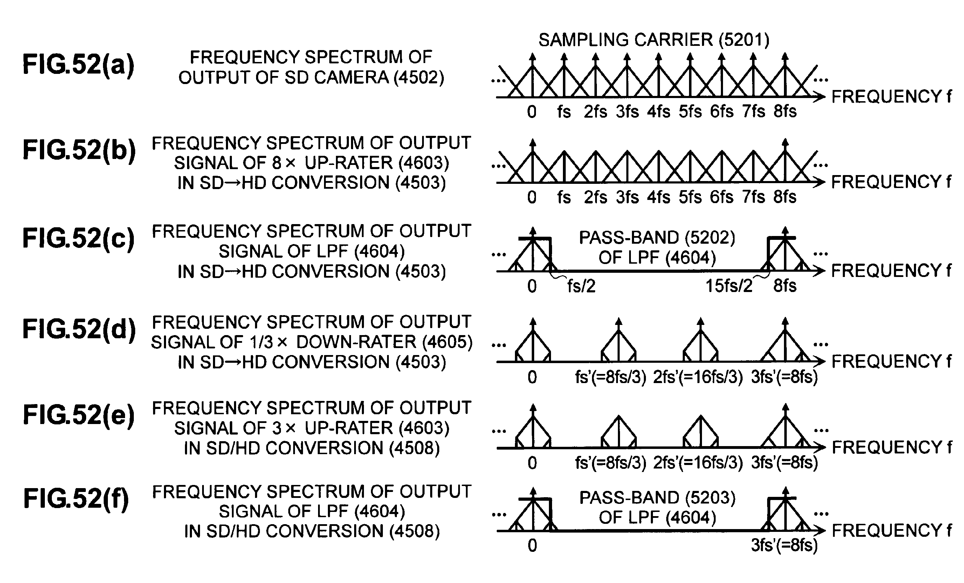

Figs. 52(a) to 52(k) are views for explaining the embodiment 29, according to the present invention;

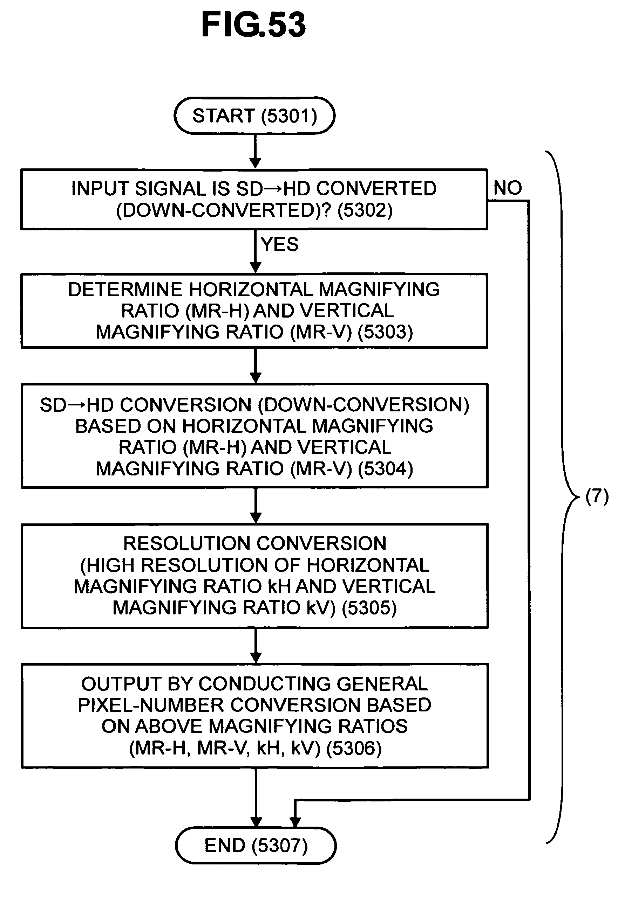

Fig. 53 is a view for explaining the embodiment 29, according to the present invention;

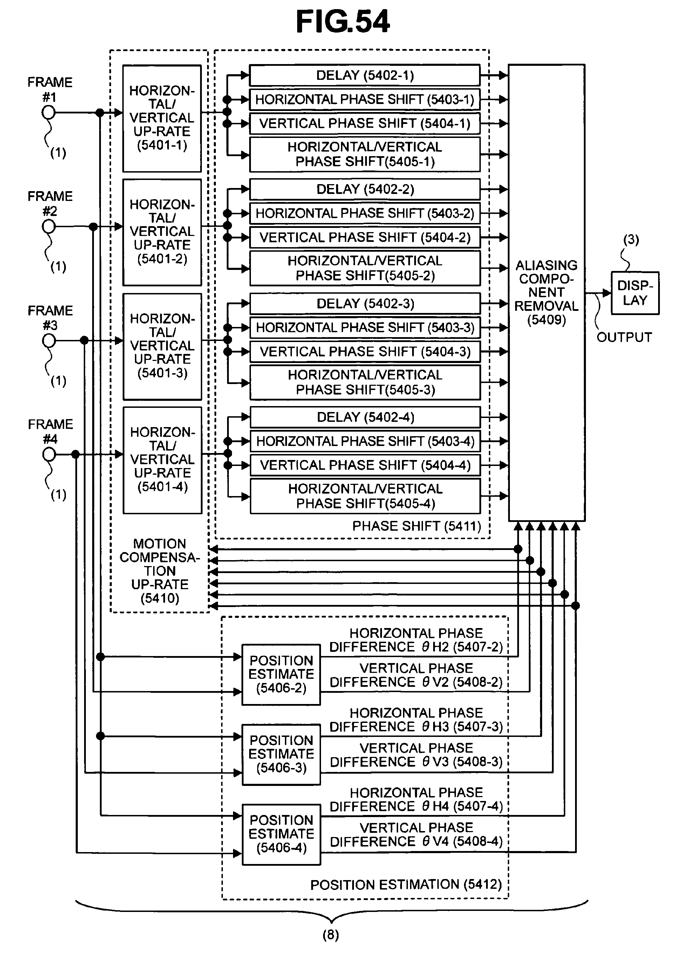

Fig. 54 is a view for explaining an eleventh (11^{th}) embodiment, according to the present invention;

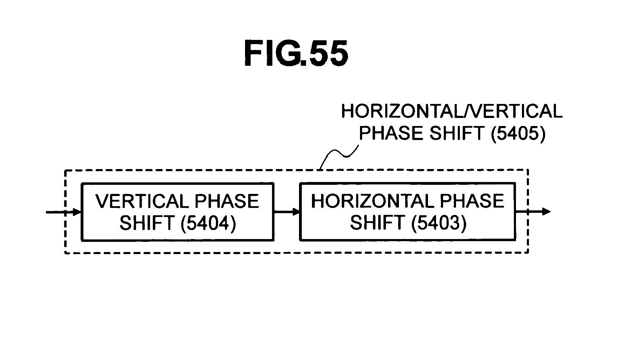

Fig. 55 is a view for explaining the eleventh (11^{th}) embodiment, according to the present invention;

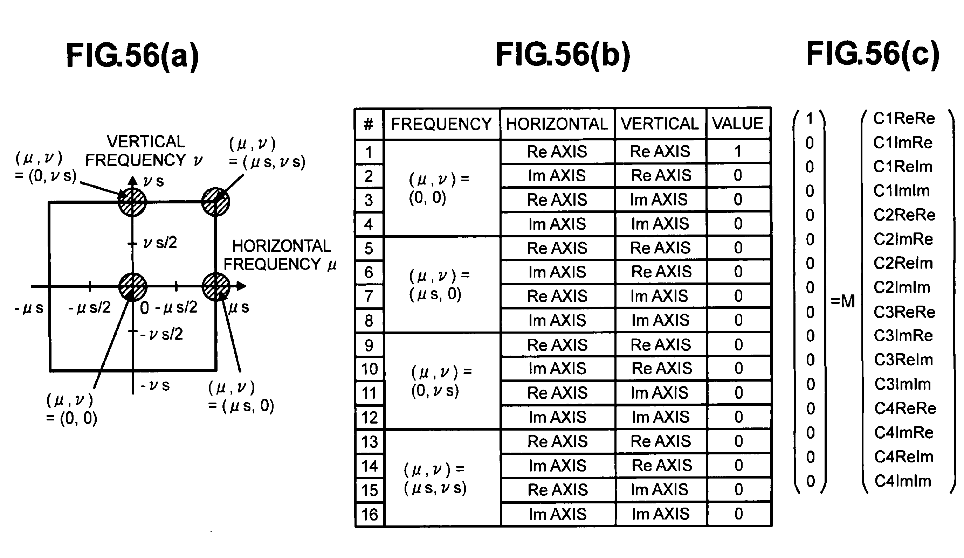

Figs. 56(a) to 56(i) are views for explaining the eleventh (11^{th}) embodiment, according to the present invention;

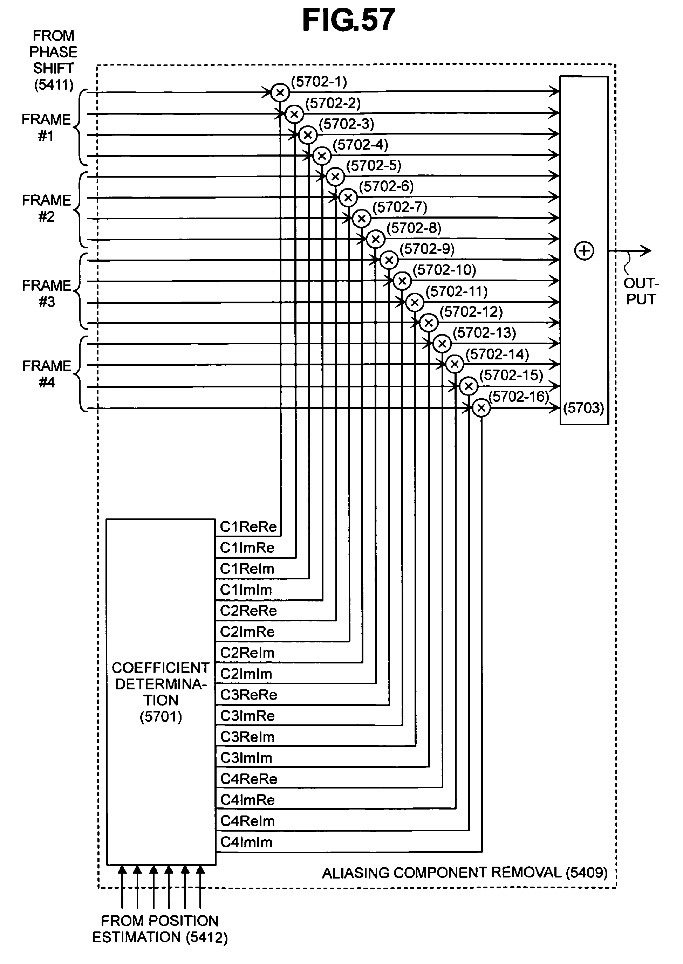

Fig. 57 is a view for explaining the eleventh (11^{th}) embodiment, according to the present invention;

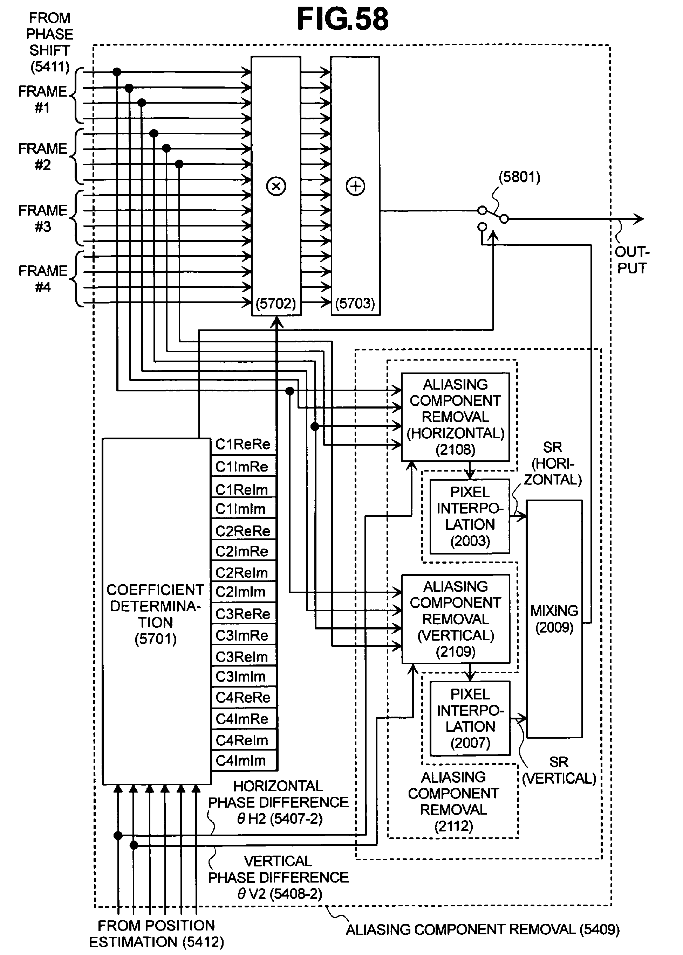

Fig. 58 is a view for explaining the eleventh (11^{th}) embodiment, according to the present invention;

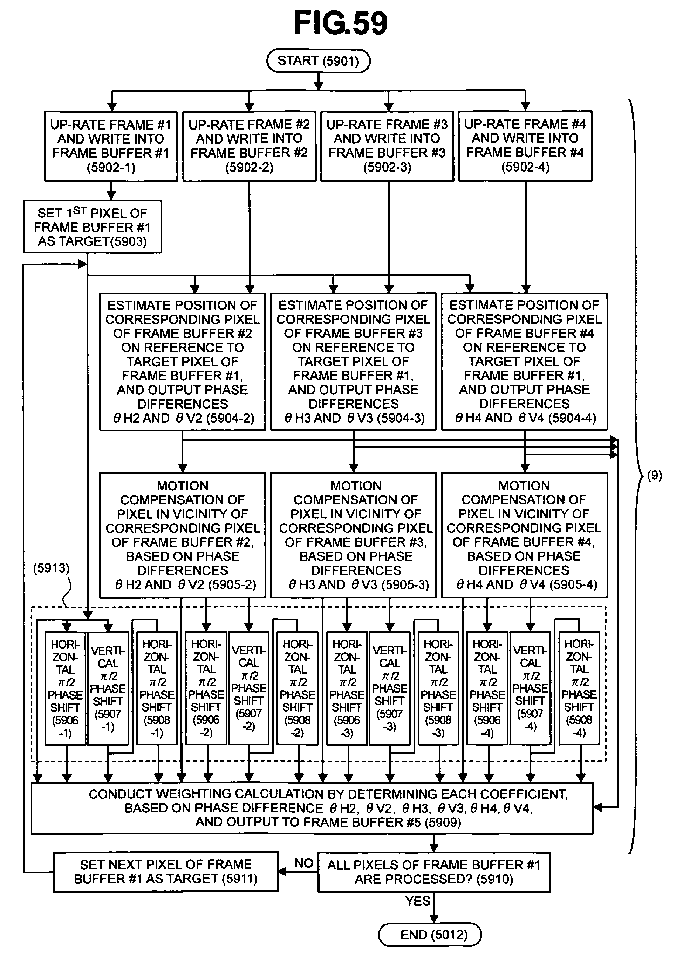

Fig. 59 is a view for explaining a twelfth (12^{th}) embodiment, according to the present invention; and

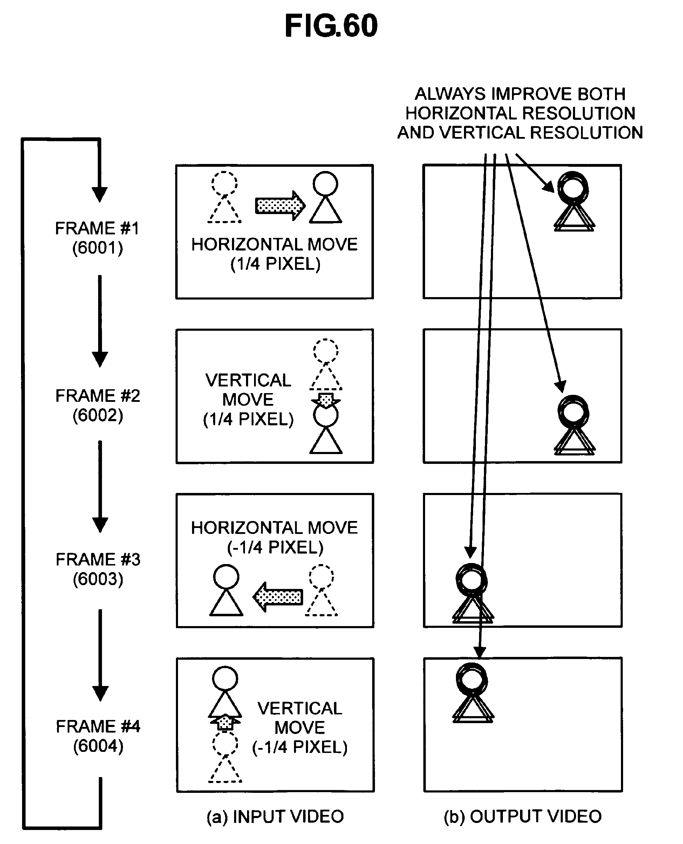

Fig. 60 is a view for explaining difference in the operations, between one embodiment of the present invention and the prior arts.

### DETAILED DESCRIPTION OF THE PREFERRED EMBODIMENTS

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims.

Hereinafter, embodiments according to the present invention will be fully explained by referring to the attached drawings.

Also, in every one of drawings attached herewith, it is assumed that a constituent element attached wit the same reference numeral has the same function thereto.

Also, the expression "phase" in each description and drawing of the present specification includes a meaning of "position" on 2-dimensional image or picture, when being used in an explanation relating to 2-dimensional image space. That position means a position having an accuracy of a small number of poxes.

And, the expression "up-rate" in each description and drawing of the present specification includes also a meaning "up-rating process" therein. Also, the expression "up-convert" in each description and drawing of the present specification includes a meaning "up-converting process" therein. Both of those mean a conversion process for enlarging the number of pixels of the video (e.g., a pixel number increasing process) or a conversion process for enlarging the video (e.g., an image enlarging conversion process).

Also, the expression "down-rate" in each description and drawing of the present specification includes a meaning "down-rating process" therein. And, the expression "down-convert" in each description and drawing of the present specification includes a meaning "down-converting process" therein. Both of those mean a conversion process for reducing or decreasing the number of pixels of the video (e.g., a pixel number decreasing process) or a conversion process for reducing the video (e.g., an image reducing conversion process).

Also, the expression "motion compensation" in each description and drawing of the present specification includes a meaning of conducting alignment by calculating out a difference between special positions, i.e., phase difference or sampling difference.

In the description of each embodiment, which will be given below, for the (1) position estimationmentioned above, it is enough to apply such a method as described in either one of the following Reference Documents 1 and 2. Also, for the (2) broadband interpolation mentioned above, it is enough to apply a general low pass filter having a passing band doubled (2 times) to Nyquist frequency, as is described in the Non-Patent Document 1 mentioned above.
[Reference Document 1] Shigeru ANDO "A Velocity Vector Field Measurement System Based on Spatio-Temporal Image Derivative", Papers of Measurement Automatic Control Academic Society, pp.1300-1336, Vol.22, No.12, 1986; and
[Reference Document 2] Hiroyuki KOBAYASHI et al. "Calculation Method of a Phase-Only Correction Function for Images Based on Discrete Cosine Transform", IEICE Technical Report ITS2005-299(2006-02), pp.73-78.

Also, the description "SR signal" in the following embodiments is an abbreviation of "Super Resolution signal".

Hereinafter, explanation will be made on the embodiments according to the present invention, by referring to the drawings attached herewith.

### <Embodiment 1>

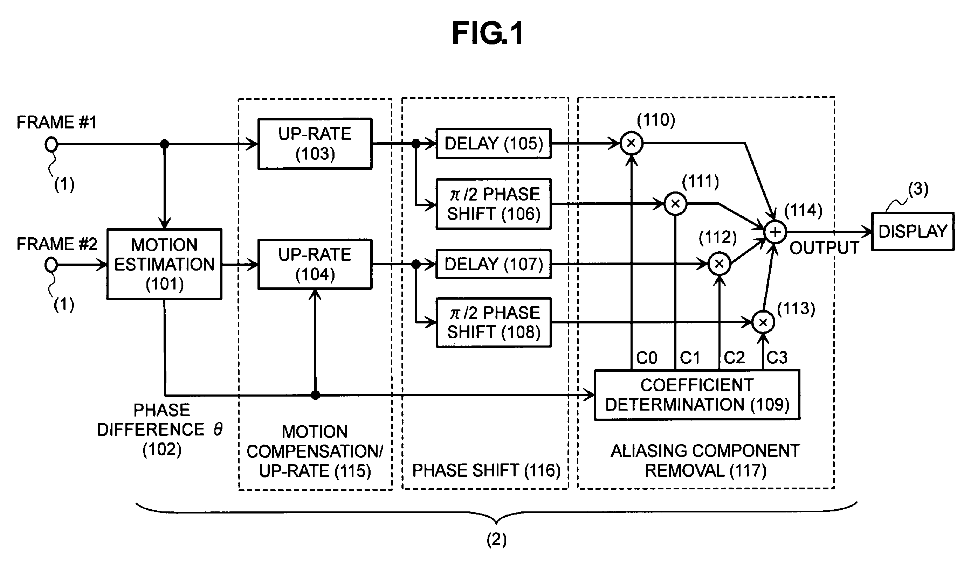

Fig. 1 shows an embodiment 1 of the video signal processing apparatus, according to the present invention, and the distinctive features thereof will be mentioned. The video signal processing apparatus, according to the present embodiment, will be applied into a video displaying apparatus, such as, a television receiver, etc., for example. In the present embodiment mentioned below, explanation will be made on the example of the video displaying apparatus, as the video signal processing apparatus.

In Fig. 1, the video signal processing apparatus, according to the present embodiment, comprises an input portion (1), into which are inputted a frame line of moving pictures, such as, a television broadcast signal or the like, for example, a resolution converter portion (2) for obtaining high resolution of frames, which are inputted from that input portion, and further a display portion for displaying a picture upon basis of the frames, which are high resolved within that resolution converter portion (2). As this display portion (3) is applied a plasma display panel, a liquid crystal panel or an electron/electrolysis discharge type display panel. Hereinafter, detailed explanation will be made on the resolution converter portion (2).

In Fig. 1, first of all, by means of a position estimation portion (101), upon basis of a sampling phase (sampling position) of pixel of a processing target on a frame #1 inputted into the input portion (1), estimation is made on a position of pixel corresponding on a frame #2, and thereby obtaining the sampling phase difference θ (102) thereof for each pixel.

Next, by means of up-raters (103) and (104) of a motion compensation/up-rate portion (115), motion compensation is made upon the frame #2 with using information of the phase difference θ (102), so as to fit to the frame #1 in the position, as well as, increase the pixel numbers of the frames #1 and #2 up to two (2) times higher, respectively; thereby obtaining high density. In a phase-shift portion (116), the phase of this data high-densified is shifted by only a predetermined amount. Herein, as a means for shifting the phase of data by the predetermined amount, it is possible to use π/2 phase shifters (106) and (108) . Also, for the purpose of compensation of delay, which is caused within those π/2 phase shifters (106) and (108), signals of the frames #1 and #2, which are high-densified, are delayed by means of delay devices (105) and (107).

In an aliasing component removal portion (117), each of output signals of the delay devices (105) and (107) and Hilbert Transformers (106) and (108) is multiplied by an coefficient C0, C2, C1 or C3, which is produced upon basis of the phase difference θ (102) in a coefficient determining portion (109), respectively, within a multiplier (110), (112), (111) or (113), and then those signals are added within an adder (114) ; thereby obtaining an output. This output is supplied to the display portion 3. Further, the position estimation portion (101) can be achieved with using the prior art mentioned above, as it is. Details of the up-raters (103) and (104), the π/2 phase shifters (106) and (108), and the aliasing component removal portion (117) will be mentioned later.

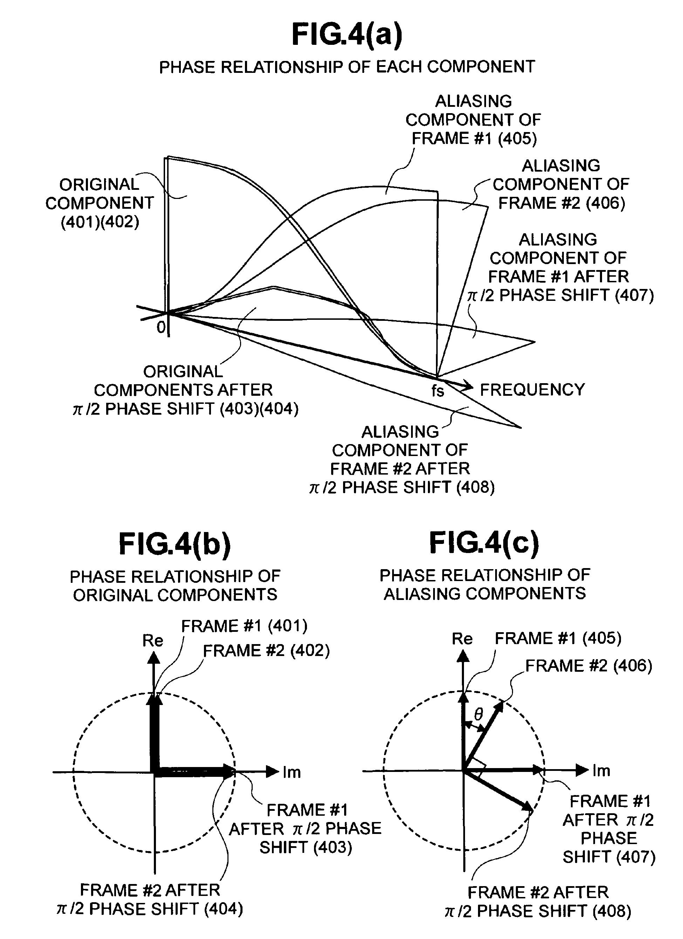

Figs. 4(a) to 4(c) shows operations of the embodiment 1 of the present invention. Those figures show the respective outputs of the delay devices (105) and (107) and the π/2 phase shifters (106) and (108), which are shown in Fig. 1, within one-dimensional frequency region thereof. In Fig. 4(a), each of the signals of frames #1 and #2 comes to be that obtained by adding an original component (401) or (402) and aliasing component (405) or (406), each of which is aliased from the original sampling frequency (fs) . In this instance, the aliasing component (406) is rotated by the phase difference θ (102) mentioned above.

On the other hand, each of the signals of frames #1 and #2, after the up-rating, which are outputted from the π/2 phase shifters (106) and (108), comes to be that obtained by adding the original component (403) or (404) after the π/2 phase shifting and the aliasing component (407) or (408), after the π/2 phase shifting. Figs. 4 (b) and 4 (c) show the original components and the aliasing components, respectively, extracting them, for the purpose of easy understanding of phase relationships for each of the components shown in Fig. 4(a).

Herein, if taking a weighted sum while determining the coefficients to be multiplied with each of the components, so that the component on Re axis be 1 and the component on Im axis be 0, when taking a vector sum of the four (4) components shown in Fig. 4(b), and also both components on the Re axis and the Im axis be 0 when taking a vector sum of the four (4) components shown in Fig. 4(c), then it is possible to extract only the original component with canceling the aliasing component therefrom. Thus, a video signal processing apparatus can be obtained for achieving the high resolution 2 times in the one-dimensional direction, with using only two (2) pieces of frame pictures. Details of the method for determining the coefficients will be mentioned later.

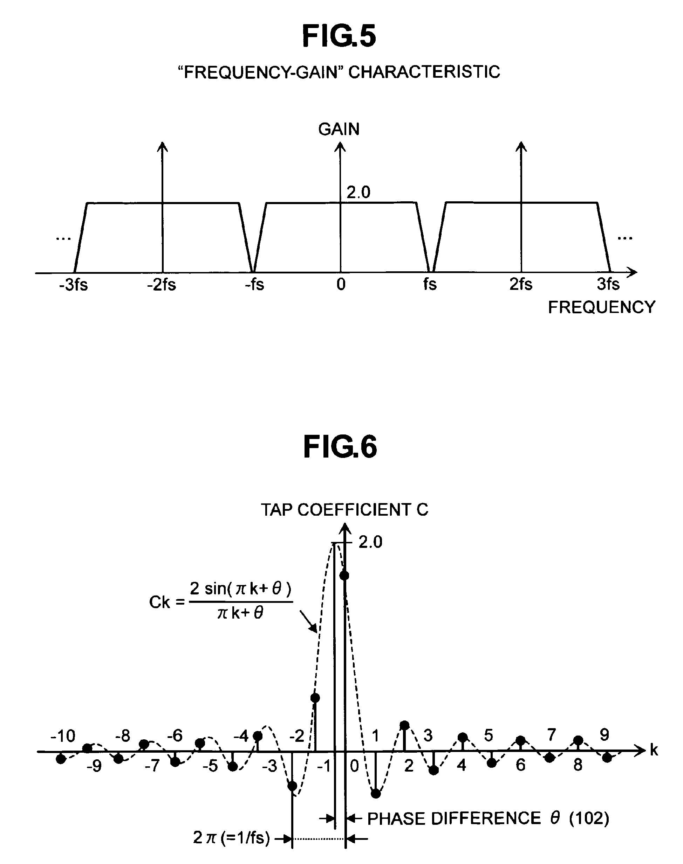

Fig. 5 shows the operations of the up-raters (103) and (104) to be applied within the embodiment 1, according to the present invention. In this Fig. 5, the horizontal axis shows the frequency and the vertical axis the gain (i.e., a value of ratio on an amplitude of the output signal to that of the input signal), i.e., the "frequency-gain" characteristics of the up-raters (103) and (104) . Herein, within the up-raters (103) and (104), the high densification can be achieved by inserting a sampling point (=zero point) for a new pixel, at just middle position of the distance between the original pixels, while applying the frequency being two (2) times high (2fs) with respect to the sampling frequency (fs) of the original signal as a new sampling frequency, and also applying such a filter having bandwidth for passing through all the frequencies from -fs to +fs at gain 2.0. In this instance, as is shown in the Fig. 5, a characteristic can be obtained, repeating at every frequency of nx2fs (n: an integer), due to the symmetry of the digital signal.

Fig. 6 shows the details of the up-raters (103) and (104) to be applied in the embodiment 1 of the present invention. This Fig. 6 shows tap coefficients of the filter, which can be obtained through the Fourier transformation of the frequency characteristics shown in Fig. 5. In this instance, each the tap coefficient Ck (however, k is an integer) is a sinc function, which is well-known in general, and it comes to be Ck=2sin (πk-θ) / (πk-θ) by shifting (-θ) for compensating the phase difference θ (102) of sample for each pixel. However, in the up-tater (103), it is enough to make Ck=2sin(πk)/(πk) by putting the phase difference θ (102) into 0. Also, by expressing the phase difference θ (102) by the phase difference of a an integer pixel unit (2π) + the phase difference of a decimal pixel unit, it is possible to achieve the compensation upon the phase difference of integer pixel unit through a simple pixel shifting while using filters of the up-raters (106) and (108) mentioned above for compensation upon the phase difference of the decimal pixel unit.

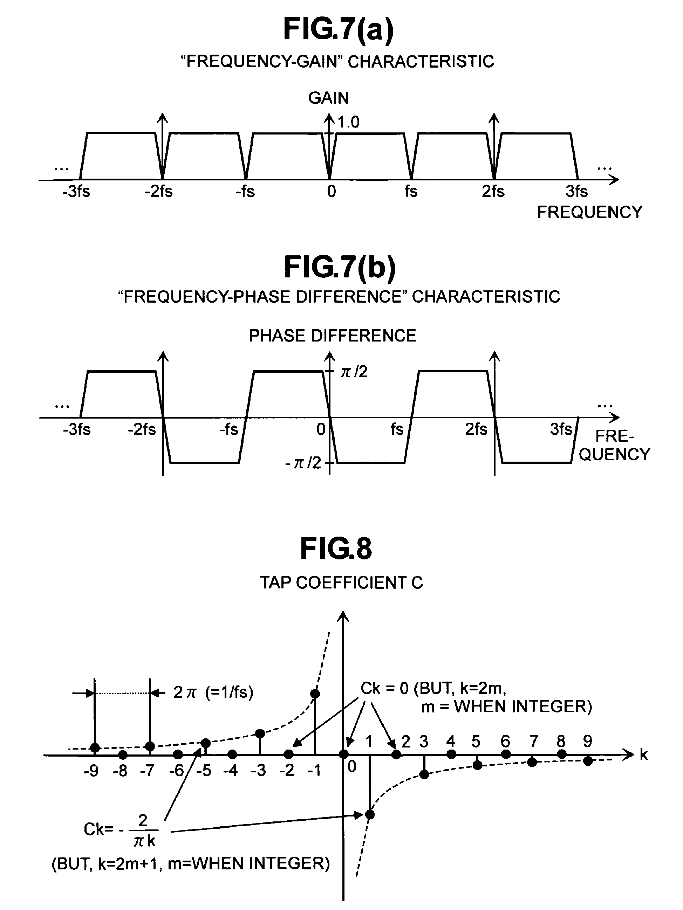

Figs. 7(a) and 7(b) show examples of the operations of the π/2 phase shifters (106) and (108) to be applied in the embodiment 1 of the present invention. As the π/2 phase shifters (106) and (108), it is possible to use the Hilbert Transformers (106) and (108) which are well known in general.

In Fig. 7(a), the horizontal axis shows the frequency while the vertical axis the gain (i.e., a value of ratio on an amplitude of the output signal to that of the input signal), i.e., the "frequency-gain" characteristics of the Hilbert Transformers. Herein, within the Hilbert Transformers, applying the frequency being two (2) times high (2fs) with respect to the sampling frequency (fs) of the original signal as a new sampling frequency, and having a bandwidth at gain 1.0 for all the frequency components, except for 0 between -fs and +fs.

Also, in Fig. 7(b), the horizontal axis shows the frequency while the vertical axis the phase difference (i.e. , the difference in the phase of an output signal with respect to the phase of an input signal), and it represents the "frequency-gain" characteristics of the Hilbert Transformers. Herein, the frequency component between 0 and fs is delayed in the phase by only π/2, while the frequency component between 0 and -fs is advanced in the phase by only π/2. In this instance, as is shown in the figures, a characteristic can be obtained, repeating at every frequency of nx2fs (n: an integer), due to the symmetry of the digital signal.

Fig. 8 shows an example of constructing the π/2 phase shifters (106) and (108), to be applied in the embodiment 1 of the present invention, with the Hilbert Transformers. The same figure shows tap coefficient of a filter, which can be obtained through the Fourier inversion of the frequency characteristics shown in Figs. 7(a) and 7(b). In this instance, it is enough to make each the tap coefficient Ck=0 when k=2m (however, m is an integer), or Ck=-2/(πk) when k=2m+1 .

However, as the π/2 phase shifters (106) and (108), to be applied in the embodiment 1 of the present invention, it is also possible to apply differentiators thereto. In this case, when differentiating general equation cos(ωt+α) by t and multiplying by 1/ω, then d(cos(ω+α))/dt*(1/ω)=-sin(ωt+α)=cos(ωt+α+π/2), i.e., it is possible to achieve the function of π/2 phase shifting. Thus, it is also possible to obtain the π/2 phase shifting function by applying a filter having 1/ω "frequency-amplitude" characteristic after taking the difference between the value of pixel to be target and that of the pixel neighboring thereto.

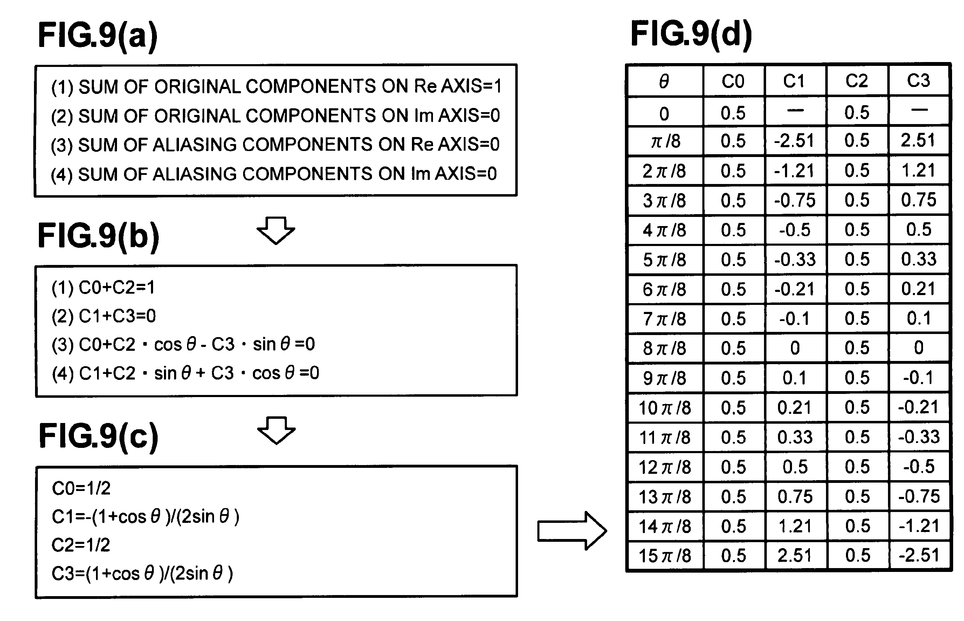

Figs. 9(a) to 9(d) show the operations of the coefficient determining portion (109) to be applied in the first embodiment of the present invention and the details thereof. As is shown in Fig. 9(a), if determining the coefficients to be multiplied with each component in such a manner that the component on the Re axis be 1 while the component on the Im axis 0 when obtaining the vector sum of the four (4) components shown in Fig. 4(b), as well as, both components on the Re axis and the Im axis be 0 when obtaining the vector sum of the four (4) components shown in Fig. 4(c), then it is possible to achieve the video signal processing apparatus enabling to obtain the high resolution of two (2) times in the one-dimensional direction with using only two (2) pieces of the frame pictures.

Herein, as shown in Fig. 1, it is assumed that the coefficient to the output of the delay device (105) (i.e., sum of the original component and the aliasing component of the frame #1 after the up-rating) is C0, the coefficient to the output of the π/2 phase shifter (106) (i.e., sum of results of the π/2 phase shifting on each the original component and the aliasing component of the frame #1 after the up-rating) C1, the coefficient to the output of the delay device (107) (i.e., sum of an original component of the frame #2 after up-rating and the aliasing component) C2, and the coefficient to the output of the Hilbert Transformer (106) (i.e., sum of results of the π/2 phase shifting on each the original component and the aliasing component of the frame #2 after the up-rating) C3, respectively.

In this instance, when making them to satisfy the condition shown in Fig. 9(a), then simultaneous equations can be obtained as shown in Fig. 9(b), from the phase relationships of the respective components shown in Figs. 4(b) and 4(c), and then dissolving those equations can lead the result as shown in Fig. 9(c).

The coefficient determining portion (109), according to the present embodiment, outputs the coefficients C0, C1, C2 and C3, which can satisfy any one of those shown in Figs. 9(a), 9(b) and 9(c).

As an example, the values of the coefficients C0, C1, C2 and C3 are shown in Fig. 9(d), when changing the phase difference θ (102) from 0 to 2π at every π/8. This corresponds to the case when conducting motion estimation upon a signal of the original frame #2 with accuracy of 1/16 pixel, and thereby conducting the motion compensation upon the frame #1. In case where the value of the phase difference θ (102) is less than zero (0), or equal or greater than 2π, it is enough to bring the phase difference θ (102) to be within a region from 0 to 2π, by adding or subtracting a value, which is obtained by multiplying an integer on 2π, to from the value of the phase difference θ (102), with using periodicity of the sin function or the cosine function.

However, the up-raters (103) and (104) and the π/2 phase shifters (106) and (107) necessitate an infinity number of taps for obtaining an ideal characteristics thereof, however there is no problem from a practical viewpoint if simplifying them by cutting the number of taps down to a finite number of taps. In this instance, it is possible to apply a general window function (such as, a hanning window function and a hamming window function, for example) . By bringing the coefficients for each of taps of the simplified Hilbert Transformer into values, being bilaterally symmetric around CO, i.e., C(-k)=-Ck (k: an integer), it is possible to shift the phase by a predetermined amount.

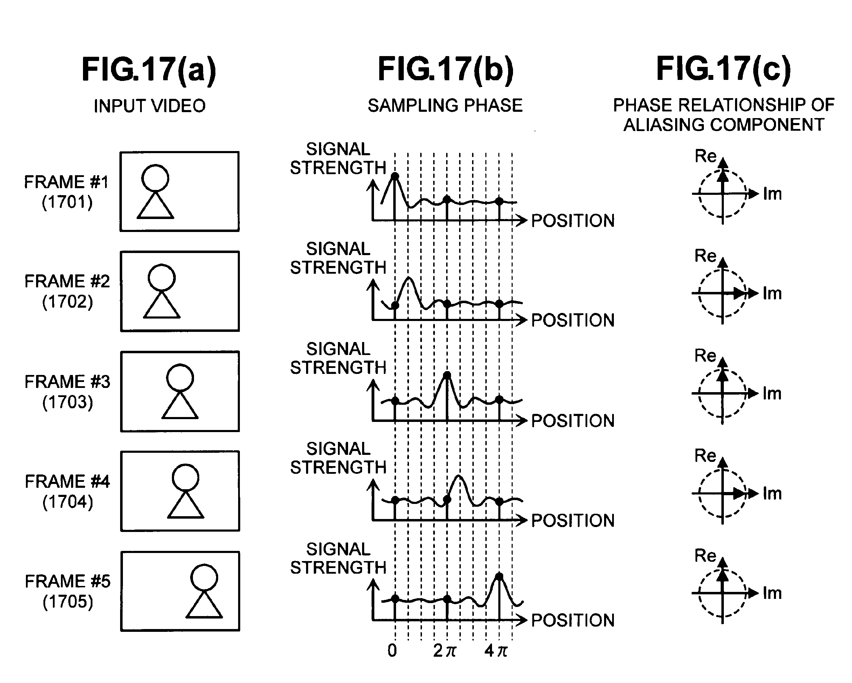

Next, differences will be explained, in particular, in the operations between the present invention and the prior arts mentioned above, by referring to Figs. 17(a) to 17(c). In Fig. 17(a), among frames from a frame #1 (1701) to a frame #5 (1705), input pictures are prepared such that an object to be photographed moves into the right-hand direction. In this instance, as is shown in Fig. 17(b), the object is shifted, intentionally, in such a manner that the position of corresponding pixels shifts by 1/4 pixel (=π/2) between the frame #1 (1701) and the frame #2 (1702), by 1pixel (=2π) between the frame #1 (1701) and the frame #3 (1703), by 5/4 pixel (=5π/2) between the frame #1 (1701) and the frame #4 (1704), and by 2 pixel (=4π) between the frame #1 (1701) and the frame #5 (1705), respectively, judging from the sampling phases of the respective frames. In this instance, the phases of the respective aliasing components can be presented as shown in Fig. 17(c), upon basis of the phase of the aliasing components contained in the signals on the frame #1 (1701). In case when conducting the 2-times high resolution upon this input picture (a), according to the prior art, since the vector sum of the aliasing components cannot be made zero (0) even with using any three (3) pieces of frames within the frames #1 (1701) to #5 (1705), therefore it is impossible to achieve the high resolution. On the other hand, with applying the present embodiment, since the vector sum of the aliasing components can be made zero (0) with two (2) pieces of frames neighboring to each other (for example, the frame #1 (1701) and the frame #2 (1702), it is possible to achieve the high resolution. Thus, with using the input picture shown in Fig. 17(a) as a test patter, it is possible to confirm the operation condition of the present embodiment.

In the explanation given in the above, although it is made by picking up the high resolution in the horizontal direction, but each of the embodiments of the present invention should not be limited to this, i.e. , it is also possible to apply them into, for achieving the high resolution in the vertical direction, or an oblique direction, too.

With the video signal processing apparatus, according to the embodiment 1 mentioned above, two (2) signals are produced from each of the video signals, by conducting the phase sifting upon each video signals of two (2) pieces of input video frames, less than that of the prior arts. With this, it is possible to produce four (4) signals from the video signals of the two (2) pieces of input video frames. Herein, upon basis of the phase difference between those two (2) pieces of the input video frames, coefficients are calculated for each of those four (4) signals, so as to compose them while canceling the aliasing components of those four (4) signals. Thus, for each of the pixels to be produced, a sum is calculated upon the products obtained by multiplying each coefficient on a pixel value of the corresponding pixel, which is owned by each of the four (4) signals mentioned above; thereby producing a new pixel value for the high- resolution video or picture. Conducting this, for each of the pixels of the video or picture to be produced, enables to produce the high-resolution video or picture.

With this, for the video signal processing apparatus according to the embodiment 1, it is possible to produce the high-resolution video or picture from the input video having less aliasing components therein, with using two (2) pieces of the input video frames, less than that of the prior arts.

Also, the video signal processing apparatus according to the embodiment 1, because of using two (2) pieces of the input video frames therein, less than that in the prior arts, then it is possible to reduce an amount or volume of video processing necessary thereto. With this, it is possible to achieve the video signal processing apparatus, for producing the video higher in the resolution than the input video, having less aliasing components therein, but with a cost lower than that of the prior arts.

### <Embodiment 2>

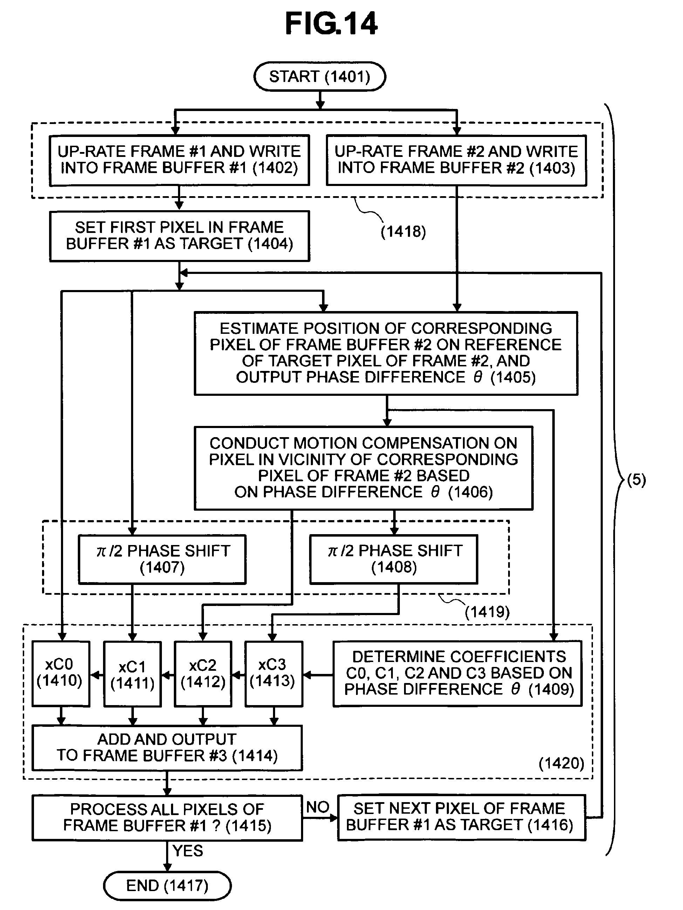

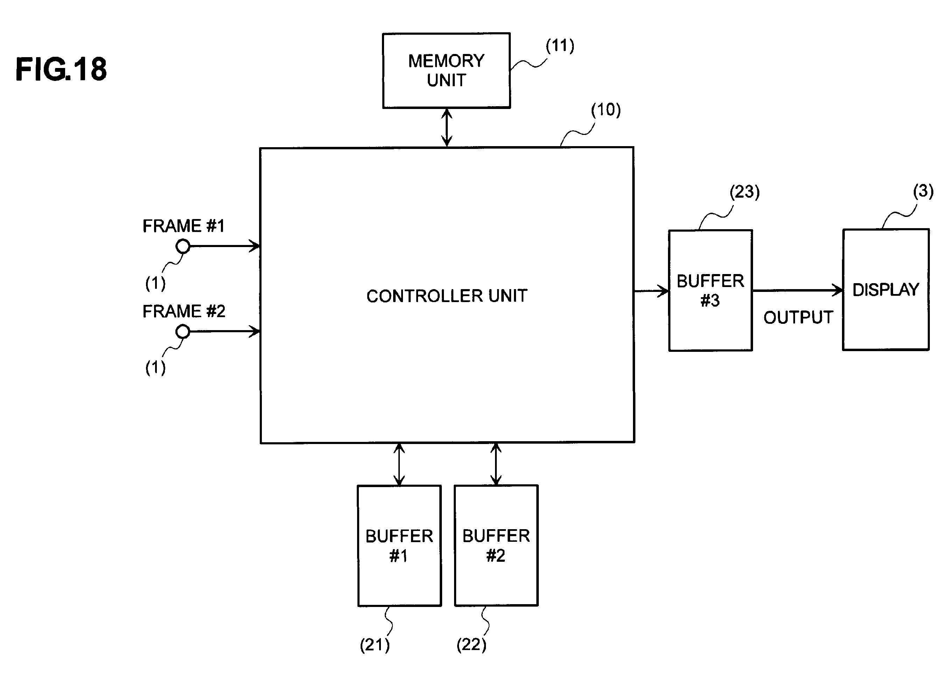

Next, explanation will be made on an embodiment 2 of the present invention, by referring to Figs. 18 and 14.

The embodiment 2 relates to the video signal processing method for achieving the processing, being equivalent to the video signal processing in the video signal processing apparatus according to the embodiment 1, by means of the controller portion cooperating with the software.

First of all, explanation will be given on the video signal processing apparatus for achieving the video signal processing method according to the present embodiment, by referring to Fig. 18 attached herewith. The video signal processing apparatus shown in Fig. 18 comprises an input portion (1), to which a video signal is inputted, such as, a television broadcast signal, etc., for example, a memory portion (11) for memorizing software therein, for processing the signal inputted from the input portion (1), a controller portion (10) for conducting the video signal processing upon the signal inputted from the input portion (1) cooperating with the software memorized in the memory portion (11), a frame buffer #1 (21) and a frame buffer #2 (22), each to be used as a buffer by the controller unit (10) in the processing of that video signal, and a buffer #3 (23) for frame buffering the signal after video signal processing, to be outputted from the controller portion (10) to an output portion (3).

Herein, the number of the input portions (1) provided on the video signal processing apparatus shown in Fig. 18 is two (2), being equal to the number of frames to be used in the video processing, but may be only one (1) of the input portion (1) for inputting the two (2) frames, continuously or in series.

Also, the frame buffer #1 (21) and the frame buffer #2 (22) for use of the data buffer, and also the memory portion (11) for memorizing the software therein, may be constructed with using the individual chips thereof, respectively, or with using one (1) piece of memory chip or a plural number of memory chips, while using it/them dividing each data address thereof.

In the present embodiment, on the video signal inputted from the input portion (1), the controller portion (10) conducts the video signal processing in cooperation with the software memorized in the memory portion (11), and outputs it to the display portion (3). The details of that video signal processing will be explained by referring to Fig. 14.

Fig. 14 shows an example of flowchart of the video signal processing method, according to the present invention. The flowchart shown in Fig. 14 starts from a step (1401), and the video data of each of the frames are up-rated up to two (2) times in a step (1418). Thus, in a step (1402) is up-rated the video data of the frame #1 to be written into the frame buffer #1, and in a step (1402) is up-rated the video data of the frame #2 to be written into a frame buffer #2 . Herein, the up-rating can be achieved by writing data for every second pixel after once clearing values of each of the frame buffers to zero (0).

Next, in a step (1404), the first pixel (for example, the pixel at the upper left) of the frame buffer #1 is set to be the processing target, and then the processing is looped until the processing is completed upon all the pixel data with respect to the frame buffer #1.

In a step (1405), estimation is made on a position of the corresponding pixel within the frame buffer #2, upon basis of the target pixel of the frame buffer #1, and thereby outputting the phase difference θ. In this instance, as the method for estimating the position of the corresponding pixel can be applied the prior art mentioned above, as it is.

In a step (1406), upon basis of the phase difference θ obtained in the step (1405), motion compensation is conducted upon the pixels in the vicinity of the corresponding pixel within the frame buffer #2. In this instance, as the pixels in the vicinity thereof, the compensation may be made on the video data to be used in the process of π/2 phase shifting in a step (1403), i.e., only the pixel data within a region where the infinite tap number acts. The operation of this motion compensation is same to that explained by referring to Figs. 5 and 6.

Following to the above, in a step (1419) is conducted phase shifting by a predetermined amount upon the frame buffer #1 and the frame buffer #2, on which the motion compensation is made. Thus, in the steps (1407) and (1408), the pixel data within each of the frame buffers is shifted by π/2 phase.

Following to the above, in a step (1420), the pixel data of the frame buffers #1 and #2 are removed from the aliasing components thereof, by conducting multiplication upon the output data, respectively, with using the coefficients C0, C1, C2, and C3, which are determined so as to satisfy the conditions shown in Figs. 9(a), 9(b) and 9(c) upon basis of the phase difference θ, and adding them, thereby to be outputted to a frame buffer #3. Thus, in a step (1409), the coefficients C0, C1, C2 and C3 are determined upon basis of the phase difference θ, and are multiplied with the pixel data of the frame buffers #1 and #2 and the data after the π/2 phase shifting, respectively, in the steps (1410), (1411), (1412) and (1413), and thereafter all of them are added to be outputted to the frame buffer #3. The operation of removing the aliasing component is same to that explained by referring to Fig. 9 in the above.

Following to the above, in a step (1415), determination is made on whether the processing is completed or not on all pixels of the frame buffer #1. If determining that it is not completed, after setting the next pixel (for example, the pixel at the right-hand neighbor) as the processing target in a step (1416), the process turns back to those in the steps (1405) and thereafter. On the other hand, if determining that it is completed, the process is ended in a step (1417).

After completing the video signal processing of the flowchart shown in Fig. 14, the signal buffered in the frame buffer #3 shown in Fig. 18 can be outputted to the display portion (3) by a unit of frame or a unit of pixel.

With such the processing as was mentioned above, it is possible to output a high-resolution signal to the frame buffer #3, with using the pixel data of the frame buffer #1 and the frame buffer #2. In case when applying to the moving picture, it is enough to repeat the processes, for each frame, starting from the step (1401) and reaching to the step (1417).

Further, with the video signal processing method according to the embodiment 2, it is also possible to confirm the operational differences from the prior arts mentioned above, in the similar manner to the explanation of Fig. 17, however since the result thereof is similar to that of the embodiment 1, the explanation thereof will be omitted.

With the video signal processing apparatus, according to the embodiment 2 mentioned above, two (2) signals are produced from each of the video signals, by conducting the phase sifting upon each video signals of two (2) pieces of input video frames, less than that of the prior arts. With this, it is possible to produce four (4) signals from the video signals of the two (2) pieces of input video frames. Herein, upon basis of the phase difference between those two (2) pieces of the input video frames, coefficients are calculated for each of those four (4) signals, so as to compose them while canceling the aliasing components of those four (4) signals. Thus, for each of the pixels to be produced, a sum is calculated upon the products obtained by multiplying each coefficient on a pixel value of the corresponding pixel, which is owned by each of the four (4) signals mentioned above; thereby producing a new pixel value for the high- resolution video or picture. By conducting this for each of the pixels of the video or picture to be produced, it is possible to produce the high-resolution video or picture.

With this, for the video signal processing apparatus according to the embodiment 2, it is possible to produce the high-resolution video or picture from the input video having less aliasing components therein, with using two (2) pieces of the input video frames, less than that of the prior arts.

Also, the video signal processing apparatus according to the embodiment 2, because of using two (2) pieces of the input video frames therein, less than that in the prior arts, then there can be obtained an effect of enabling to reduce an amount or volume of video processing necessary thereto.

### <Embodiment 3>

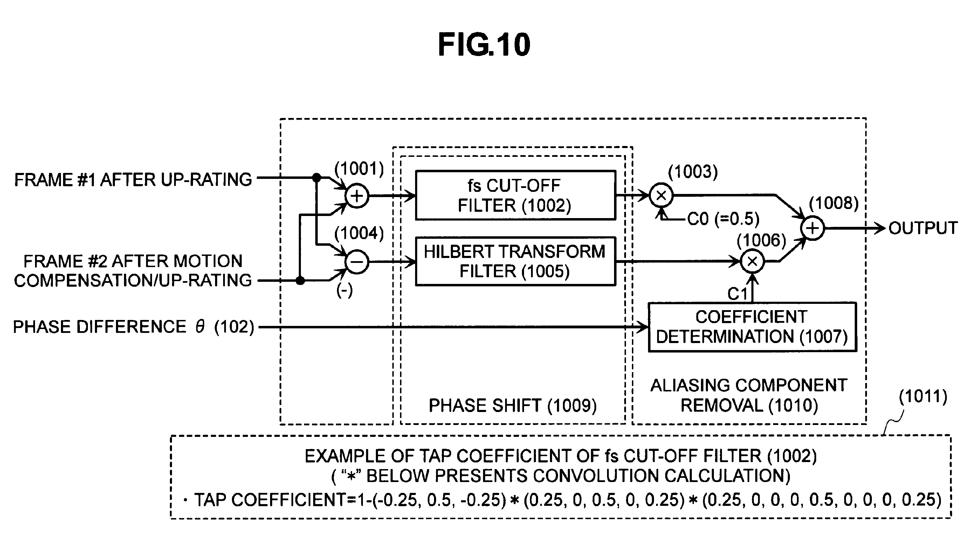

Fig. 10 shows an embodiment 3 according to the present invention. The structures shown in this figure are obtained by simplifying the structures shown in Fig. 1, with using the relationship among the coefficients C0, C1, C2 and C3 shown in Fig. 9(c). Thus, since C0=C2=1/2 and C1=-C3=- (1+cosθ)/2sinθ, the signals of sum and difference are produced by means of an adder (1001) and a subtracter (1004), from the frame #1 and the frame #2 after the motion compensation and up-rating. With the sum signal, after passing through an fs cut-off filter (1002), it is inputted into an adder (1008) with multiplying by C0 (=0.5) within a multiplier (1003). Herein, the fs cut-off filter (1002) is for cutting off the components of the sampling frequency (fs) before up-rating as a zero point, and it can be achieved by using the tap coefficients shown in (1011) of Fig. 10, for example. The propose of providing this fs cut-off filter (1002) lies to prevent unnecessary component of frequency fs from remaining, since the aliasing component cannot be removed from, because the gain comes down to zero point at the frequency fs on the "frequency-gain" characteristics of the Hilbert Transformer (1005), as shown in Fig. 7(a). Accordingly, if applying a means for enabling π/2 phase shifting, including the component of frequency fs, in the place of the Hilbert Transformer (1005), then this fs cut-off filter (1002) is unnecessary.

On the other hand, the difference signal, after being shifted in the phase by a predetermined amount (=π/2) within the Hilbert Transformer (1005), is multiplied by the coefficient C1, which is determined upon basis of the phase difference (102) within a coefficient determining portion (1007), within the adder (1008), thereby obtaining an output. Herein, a phase shift portion (1009), comprising the delay device (1002) and the Hilbert Transformer (1005), can be achieved with a circuit scale being half (1/2) of the phase shift portion (116) shown in Fig. 1. Also, it is enough for the coefficient determining portion (1007) to output the coefficient C1 shown in Fig. 9(c), then an aliasing component removal portion (1010), including the adder (1001), the subtracter (1004), the multipliers (1003) and (1006), the adder (1008) and the coefficient determining portion (1007), can be reduced of the number of pieces of the multipliers, and therefore it can be achieved with the circuit being smaller in the scale than that of the aliasing component removal portion (117) shown in Fig. 1.

Further, with the video signal processing method according to the embodiment 3, it is also possible to confirm the operational differences from the prior arts mentioned above, in the similar manner to the explanation of Fig. 17, however since the result thereof is similar to that of the embodiment 1, the explanation thereof will be omitted.

Also, the video signal processing apparatus and the video signal processing method according to the embodiment 3 may be applied in, for achieving the high resolution in the vertical direction and the oblique direction.

With the video signal processing apparatus according to the embodiment 3, which was explained in the above, in addition to the effects of the video signal processing apparatus according to the embodiment 1, it can be obtained by a circuit being smaller in the scale than that of the video signal processing apparatus according to the embodiment 1, and therefore it can be achieve with the cost much lower than that.

### <Embodiment 4>

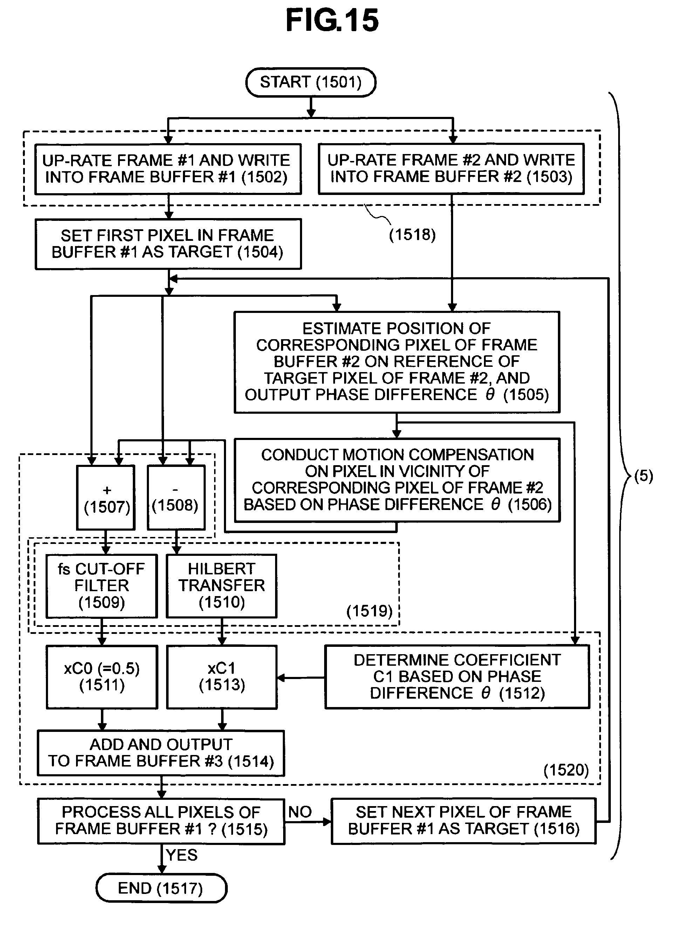

Explanation will be made on an embodiment 4 according to the present invention, by referring to Fig. 15.

The embodiment 4 relates to the video signal processing method for achieving the processing, being equivalent to the video signal processing in the video signal processing apparatus according to the embodiment 3, by means of the controller portion cooperating with the software. Since the video signal processing apparatus for conducting the video signal processing method of the present embodiment is the video signal processing apparatus shown in Fig. 18, similar to the embodiment 2, then the explanation thereof will be omitted herein.

Fig. 15 shows an example of the flowchart of the operations of the present embodiment. The flowchart starts from a step (1501), and in a step (1518) it up-rates the video data of each frame. Thus, in a step (1502) is up-rated the video data of the frame #1 to be written into the frame buffer #1, and in a step (1503) is up-rated the video data of the frame #2 to be written into a frame buffer #2. Herein, the up-rating can be achieved by writing data for every second pixel after once clearing values of each of the frame buffers to zero (0).

Next, in a step (1504), the first pixel (for example, the pixel at the upper left) of the frame buffer #1 is set to be the processing target, and then the processing is looped until the processing is completed upon all the pixel data with respect to the frame buffer #1.

In a step (1505), estimation is made on a position of the corresponding pixel within the frame buffer #2, upon basis of the target pixel of the frame buffer #1, thereby outputting the phase difference θ. In this instance, as the method for estimating the position of the corresponding pixel can be applied the prior art mentioned above, as it is.

In a step (1506), upon basis of the phase difference θ obtained in the step (1405), motion compensation is conducted upon the pixels in the vicinity of the corresponding pixel within the frame buffer #2. In this instance, as "the pixels in the vicinity" thereof, the compensation may be made on the video data to be used in the process of the Hilbert Transform in a step (1510), i.e., only the pixel data within a region where the infinite tap number acts. The operation of this motion compensation is same to that explained by referring to Figs. 5 and 6.

Following to the above, in a step (1520), the pixel data of the frame buffers #1 and #2 are removed the aliasing components thereof, upon basis of the phase difference θ, and are outputted to the frame buffer #3. First, in a step (1507), the value of the pixel data in the frame buffer #1 and the value of the pixel data in the frame buffer #2, upon which the motion compensation is made, are added, and are cut off the components of frequency fs in a step (1509). The function of this fs cut-off filter (1509) is same to that (1002) shown in Fig. 10.

Also, in a step (1508), the value of the pixel data in the frame buffer #2, upon which the motion compensation is made, is subtracted from the value of the pixel data in the frame buffer #1. Herein, upon the result of that subtraction is made the phase shifting by a predetermined amount, in a step (1519). Thus, in the similar manner, also with using the data in vicinity of the subtraction, the Hilbert Transformation is conducted in a step (1510). The operation of this phase shifting is same to that explained by referring to Figs. 7 and 8 mentioned above.

Following to the above, the data after the addition mentioned above is multiplied by the coefficient C0 (=0.5) in a step (1511), as well as, the coefficient C1 is determined upon basis of the phase difference θ. In a step (1513), the coefficient C1 and the data after the Hilbert Transformation are multiplied, and thereafter both data are added in a step (1514) to be outputted into the frame buffer #3. The operation of removing the aliasing component is same to that explained by referring to Fig. 10.

Following to the above, in a step (1515), determination is made on whether the processing is completed or not upon all pixels of the frame buffer #1. If not yet completed, after setting up the next pixel (for example, the pixel at the right-hand neighbor), the process turns back those steps (1505) and thereafter, on the other hand, if it is completed, the process is ended in a step (1517).

After completing the video signal processing of the flowchart shown in Fig. 14, the signal buffered in the frame buffer #3 shown in Fig. 18 can be outputted to the display portion (3) by a unit of frame or a unit of pixel.

With such the processing as was mentioned above, it is possible to output a high-resolution signal to the frame buffer #3. In case when applying to the moving picture, it is enough to repeat the processes starting from the step (1501) and reaching to the step (1517).

Further, with the video signal processing method according to the embodiment 4, it is also possible to confirm the operational differences from the prior arts mentioned above, by referring to Fig. 17, however since the result thereof is similar to that of the embodiment 1, the explanation thereof will be omitted.

Also, the video signal processing apparatus and the video signal processing method according to the embodiment 4 may be applied in, for achieving the high resolution in the vertical direction and the oblique direction.

The video signal processing method according to the embodiment 4, which was explained in the above, has the effect of achieving the high resolution of video signal, as similar to the video signal processing method according to the embodiment 2. Further, with the video signal processing method according to the embodiment 4, comparing to the video signal processing method according to the embodiment 2, it has an effect of enabling to achieve the signal processing similar thereto, but with the processes, smaller number than that of the video signal processing according to the embodiment 2, by making contents of a part of the processing steps in common.

### <Embodiment 5>

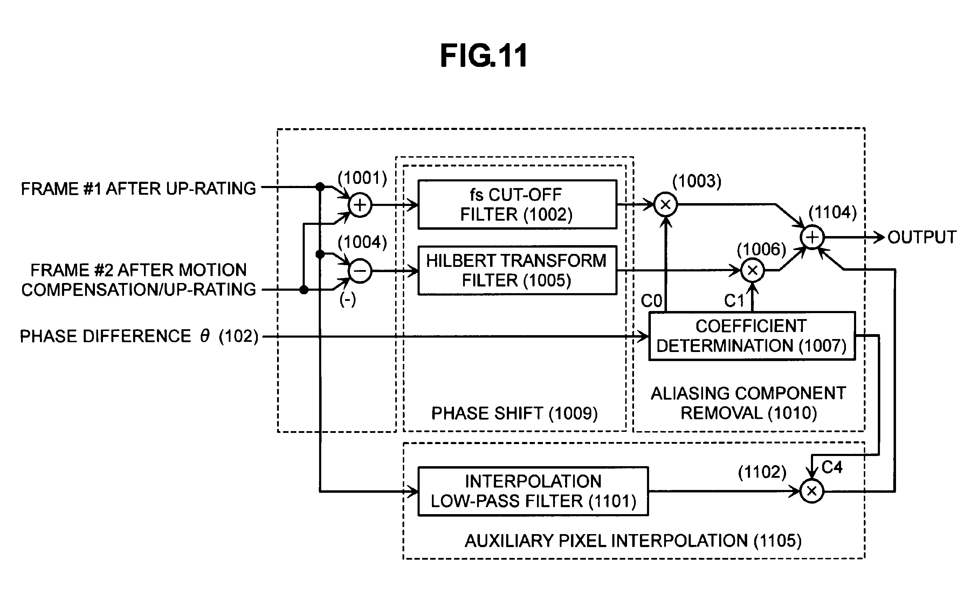

Fig. 11 shows an embodiment 5 according to the present invention. The structures shown in this figure is constructed upon basis of the structures shown in Fig. 10, enabling to change an output from an auxiliary pixel compensation portion (1105) when the phase difference θ comes close to zero (0), for the purpose of preventing the coefficients C1 and C3 from becoming unstable when the phase difference θ is zero (0), as shown in Fig. 9(d), and/or preventing the coefficients C1 and C3 from becoming weak against noises due to becoming large as the phase difference θ comes close to zero (0). Thus, a general interpolation low-pass filter (1101) is prepared as a bypass route, while C4 is newly produced other than the above-mentioned coefficients C0 and C1 within the coefficient determining portion (1103), and an output of the interpolation low-pass filter (1101) is multiplied by the coefficient C4 within the multiplier (1102), and thereafter it is outputted after being added onto the signal of high resolution within the adder (1104).

Structures other than the interpolation low-pass filter (1101), the multiplier (1102), the coefficient determining portion (1103), the adder (1104) and auxiliary pixel compensation portion (1105) are same to those of the embodiment 3 shown in Fig. 10, therefore the explanation thereof will be omitted.

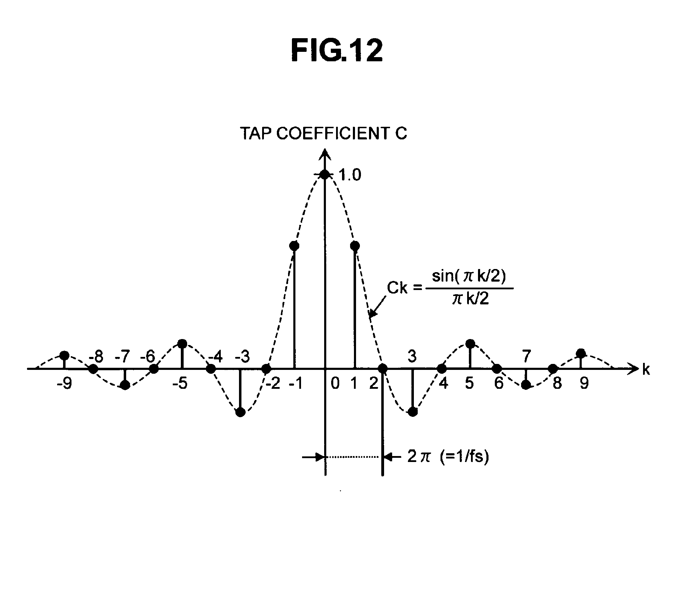

Fig. 12 shows a detailed example of the interpolation low-pass filter (1101) to be applied in the third embodiment, according to the present invention. This Fig. 12 shows the tap coefficients of filters obtained through the Fourier inversion of the frequency characteristics, taking a half (1/2) of the original sampling frequency fs as the cut-off frequency. In this instance, each of the tap coefficients Ck (however, k: an integer) comes to be a general sinc function, and therefore it is enough to put Ck=sin (πk/2) / (πk/2).

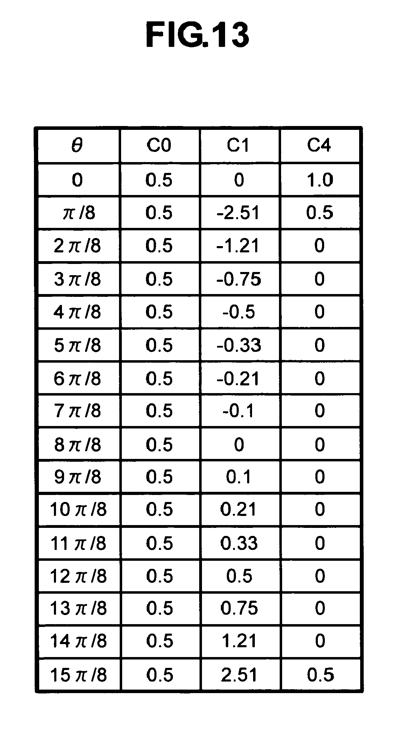

Fig. 13 shows the detailed example of the coefficient determining portion or unit (1103) to be applied into the embodiment 5 of the present invention. In this figure is shown operation of, although the new coefficient C4 is usually zero (0) upon basis of the coefficients C0 and C1 shown in Fig. 9(d), however setting values of the coefficients C0 and C1 to zero (0), compulsively, when the phase difference θ comes close to zero (0), as well as, setting the value of the coefficient C4 to 1.0. With this operation, in the structures shown in Fig. 11, it is possible to change an output of the adder (1104) to an output of the interpolation low-pass filter (1101), automatically, when the when the phase difference θ (102) comes close to zero (0). However, it is also possible to change the coefficients from those shown in Fig. 12 to those shown in Fig. 13, continuously, accompanying with approaching of the difference θ to zero (0). Also in case when determining that the pixel corresponding to the pixel as the processing target on the frame #1 does not lie on the frame #2, it is possible to change the output of the adder (1104) to an output of the interpolation low-pass filter (1101), automatically, by controlling the respective coefficients, in the similar to that when the phase difference θ (102) comes close to zero (0).

Further, with the video signal processing method according to the embodiment 5, it is also possible to confirm the operational differences from the prior arts mentioned above, by referring to Fig. 17, however since the result thereof is similar to that of the embodiment 1, the explanation thereof will be omitted.

Also, the video signal processing apparatus and the video signal processing method according to the embodiment 5 may be applied in, for achieving the high resolution in the vertical direction and the oblique direction.

With the video signal processing apparatus according to the embodiment 5, which was explained in the above, in addition to the effects of the video signal processing apparatus according to the embodiment 3, there can be achieved an effect of enabling to obtain an output video, being stable comparing to the video signal processing apparatus according to the embodiment 3, i.e., without becoming unstable even when the phase difference θ (102) comes to zero (0) or in the vicinity of zero (0) (i.e., at a standstill or almost at a stand still) or when it is determined that there is no pixel on the frame #2 corresponding to the pixel of the processing target on the frame #1.

### <Embodiment 6>

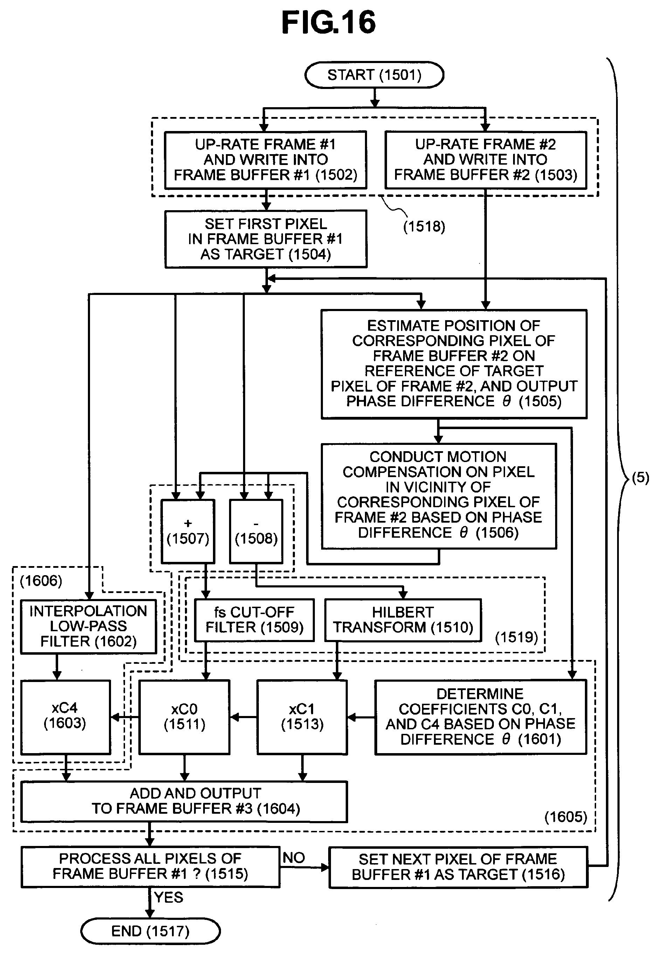

Explanation will be made on a video signal processing method according to an embodiment 6 of the present invention, by referring to Fig. 16.

The embodiment 6 relates to the video signal processing method for achieving the processing, being equivalent to the video signal processing in the video signal processing apparatus according to the embodiment 5, by means of the controller portion cooperating with the software. Since the video signal processing apparatus for conducting the video signal processing method of the present embodiment is the video signal processing apparatus shown in Fig. 18, similar to the embodiment 2, then the explanation thereof will be omitted herein.

Fig. 16 shows an example of flowchart of the operations of the present embodiment. The processing steps and the operations shown in this figure are made, so that a processing result of a step (1606) is outputted into the frame buffer #3 when the phase difference θ comes close to zero (0), upon basis of the processing steps shown in Fig. 15, for the purpose of preventing the coefficients C1 and C3 from becoming unstable when the phase difference θ is zero (0), as shown in Fig. 9(d), and/or preventing the coefficients C1 and C3 from becoming weak against noises due to becoming large as the phase difference θ comes close to zero (0) . Thus, the coefficients C0, C1 and C4 are determined upon basis cf the phase difference θ in a step (1601), and a general interpolation low-pass filtering process is conducted with using the pixel data as target within the frame buffer #1 and the pixel data in the vicinity thereof, in a step (1602). Thereafter, multiplication is made by the coefficient C4 in a step (1603), and then addition is made with the outputs of the steps (1511) and (1513) in a step (1604), thereby to be outputted into the frame buffer #3.

Since steps others than those are same to the processing steps shown in Fig. 15, which was explained in the embodiment 4, then the explanation thereof will be omitted herein. Further, since the operation of determining the coefficients in the step (1601) is also same to that explained by referring to Fig. 13 mentioned above, therefore the explanation thereof will be omitted. And, also the operation of the interpolation low-pass filter in the step (1602) is same to the operation shown by referring to Fig. 12 mentioned above, therefore the explanation thereof will be omitted.

Further, with the video signal processing method according to the embodiment 6, it is also possible to confirm the operational differences from the prior arts mentioned above, by referring to Fig. 17, however since the result thereof is similar to that of the embodiment 1, the explanation thereof will be omitted.

Also, the video signal processing apparatus and the video signal processing method according to the embodiment 6 may be applied in, for achieving the high resolution in the vertical direction and the oblique direction.

With the video signal processing apparatus according to the embodiment 6, which was explained in the above, in addition to the effects of the video signal processing apparatus according to the embodiment 4, there can be achieved an effect of enabling to obtain an output video, being stable comparing to the video signal processing apparatus according to the embodiment 4, i.e., without becoming unstable even when the phase difference θ (102) comes to zero (0) or in the vicinity of zero (0) (i.e., at a stand still or almost at a stand still) or when it is determined that there is no pixel on the frame #2 corresponding to the pixel of the processing target on the frame #1.

### <Embodiment 7>

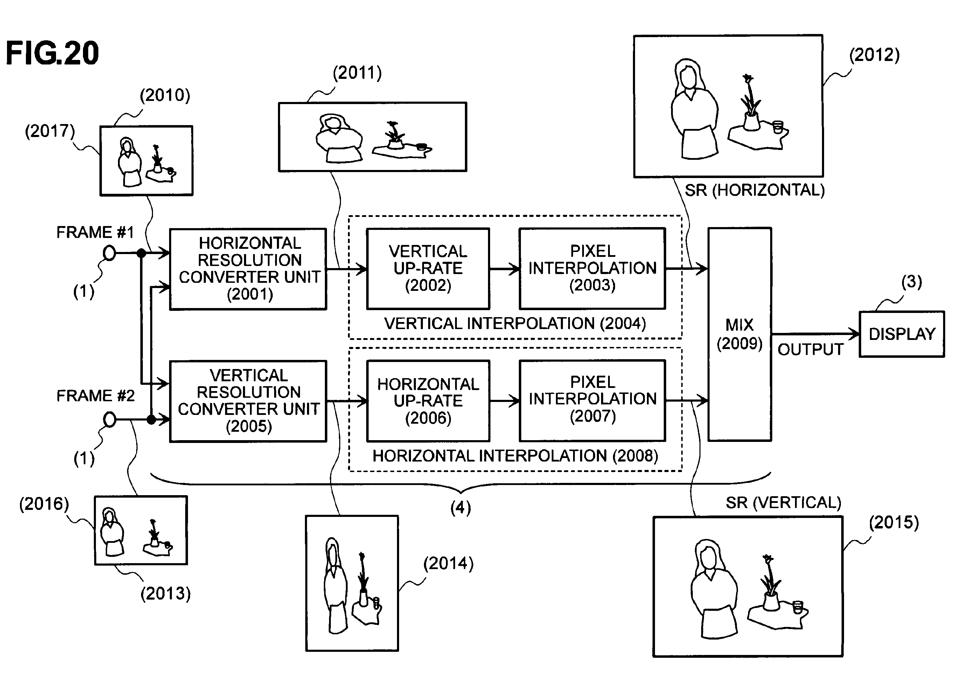

Fig. 20 shows a video signal processing apparatus, according to an embodiment 7 of the present invention. The video signal processing apparatus, according to the present embodiment, comprises: an input unit or portion (1), into which a train of frames of moving picture is inputted, such as, the television broadcast signal, for example, a resolution converter unit or portion (4) for combining the frames inputted from this input portion (1) in the horizontal/vertical directions,so as to achieve 2-dimensional high resolution thereof, and further a display unit or portion (3) for displaying a picture thereon, upon basis of the frames, on which the high resolution is achieved in this resolution converter unit (4).

In this resolution converter unit (4), resolution conversion is conducted in the horizontal direction and the vertical direction, respectively, and the component(s), being large in an effect of improving the resolution among the respective results thereof, is/are outputted, selectively or combined with, thereby achieving the 2-dimensional high resolution. Hereinafter, explanation will be given on the details of the resolution converter unit (4).

In Fig. 20, upon the basis of the frame #1 (2010) and the frame #2 (2013), which are inputted into the input unit (1), with using a horizontal resolution converter unit or portion (2001) and a vertical resolution converter unit or portion (2005), there are produced a frame (2011), which is increased in the pixel number in the horizontal direction, and a frame (2014), which is increased in the pixel number in the vertical direction.

Herein, each of the resolution converter units (2001) and (2005) conducts the signal processing in the horizontal direction or the vertical direction, respectively, with using the structures of the resolution converter unit (2) shown in Fig. 1. In this instance, within the horizontal resolution converter unit (2001), the up-raters (103) and (104), the delay devices (105) and (107), the π/2 phase shifter (106) and (108), which are shown in Fig. 1, are so constructed that they achieve the up-rate in the horizontal direction, the retardation, and π/2 phase shifting, respectively.

In the similar manner, within the vertical resolution converter unit (2005), the up-raters (103) and (104), the delay devices (105) and (107), the π/2 phase shifters (106) and (108), which are shown in Fig. 1, are so constructed that they achieve the up-rate in the vertical direction, the retardation, and π/2 phase shifting, respectively. Those can.be practiced with using the operations shown in Figs. 5-8 and the conventional arts, etc.

However, it can be also achieved with applying the resolution converter unit of the video signal processing apparatus according to the embodiment 3 of the present invention or the resolution converter portion of the video signal processing apparatus according to the embodiment 5 of the present invention, to each of the resolution converter units (2001) and (2005), in the place of the structures of the resolution converter unit of the video signal processing apparatus according to the embodiment 1 of the present invention. In the explanation given hereinafter, the explanation will be made on the assumption of applying the structures of the resolution converter unit of the video signal processing apparatus according to the embodiment 1 of the present invention.

In the present embodiment, assuming that a target to be pictured moves, 2-dimensionally, into the horizontal/vertical directions, the operations shown in Figs. 1 and 2 are extended into 2-dimensions. Thus, in the position estimation unit (see (101) in Fig. 1) and a motion compensation/up-rate portion or unit (see (115) in Fig. 1) within the horizontal resolution converter unit (2001), 2-dimensional motion compensation is conducted on the target on the frame #2 upon basis of the target on the frame #1, and at the same time, a horizontal phase difference "θH" among the sampling phase differences of the pixels in each frame is used in order to determine a coefficient of the aliasing component removal portion or unit (see (117) in Fig. 1).

In the similar manner, in the position estimation unit (see (101) in Fig. 1) and a motion compensation/up-rate unit (see (115) in Fig. 1) within the vertical resolution converter unit (2005), 2-dimensional motion compensation is conducted on the target on the frame #2 upon basis of the target (2016) on the frame #1, and at the same time, a vertical phase difference "θV" among the sampling phase differences of the pixels in each frame is used in order to determine a coefficient of the aliasing component removal unit (see (117) in Fig. 1). The determination of the coefficient in the aliasing component removal unit (see (117) can be achieved by using the operation shown in Fig. 9, as it is.

Assuming that the target moves in an oblique direction, distortion in the oblique direction should be included within the frame (2011) increasing the pixel number in the horizontal direction by means of the horizontal resolution converter unit (2001), but this distortion is negligible small on a component of the original input signal, which is low in the vertical frequency (i.e., a vertical line or the like). In the similar manner, distortion in the oblique direction should be included within the frame (2014) increasing the pixel number in the vertical direction by means of the vertical resolution converter unit (2005), but this distortion is negligible small on a component of the original input signal, which is low in the horizontal frequency (i.e., a horizontal line or the like).

With using such characteristics, the frame (2011), which is increased in the pixel number in the horizontal direction according to the signal processing mentioned above, produces a frame (2012) by means of a vertical interpolator unit (2004) comprising a vertical up-rater (2002) and a pixel interpolator (2003), as a SR (horizontal) signal. Herein, as the pixel interpolator (2003), it is possible to use a general vertical low-pass filter, for outputting an averaged value of pixel data up/down the pixel to be interpolated. In the similar manner, the frame (2014), which is increased in the pixel number in the vertical direction, produces a frame (2015) by means of a horizontal interpolator unit (2008) comprising a horizontal up-rater (2006) and a pixel interpolator (2007), as a SR (vertical) signal. Herein, as the pixel interpolator (2003), it is possible to use a general horizontal low-pass filter, for outputting an averaged value of pixel data left/right the pixel to be interpolated.

In this manner, extracting only the low-frequency components while removing the high-frequency components crossing the process target at right angles, with using the pixel compensators (2003) and (2007), it is possible to lower or reduce the ill influences due to the distortions, which age generated when the target moves in the oblique direction, as was mentioned above, down to the negligible small. The SR signal (horizontal) signal and the SR (vertical) signal, which are produced in the processes mentioned above, are combined or mixed with in a mixer (2009), to be an output signal, and it is displayed on the display unit (3).

Herein, the details and the operations of the mixer (2009) will be mentioned. As the mixer (2009) may be applied any one of the three (3) examples of the constructions, which will be shown hereinafter.

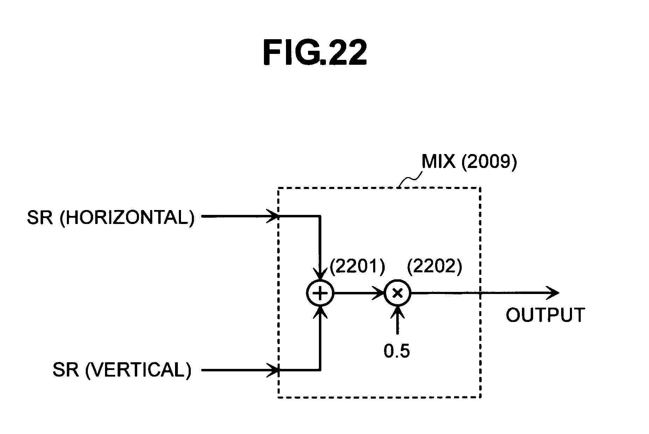

Fig. 22 shows a first example of structures of the mixer (2009). In the same figure, with using an adder (2201) and a multiplier (2201), an averaged value of each one of the signals, i.e., the SR (horizontal) signal and the SR (vertical) signal, which are inputted into the mixer (2009). The structure shown in the same figure is the simplest one of the mixer (2009), but an effect for improving each of resolutions, i.e., the horizontal/vertical directions, comes down to 1/2, respectively.

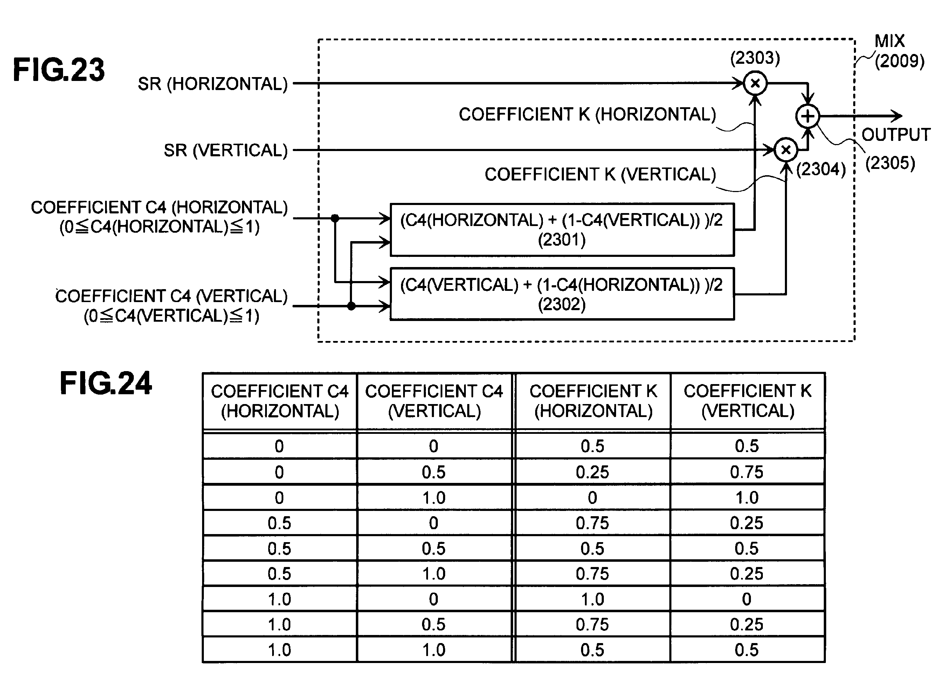

Fig. 23 shows a second example of structures of the mixer (2009). In the same figure, a coefficient "K" (horizontal) and a coefficient "K" (vertical) are multiplied upon the SR (horizontal) signal and the SR (vertical) signal, respectively, with using multipliers (2303) and (2304), and both are added in an adder (2305), to be outputted. The coefficient "K" (horizontal) and the coefficient "K" (vertical) are produced in coefficient determining portions or units (2301) and (2302), respectively. Hereinafter, explanation will be made on the operations of those coefficient determining units (2301) and (2302).

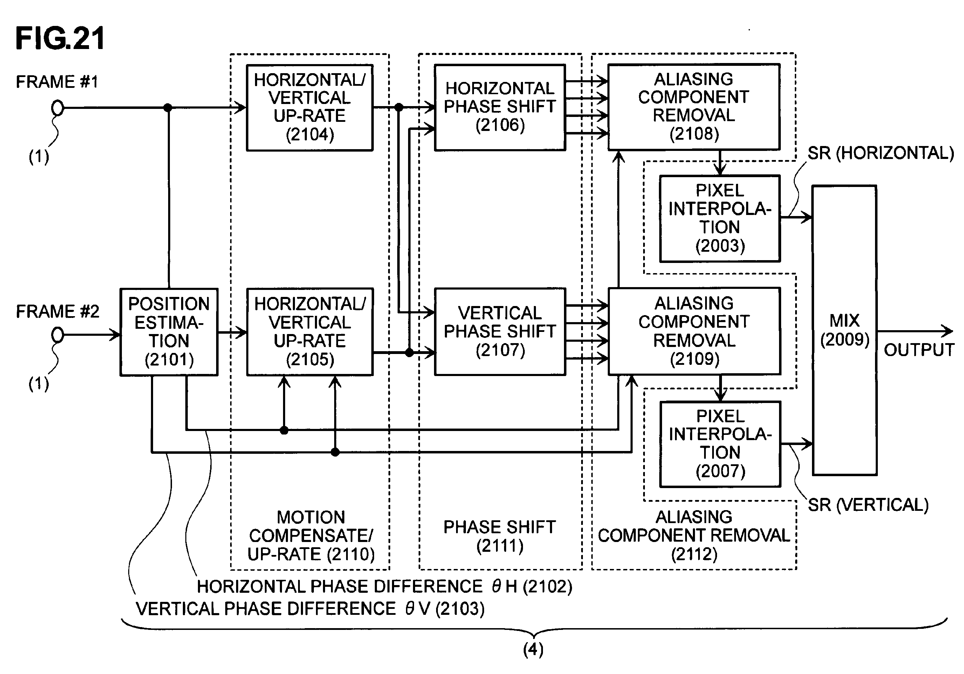

The aliasing component removal units (2108) and (2109) shown in Fig. 21 generate the coefficients C0-C3, which are shown in Fig. 9, in the coefficient determining unit (109) shown in Fig. 1, thereby conducting calculations for removing the aliasing components. In this instance, for the purpose of prevention from becoming weak in noises or the like, due to the fact that the coefficients C1 and C3 comes to be unstable when "θH" (2102) and "θV" (2103) are zero (0), or due to the fact that the coefficients C1 and C3 comes to be large when "θH" (2102) and "θV" (2103) come close to zero (0), it is preferable to introduce the coefficient C4 (0≤C4≤1) shown in Fig. 13, thereby conducting an auxiliary pixel interpolation, as the structures shown in Fig. 11. Paradoxically speaking, there can be obtained the effect of improving the resolution when the value of coefficient C4 is 0.0, but that effect of improving the resolution comes to be small as the value of coefficient C4 comes close to 1.0.

With using this characteristic, the coefficient "K" (horizontal) and the coefficient "K" (vertical) are determined with using the values of the respective coefficients in the horizontal/vertical directions, so that the SR (vertical) as the result of the vertical resolution conversion can be influenced, strongly, when the horizontal phase difference "θH" (2102) is in the vicinity of zero (0) (i.e., the coefficient C4 (horizontal) is in the vicinity of zero (0)) while the SR (horizontal) as the result of the horizontal resolution conversion can be influenced, strongly, when the vertical phase difference "θV" (2103) is in the vicinity of zero (0) (i.e., the coefficient C4 (vertical) is in the vicinity of zero (0)). For achieving this operation, for example, a calculation is done, K(horizontal)= C4 (horizontal)+(1-4C (vertical)) /2, in the coefficient determining unit (2301) shown in Fig. 23, to determine K (horizontal), and a calculation is done, K(vertical)= C4(vertical)+(1-4C(horizontal))/2, in the coefficient determining unit (2303), to determine K(vertical).

Fig. 24 shows examples of the outputs (coefficient K (horizontal) and the coefficient C4 (vertical)), collectively, of the coefficient determining units (2301) and (2302), when changing the coefficients C4 (horizontal) and C4 (vertical), respectively. As is shown in the same figure, it operates in such that, when the coefficient C4 (horizontal) comes to be large, the coefficient K (horizontal) comes to be small and at the same time the coefficient K (vertical) comes to be large, on the other hand when the coefficient C4 (vertical) comes to be large, then the coefficient K (horizontal) comes to be large and at the same time the coefficient K (vertical) comes to be small.

When the coefficient C4 is equal to the coefficient C4 (vertical), the coefficient K (horizontal) and the coefficient (vertical) come to be 0.5, respectively. For the coefficients C4 changing horizontally/vertically, independently, in this manner, the coefficient K is so determined that, addition of the coefficient K (horizontal) and the coefficient K (vertical) comes to be just 1.0, to combine the SR (horizontal) and the SR (vertical).

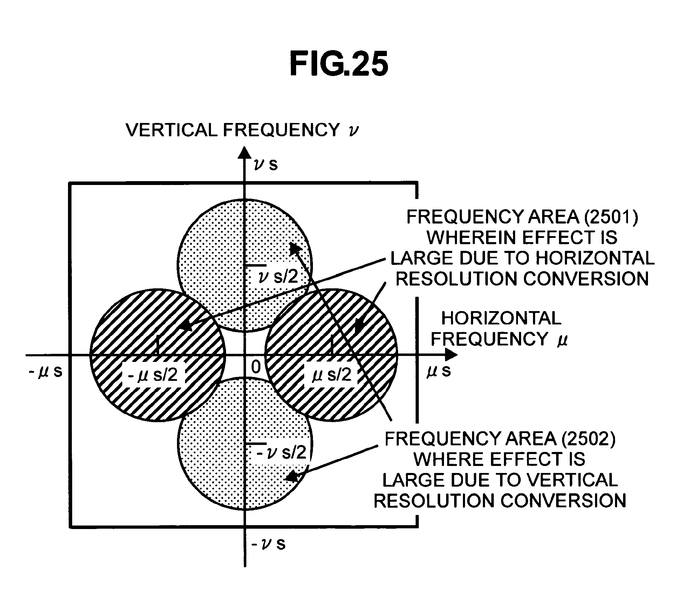

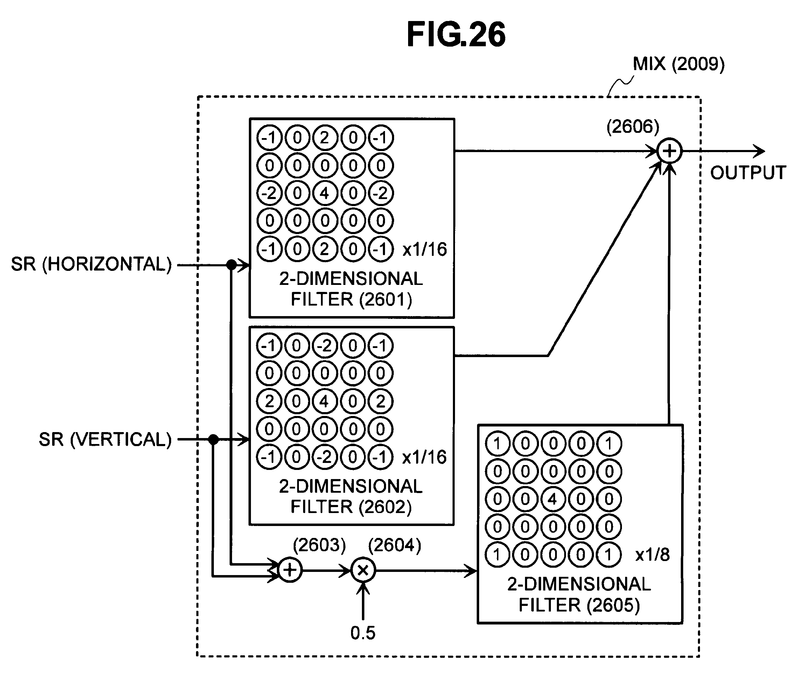

Explanation will be made on examples of a third operation and the structural example of the mixer (2009), by referring to Figs. 25 and 26, respectively. Fig. 25 shows a 2-dimensional frequency region of showing the horizontal frequency by "µ" and the vertical frequency "ν", respectively. Assuming that the horizontal sampling frequency of an original input picture is "µs" and the vertical sampling frequency thereof is "vs", then an output of the resolution converting unit (4) shown in Figs. 20 and 21 comes to be a signal, within a region from "-µs" to "+µs" in the horizontal frequency "µ", and within a region from "-νs" to "+νs" in the vertical frequency "ν".

Thought the high-frequency components come to be reproduced through each of the horizontal/vertical resolution conversions, but since the high-frequency components are small on the signal level, inherently, then it is the component of a frequency region (2501) in the vicinity of (µ, ν)=(±µs/2,0), upon which the effect due to the horizontal resolution conversion is large (in particular, the components of regions of the frequency, including (µ,ν)=(+µs/2,0), a region of frequency µ>0, and (µ,ν)=(-µs/2,0), a region of frequency µ<0), and it is the component of a frequency region (2502) in the vicinity of (µ, ν) = (0, ±νs/2), upon which the effect due to the vertical resolution conversion is large (in particular, the components of the regions of frequency, including (µ,ν)=(0, + νs/2), a region of frequency ν>0, and (µ,ν)=(0,-νs/2), a region of frequency ν<0).

Accordingly, by extracting those frequency components (2501) and (2502) through the 2-dimensional filter, to be mixed up, it is possible to output the components, upon which the effect is large of improving the resolution, selectively.

Fig. 26 shows the structural example of the mixer (2009) for extracting the components, upon each of which the effect due to the horizontal/vertical resolution conversion is large. In the same figure, with using a 2-dimensional filter (2601), a component is extracted of the frequency region (2501), which has a large effect of improving the resolution upon the SR (horizontal) inputted into the mixer (2009). In the similar manner, with using a 2-dimensional filter (2602), a component is extracted of the frequency region (2502), which has a large effect of improving the resolution upon the SR (vertical) inputted into the mixer (2009).

As a component other than the frequency regions (2501) and (2502), a signal is produced of an average between the SR (horizontal) and the SR (vertical) with using an adder (2603) and a multiplier (2604), and components other than the respective pass bands of the 2-dimensional filters (2601) and (2602) (i.e., remaining components) are extracted with using a 2-dimensional filter (2605). Each output signal of the 2-dimensional filters (2601), (2602) and (2605) is added within an adder (2606), to be an output of the mixer (2009).

However, a numeral, which is surrounded by a circle, among the 2-dimensional filters (2601), (2602) and (2605) shown in the same figure, shows an example of tap coefficient of the filter, respectively. (The coefficient of each of the filters is inscribed by an integer, for the purpose of simplifying the explanation thereof. The inherent or original value of the coefficient is calculation of the figure surrounded by a circle and "×1/16", etc. , which is shown at the right-hand side thereof, i.e., the production. For example, in the 2-dimensional filters (2601), the inherent coefficient value is multiplying "1/16" on each of the figures, which are surrounded by the circles therein. This is same to the coefficients of the 2-dimensional filters, which will be shown in the following embodiments.) It is enough that the 2-dimensional filters (2601) be a production of a horizontal band pass filter and a vertical band pass filter applying ±µs/2 to be a central frequency of the pass band, while the 2-dimensional filters (2602) be a production of a vertical band pass filter and a horizontal band pass filter applying ±νs/2 to be a central frequency of the pass band, and the 2-dimensional filters (2605) may be in characteristic obtained by subtracting the pass bands of the 2-dimensional filters (2601) and the 2-dimensional filters (2602) from all bands.

Next, explanation will be given about differences in the operations between the embodiment 7 of the present invention and the prior art mentioned above, by referring to Figs. 34(a) and 34(b). Fig. 34(a) shows the frame #1 (3401), the frame #2 (3402), the frame #3 (3403), the frame #4 (3404) and the frame #5 (3401), which are inputted into the resolution converter unit (4), while Fig. 34(b) shows the respective frames outputted from the resolution converter unit (4). In each of the frames, the target to be photographed is moved, intestinally, so that it moves into the clockwise direction by each 1/4 pixel and makes a round by four (4) frames. This motion is continued in the similar manner after the frame #6 and thereafter.

With the prior arts described in the Patent Document 1, the Patent Document 2 and the Non-Patent Document 1, as was mentioned above, in case when conducting the high resolution upon the 2-dimensional input signal, i.e., horizontal/vertical, since the aliasing comes from two (2) directions (horizontal/vertical), the band area of the original signal is widen 2-times in the horizontal/vertical directions, and then three (3) aliasing components overlap one another. For the purpose of negating those, there is a necessity of 2M+1=7 pieces of digital data (= 7 pieces of signals of the frame video). Accordingly, in case when inputting the signals, making one round by four (4) frames as is shown in Fig. 33(a), since it is impossible to obtain independent data even if selecting any seven (7) frames, the solution obtained by the high resolution process comes to be indefinite; i.e. , no solution can be obtained.

On the other hand, with applying the present embodiment therein, it is possible to achieve the high resolution, with removing the aliasing component in the horizontal direction (or in the vertical direction), as is shown in Fig. 33(b), for example, with using the neighboring two (2) frames (for example, the frame #1 (3401) and the frame #2 (3402) (or the frame #2 (3402) and the frame #3 (3403)). Thus, with using the input video shown in Fig. 33(a) as a test pattern, it is possible to confirm the operation of the present embodiment. With using a CZP (circular Zone Plate), which is well know, in general, as a design of this test pattern, an effect of the resolution conversion can be seen, directly, on the display unit (3). Thus, the video can be displayed, which is improved on the resolution in the horizontal direction, if moving the CZP (circular Zone Plate), by each frame, in the horizontal direction, and/or the video can be displayed, which is improved on the resolution in the vertical direction (or in the oblique direction) if moving the CZP (circular Zone Plate) in the vertical direction (or in the oblique direction), etc., i.e., it is possible to confirm an effect of improving the resolution responding to the direction of movement of the test pattern.

With the video signal processing apparatus according to the embodiment 7, which was explained in the above, two (2) signals are produced from the each video signal, respectively, by conducting the phase shifting on the each video signal of two (2) pieces of the input video frames. With this, four (4) signals can be produced from the two (2) pieces of the input video frames. Herein, upon basis of the phase difference between the two (2) pieces of the input video frames, the coefficient is calculated out, respectively, for composing those four (4) signals while canceling the aliasing components thereof, for each pixel, for each one of that four (4) signals. For each pixel of the video to be produced, a sum is calculated upon products of the pixel values of the corresponding pixels owned by each signal of the four (4) signals mentioned above, each being multiplied by each coefficient, respectively, and thereby producing pixel values of a new high resolution video. With conducting this upon each of the pixels of the video to be produced, it is possible to produce a video achieving high-resolution in one-dimensional direction more than the input video frame.

With conducting this upon the horizontal direction and the vertical direction, respectively, it is possible to produce a video achieving high resolution in the horizontal direction and a video achieving high resolution in the vertical direction. Upon that video achieving high resolution in the horizontal direction and that video achieving high resolution in the vertical direction is conducted the up-rating process in the vertical direction and the horizontal direction, respectively, and thereafter both are combined with.

With this, it is possible to produce a high resolution video achieving the high resolution in both the vertical direction and the horizontal direction, from the each video signal of the two (2) pieces of input video frames, being smaller number than that of the prior art. Thus, 2-dimensional high-resolution video can be produced.

Also, with the video signal processing apparatus according to the embodiment 7, since two (2) pieces of input video frames are used, being smaller number than that of the prior art, therefore it is possible to reduce an amount of necessity processes lower than that of the prior art. With this, it is possible to achieve the video signal processing apparatus, for producing the high-resolution video, being higher in the resolution than the input video in both direction, i.e., the vertical direction and the horizontal direction, with less aliasing components therein, but a cost lower than that of the prior art.

However, in accordance with the prior arts described in the Patent Document 1, the Patent Document 2 and the Non-Patent Document 1, it is also possible to provide an output, as a result of the 2-dimensional resolution conversion, by conducting a one-dimensional high resolution in the plural number of directions, such as, the horizontal direction and the vertical direction, etc. , with using three (3) frames, and thereby inputting the result of each of those into the mixer (2009) shown in Fig. 20. In this case, the signal processing circuit, such as, the frame memory and the motionestimationunit, etc., comes to be large in the scale thereof, comparing to the structures for conducting the 2-dimensional resolution conversion with using only two (2) frames, as is shown in Fig. 20; however, it is possible to make the scale of the signal processing circuit, such as, the frame memory and the motion estimation unit, etc., smaller than that of using at least seven (7) frames therein, as is described in the Patent Document 1, the Patent Document 2 or the Non-Patent Document 1.

Also, not restricting to the prior arts described in the Patent Document 1, the Patent Document 2 and the Non-Patent Document 1 mentioned above, with applying other conventional high resolution technologies, it is possible to conduct the one-dimensional high resolution conversion in plural numbers of directions, such as, the horizontal direction and the vertical direction, etc., and each result thereof is outputted into the mixer (2009) shown in Fig. 20 to be mixed with; thereby outputting it as the result of 2-dimensional resolution conversion.

Also, in Fig. 20, the explanation was given on the example, by referring to the case of converting the resolution of the frame #1 with using a pair of the input signals, i.e., the frame #1 and the frame #2; however, other than this, it is also possible to obtain the final result of the resolution conversion of the frame #1, by converting the resolution of the frame #1, respectively, with using plural pairs, such as, the frame #1 and the frame #3, and the frame #1 and the frame #4, etc., and thereby combining or mixing the results of those.

As the mixing method in this instance, it is possible to obtain an averaged value of the respective results, or to mix them corresponding to the value of the coefficient C4 (frame) for each frame, as was shown in Fig. 23 or Fig. 24. In this case, as the coefficient C4 (frame) may be used a MAX value (the value of not smaller one) of the coefficient C4 (horizontal) and the coefficient C4 (vertical) for each frame. Or, it is also possible to obtain the final result of the resolution conversation of the frame #1, by comparing the coefficients C4 (horizontal) and C4 (vertical) of all sets, for each pixel, and then by selecting the results of the resolution conversion obtained from the set, being smallest in the coefficient C4 (i.e., the set being largest on the effect of improving the resolution), for each pixel.

With this, for example, upon basis of the frame #1, in case where the frame #2 is the frame prior to the frame #1, and the frame #3 is the future frame posterior to frame #1, each of the processing results is mixed with, in such a manner that the resolution conversion process is conducted with using the frame #1 and frame #2 if the subject changes from "motion" to "standstill" (end of motion), and the resolution conversion process is conducted with using the frame #1 and frame #3 if the object changes from "standstill" to "motion" (start of motion), therefore, it is possible to utilize the motion of the object and thereby to bring an effect of increasing the resolution at the most.

### <Embodiment 8>

Fig. 21 shows a video signal processing apparatus, according to an embodiment 8 of the present invention. The video processing apparatus according to the present embodiment is a variation of the structures of the embodiment 7 mentioned above, wherein they are so constructed that the processing order of the resolution converter units (2001) and (2005) and the compensation units (2004) and (2008), which are shown in Fig. 20, are reversed, i.e., after completing the compensation process, the resolution conversion is conducted. With this, since the up-raters (i.e., (103) and (104) in Fig. 1) within the resolution converter units (2001) and (2005), and also the up-raters (i.e., (2002) and (2006) in Fig. 20) within the compensation units (2004) and (2008), can be shared, in common, and further the respective position estimation units (see (101) in Fig. 1) within the horizontal resolution converter unit (2001) and the vertical resolution converter unit (2005) can be shared, in common; therefore, it is possible to achieve the similar signal processing with a circuit scale and an amount of calculations, which are smaller than before.

In Fig. 21, firstly within a position estimation unit (2101), estimation is made on the position of the pixel on the frame #2 corresponding thereto, upon basis of a sampling phase (i.e., a sampling position) of the pixel of the processing target on the frame #1, which is inputted in the input unit (1), so as to obtain the sampling phase differences "θH" (2102) and "θV" (2103) in the horizontal direction and the vertical direction, respectively.

Next, the up-raters (2104) and (2105) of the motion compensation/up-rate unit (2110) makes moving compensation upon the frame #2 with using the information of the phase differences "θH" (2102) and "θV" (2103), so as to fit to the frame #1 in the position, and at the same time, it increases the pixel numbers of the frames #1 and #2 up to 2-times, respectively, in the horizontal and vertical directions (in total, 4-times). The up-rater (2104) and (2105), each being obtained by extending the operations/structures shown in Figs. 5 and 6 into 2-dimensions, i.e., into the horizontal/vertical directions, can be practiced easily, and therefore are committed to be shown in the figure. In a phase shift portion or unit (2111), the phase of this data of high-density is shifted by a predetermined amount thereof.

In this instance, a horizontal phase shifter (2106) conducts phase shifting into the horizontal direction, and a vertical phase shifter (2107) conducts phase shifting into the vertical direction; i.e., they can be practiced in the similar manner to the delay devices (105) and (107) and the π/2 phase shifter (108), which are shown in Fig. 1, and the operations/structures shown in Figs. 7 and 8, and therefore the explanation thereof is omitted herein.

For each signal, which is shifted in the phase thereof, the aliasing components in the horizontal/vertical directions are removed, respectively, in a horizontal direction aliasing component removal portion or unit (2108) and a vertical direction aliasing component removal portion or unit (2109) within an aliasing component removal portion or unit (2112). Next, an output of the horizontal direction aliasing component removal unit (2108) is interpolated in the pixels thereof with using a pixel interpolator (2003), to be the SR (horizontal) signal, while an output of the vertical direction aliasing component removal unit (2109) is interpolated in the pixels thereof with using a pixel interpolator (2007), to be the SR (vertical) signal, and both of those are combined in a mixer (2009) to be outputted.

As the aliasing component removal units (2108) and (2109) can be applied the aliasing component removal unit (117) shown in Fig. 1, as it is in the structures thereof. Assuming that the phase difference is "θ" (102), it is possible to remove the aliasing components in the respective directions, by conducting the operations shown in Fig. 9, with using the horizontal phase difference "θH" (2102) in the aliasing component removal unit (2108), while using the vertical phase difference "θV" (2103) in the aliasing component removal unit (2109).

However, in the explanation given in the above, although it is said that the phase shift portion (2111) is practiced in the similar manner to the reterders (105) and (107) and the π/2 phase shifter (108), which are shown in Fig. 1, and the operations/structures shown in Figs. 7 and 8, and that as the aliasing component removal portion (2108) or (2109) is applied the structure of the aliasing component removal unit (117) shown in Fig. 1, as it is, however in the place thereof, it is also possible to apply the phase shift portion (1009) shown in Fig. 10 into the phase shift portion (2111), in the vertical direction and the horizontal direction, respectively, while applying the aliasing component removal unit (1010) shown in Fig. 10 into the aliasing component removal unit (2108) or (2109), respectively. Further, in this instance, each of the aliasing component removal units (2108) and (2109) may comprises auxiliary pixel compensation portion or unit (1105) shown in Fig. 11, in the similar manner to that shown in Fig. 11.

However, the mixer (2009) is same to that of the embodiment 7, and therefore the explanation thereof will be omitted herein.

Also, the operations to the input frame shown in Fig. 34 are same to those of the embodiment 7, and therefore the explanation thereof will be omitted herein.

The video signal processing apparatus according to the embodiment 8, which was explained in the above, has the same effects, which the video signal processing apparatus according to the embodiment 7 has; however, since it shares a part of the processing portion, in common, comparing to the video signal processing apparatus according to the embodiment 7, therefore it has an effect of enabling the similar signal processing, but with the circuit scale and the calculation amount being smaller than those of the video signal processing apparatus according to the embodiment 7.

However, in accordance with the prior arts described in the Patent Document 1, the Patent Document 2 and the Non-Patent Document 1, it is also possible to provide an output, as a result of the 2-dimensional resolution conversion, by conducting a one-dimensional high resolution in the plural number of directions, such as, the horizontal direction and the vertical direction, etc., with using three (3) frames, and thereby inputting the result of each of those into the mixer (2009) shown in Fig. 21. In this case, the signal processing circuit, such as, the frame memory and the motion estimation unit, etc., comes to be large in the scale thereof, comparing to the structures for conducting the 2-dimensional resolution conversion with using only two (2) frames, as is shown in Fig. 21; however, it is possible to make the scale of the signal processing circuit, such as, the frame memory and the motion estimation unit, etc., smaller than that of using at least seven (7) frames therein, as is described in the Patent Document 1, the Patent Document 2 or the Non-Patent Document 1.

Also, not restricting to the prior arts described in the Patent Document 1, the Patent Document 2 and the Non-Patent Document 1 mentioned above, with applying other conventional high resolution technologies, it is possible to conduct the one-dimensional high resolution conversion in plural numbers of directions, such as, the horizontal direction and the vertical direction, etc., and each result thereof is outputted into the mixer (2009) shown in Fig. 21 to be mixed with; thereby outputting it as the result of 2-dimensional resolution conversion.

Also, in Fig. 20, the explanation was given on the example, by referring to the case of converting the resolution of the frame #1 with using a pair of the input signals, i.e., the frame #1 and the frame #2; however, other than this, it is also possible to obtain the final result of the resolution conversion of the frame #1, by converting the resolution of the frame #1, respectively, with using plural pairs, such as, the frame #1 and the frame #3, and the frame #1 and the frame #4, etc., and thereby combining or mixing the results of those.

As the mixing method in this instance, it is possible to obtain an averaged value of the respective results, or to mix them corresponding to the value of the coefficient C4 (frame) for each frame, as was shown in Fig. 23 or Fig. 24. In this case, as the coefficient C4 (frame) may be used a MAX value (the value of not smaller one) of the coefficient C4 (horizontal) and the coefficient C4 (vertical) for each frame. Or, it is also possible to obtain the final result of the resolution conversation of the frame #1, by comparing the coefficients C4 (horizontal) and C4 (vertical) of all sets, for each pixel, and then by selecting the results of the resolution conversion obtained from the set, being smallest in the coefficient C4 (i.e., the set being largest on the effect of improving the resolution), for each pixel.

With this, for example, upon basis of the frame #1, in case where the frame #2 is the frame prior to the frame #1, and the frame #3 is the future frame posterior to frame #1, each of the processing results is mixed with, in such a manner that the resolution conversion process is conducted with using the frame #1 and frame #2 if the subject changes from "motion" to "standstill" (end of motion), and the resolution conversion process is conducted with using the frame #1 and frame #3 if the object changes from "standstill" to "motion" (start of motion), therefore, it is possible to utilize the motion of the object and thereby to bring an effect of increasing the resolution at the most.

### <Embodiment 9>

Fig. 27 shows the video signal processing apparatus, according to an embodiment 9 of the present invention. The video signal processing apparatus according to the present embodiment has the structures of adding the high-resolution converting units for the lower right and the upper right oblique components, in addition to an example of the structures shown in Fig. 21. Thus, an oblique (the lower right) phase shift portion or unit (2701) and an oblique (the upper right) phase shift portion or unit (2702) are added to a phase shift portion or unit (2708), and aliasing component removing portions (2705) and (2706) are added to an aliasing component removal portion or unit (2709), wherein after passing through pixel interpolators (2710) and (2711), respectively, each of the signals, SR (horizontal), SR (vertical), SR (upper right) and SR (lower right), is mixed within a mixer portion or unit (2707), so as to obtain an output. Herein, as the pixel interpolator (2710) or (2711) may be applied a general 2-dimensional filter, for outputting an averaged value of the pixel data on the upper and the lower sides and the left and the right sides of pixel to be interpolated.

As the phase difference "θ" is needed the phase difference information in the oblique direction, and therefore, the following structures may be made: i.e., the phase difference (θH+θV) obtained by adding the horizontal phase difference "θH" (2102) and the vertical phase difference "θV" (2103) in an adder (2703) is inputted into the aliasing component removal unit (2705), while the phase difference (-θH+θV) produced in a subtracter (2704) is inputted into the aliasing component removal unit (2706). However, the structures and the operations of all the aliasing component removal units (2106), (2109), (2705) and (2706) are common.

Figs. 28(a) to 28(d) show the operations of the horizontal phase shift unit (2106), the vertical phase shift unit (2107), the oblique (lower right) phase shift unit (2101) and the oblique (upper right) phase shift unit (2102), in the 2-dimensional frequency region, respectively. Figs. 28(a) to 28(d) show the 2-dimensional frequency region, while showing the horizontal frequency by "µ" and the vertical frequency "ν", in the similar manner to those shown in Fig. 25. Those phase shift units (2106), (2107), (2701) and (2702) have the same structure of the phase shift unit (116) shown in Fig. 1, wherein "frequency-phase difference" characteristics of the π/2 phase shifters (106) and (108) in those are changed fitting to the respective directions thereof.

Thus, in Fig. 28(a), the horizontal phase shift unit (2106) shifts the phase of frequency components within a region from -µs to 0 by only π/2, and also shifts the phase of frequency components within a region from 0 to µs by only -π/2, in the similar manner to the operation shown in Fig. 7, in case when the horizontal frequency sampling frequency for the input signal is µs. In the similar manner, the vertical phase shift unit (2107) shifts the phase of frequency components within a region from -vs to 0 by only π/2, and also shifts the phase of frequency components within a region from 0 to vs by only -π/2, in case when the vertical frequency sampling frequency for the input signal is vs.

In the similar manner, the oblique (lower right) phase shift unit (2101) and the oblique (upper right) phase shift unit (2102) shift the phase of the signal by only π/2 or -π/2, as is shown in Fig. 28(c) and Fig. 28(d), respectively. Those "frequency-phase difference" characteristics can be achieved, easily, through disposing the tap coefficients shown in Fig. 8 into the respective directions, the horizontal direction, the vertical direction, the oblique (lower right) direction and the oblique (upper right) direction, fitting to the points of the 2-dimensional sampling.

Fig. 29 shows a first example of the structures of the mixer (2707). In the same figure, with using an adder (2901) and a multiplier (2902) is produced an averaged value for each of the signals, SR (horizontal), SR (vertical), SR (lower right) and SR (upper right), to be outputted. The structure shown in the same figure is an example of constructing the mixer (2707) in the easiest manner, but the effect of improving the resolution also comes down to 1/4 for each direction, horizontal, vertical, lower right and upper right.

Fig. 30 shows a second example of the structures of the mixer (2707). In the same figure, the coefficient K (horizontal), the coefficient K (vertical), the coefficient K (lower right) and the coefficient K (upper right) are multiplied upon the signals, SR (horizontal), SR (vertical), SR (upper right) and SR (lower right), which are inputted into the mixer (2707), with using multipliers (3005), (3006), (3007) and (3008), respectively, and those signals are added in an adder (3009) to be outputted. The coefficient K (horizontal), the coefficient K (vertical), the coefficient K (lower right) and the coefficient K (upper right) are produced in coefficient determining units(3001), (3002), (3003) and '3004), respectively. Hereinafter, explanation will be made on the operations of those coefficient determining units (3001), (3002), (3003) and (3004).

The aliasing component removal units (2106), (2109), (2705) and (2706) shown in Fig. 27 generate the coefficients C0-C3 shown in Fig. 9, within the coefficient determining unit (109) shown in Fig. 1, upon basis of the phase difference "θH" (2102), the phase difference "θV" (2103), the phase difference "θH+θV" and the phase difference "-θH+θV", and thereby conducting the calculation for removing the aliasing components. In this instance, for the propose of prevention from becoming weak in noises or the like, due to the fact that the coefficients C1 and C3 comes to be unstable when "θH" (2102), "θV" (2103), "θH+θV" and "-θH+θV" are zero (0), or due to the fact that the coefficients C1 and C3 comes to be large when "θH" (2102), "θV" (2103), "θH+θV" and "-θH+θV" come close to zero (0), it is preferable to introduce the coefficient C4 (0≤C4≤1) shown in Fig. 13, thereby conducting an auxiliary pixel interpolation, as the structures shown in Fig. 11. Paradoxically speaking, there can be obtained the effect of improving the resolution when the value of coefficient C4 is 0.0, but that effect of improving the resolution comes to be small as the value of coefficient C4 comes close to 1.0. With using this characteristic, the coefficient "K" (horizontal) is determined within the coefficient determining unit (3001), so that the RS (horizontal) as the result of the horizontal resolution conversion comes to be weak, when the horizontal phase difference "θH" (2102) is in the vicinity of zero (0) (i.e., when the coefficient C4 (horizontal) is in the vicinity of 1.0), while the SR (horizontal) as the result of the horizontal resolution conversion comes to be strong, when the horizontal phase difference "θH" (2102) is not in the vicinity of zero (0) (i.e., when the coefficient C4 (horizontal) is in the vicinity of 0.0).

As an example of this, it is enough to make an equation, coefficient K (horizontal) = (1+C4 (horizontal)*3-C4 (vertical)-C4 (lower right)-4C (upper right))/4. In the similar manner, the coefficients K (vertical), K (lower right) and K (upper right) are determined within the coefficient determining units (3002), (3003) and (3004), respectively. In this instance, the coefficient K (upper right) is determined so as to satisfy; coefficient K (horizontal)+ coefficient K (vertical)+coefficient K (lower right)+ coefficient K (upper right)=1.0, for the coefficient K (horizontal), the coefficient K (vertical), the coefficient K (lower right) and the coefficient K (upper right), and SR (horizontal), SR (vertical), SR (lower right) and SR (upper right) are mixed.

Figs. 31 and 32 show a third operation and an example of the structures of the mixer (2707), respectively. Fig. 31 shows the 2-dimentsional frequency region of showing the horizontal frequency by "µ" and the vertical frequency by "ν", in the similar manner to that shown in Fig. 25. In Fig. 31, assuming that the horizontal sampling frequency of the original input picture is "µs" and that the vertical sampling frequency thereof is "νs", then an output of the resolution converting unit (4) shown in Fig. 27 comes to be a signal, within a region from "-µs" to "+µs" in the horizontal frequency "µ", and within a region from "-νs" to "+νs" in the vertical frequency "ν".

The component, upon which the effect due to the horizontal resolution conversion is large, is the component of the frequency regions in the vicinity of (µ, ν) = (+µs/2, +νs/2) and in the vicinity of (µ,ν)=(-µs/2,-νs/2), as shown in Fig. 31 (in particular, the components in the region of frequency µ>0, ν>0, including (µ,ν)=(+µs/2,+νs/2), and the region of frequency µ<0, ν<0, including (µ,ν)=(-µs/2,-νs/2)).

The component, upon which the effect due to the oblique (lower right) resolution conversion is large, is the component of the frequency regions in the vicinity of (µ,ν)=(+µs/2,-νs/2) and in the vicinity of (µ,ν)=(-µs/2,+νs/2) (inparticular, the components in the region of frequency µ>0, ν<0, including (µ, ν) = (+µS/2, -νs/2), and the region of frequency µ<0, ν>0, including (µ,ν)=(-µs/2,+νs/2)).

Accordingly, by extracting those frequency components (3101) and (3102) through the 2-dimensional filter, to be mixed up with the frequency components (2501) and (2502), it is possible to output the components, upon which the effect is large of improving the resolution, selectively.

Fig. 32 shows an example of the structures of the mixer (2707) for extracting the components, upon each of which the effect is large due to the horizontal/vertical/oblique (lower right) /oblique (upper right) resolution conversions. In the same figure, with using a 2-dimensional filter (3201), a component is extracted of the frequency region (3102), which has a large effect of improving the resolution upon the SR (lower right) inputted into the mixer (2707). In the similar manner, with using a 2-dimensional filter (3202), a component is extracted of the frequency region (2502), which has a large effect of improving the resolution upon the SR (upper right) inputted into the mixer (2707). Also, by means of the 2-dimensional filters (2601) and (2602) shown in Fig. 26, the components are extracted of the frequency regions, having large effects of improving the resolutions upon the SR (horizontal) and the SR (vertical), respectively. As a component other than the frequency regions (2501), (2502), (3101) and (3102), an averaged signal of the SR (horizontal), the SR (vertical), the SR (lower right) and the SR (upperright) isproducedwithusinganadder (3203) andamultiplier (3204), and with using a 2-dimensional filter (3205), there is extracted a component other than the respective pass bands of the 2-dimensional filters (2601), (2602), (3201) and (3202). Each output signal of the 2-dimensional filters (2601), (2602), (3201) and (3202) is added within the adder (3206), to be an output of the mixer (2707).

However, a numeral, which is surrounded by a circle among the 2 -dimensional filters (2601), (2602), (3202), (3203) and (3205) shown in the same figure, shows an examples of tap coefficient of the filter, respectively.

With the video signal processing apparatus according to the embodiment 9, which was explained in the above, it is possible to produce a high resolution video, upon which the high resolution can be also achieved in the oblique directions, in addition to the horizontal direction and the vertical direction thereof.

However, in accordance with the prior arts described in the Patent Document 1, the Patent Document 2 and the Non-Patent Document 1, it is also possible to provide an output, as a result of the 2-dimensional resolution conversion, by conducting a one-dimensional (e.g., horizontal/vertical/oblique(upper right) /oblique (upper left)) high resolution in the plural number of directions, such as, the horizontal direction and the vertical direction, etc. , with using three (3) frames, and thereby inputting the result of each of those into the mixer (2707) shown in Fig. 27. In this case, the signal processing circuit, such as, the frame memory and the motion estimation unit, etc., comes to be large in the scale thereof, comparing to the structures for conducting the 2-dimensional resolution conversion with using only two (2) frames, as is shown in Fig. 27; however, it is possible to make the scale of the signal processing circuit, such as, the frame memory and the motion estimation unit, etc., smaller than that of using at least seven (7) frames therein, as is described in the Patent Document 1, the Patent Document 2 or the Non-Patent Document 1.

Also, not restricting to the prior arts described in the Patent Document 1, the Patent Document 2 and the Non-Patent Document 1 mentioned above, with apply ing other con ventional high resolution technologies, it is possible to conduct the one-dimensional (e.g., horizontal/vertical/oblique(upper right)/oblique (upper left)) high resolution conversion in plural numbers of directions, such as, the horizontal direction and the vertical direction, etc., and each result thereof is outputted into the mixer (2707) shown in Fig. 27 to be mixed with; thereby outputting it as the result of 2-dimensional resolution conversion.

Also, in Fig. 27, the explanation was given on the example, by referring to the case of converting the resolution of the frame #1 with using a pair of the input signals, i.e., the frame #1 and the frame #2; however, other than this, it is also possible to obtain the final result of the resolution conversion of the frame #1, by converting the resolution of the frame #1, respectively, with using plural pairs, such as, the frame #1 and the frame #3, and the frame #1 and the frame #4, etc., and thereby combining or mixing the results of those. As the mixing method in this instance, it is possible to obtain an averaged value of the respective results, or to mix them corresponding to the value of the coefficient C4 (frame) for each frame, as was shown in Fig. 23 or Fig. 24. In this case, as the coefficient C4 (frame) may be used a MAX value (the value of not smaller one) of the coefficient C4 (horizontal) and the coefficient C4 (vertical) for each frame. Or, it is also possible to obtain the final result of the resolution conversation of the frame #1, by comparing the coefficients C4 (horizontal) and C4 (vertical) of all sets, for each pixel, and then by selecting the results of the resolution conversion obtained from the set, being smallest in the coefficient C4 (i.e. , the set being largest on the effect of improving the resolution), for each pixel.

With this, for example, upon basis of the frame #1, in case where the frame #2 is the frame prior to the frame #1, and the frame #3 is the future frame posterior to frame #1, each of the processing results is mixed with, in such a manner that the resolution conversion process is conducted with using the frame #1 and frame #2 if the subject changes from "motion" to "standstill" (end of motion), and the resolution conversion process is conducted with using the frame #1 and frame #3 if the object changes from "standstill" to "motion" (start of motion), therefore, it is possible to utilize the motion of the object and thereby to bring an effect of increasing the resolution at the most.

### <Embodiment 10>

Explanation will be made on a video signal processing method according to an embodiment 10 of the present invention, by referring to Fig. 33.

The embodiment 10 relates to the video signal processing method for achieving processing equivalent to the video signal processing in the video signal processing apparatus according to the embodiment 9, by the controller unit cooperating with the software. The video signal apparatus for conducting the video signal processing method according to the present embodiment is same to the video signal processing apparatus shown in Fig. 18, and therefore the explanation thereof will be omitted herein.

Fig. 33 shows an example of flowchart for showing the operations of the present invention. The flowchart starts from a step (3301), and conducts the horizontal, the vertical, the oblique (lower right) and the oblique (upper right) high-resolution conversions in steps (5-1), (5-2), (5-3) and (5-4), respectively. Herein, in each of the steps (5-1), (5-2), (5-3) and (5-4), it is enough to execute any one of the processing steps (5), which are shown in any of Figs. 14 to 16, in each of the directions, i.e., the horizontal, the vertical, the oblique (lower right) and the oblique (upper right) directions. Thus, it is enough to change the "frequency-phase" characteristics, such as, the π/2 phase shift (1407) and (1408) and the Hilbert transformer (1501), etc., corresponding to the respective directions, as is shown in Fig. 28, and also to process by replacing the phase difference "θ" with "θH", "(θH+θV)" and "(-θH+θV)", respectively. A result of each of the steps (5-1), (5-2), (5-3) and (5-4), as was explained by using any one of Figs. 14 to 16, is written into the respective frame buffers #3. In the following steps (3302-1), (3302-2), (3302-3) and (3302-4), all pixels of the 2-dimensional frame buffers #3 are produces by conducting the pixel interpolations in the vertical, the horizontal and the oblique directions, respectively, so that the number of pixels comes to the same pixel number in the horizontal/vertical directions of the frame to be outputted. In the following step (3303), the data of each of the frame buffers #3 are mixed, for each pixel, in accordance with the method explained by referring to Figs. 29, 30 and 32, to be outputted to an output frame buffer #4. However, in case when achieving the operations of the eighth or the ninth embodiment mentioned above by means of a software program, there is no necessity of the steps (5-3) and (5-4) for conducting the process in the oblique direction, and the steps for conduction the pixel interpolation for the results thereof (3302-3) and (3302-4). Also, as the mixing method of the step (3303), it is enough to mix the data in accordance with the method, which is explained by referring to Figs. 22, 23 and 26.

With the video signal processing apparatus according to the embodiment 10, which was explained in the above, it is possible to produce a high resolution video, upon which the high resolution can be also achieved in the oblique directions, in addition to the horizontal direction and the vertical direction thereof.

### <Embodiment 11>

Fig. 54 shows a video signal processing apparatus, according to an embodiment 11 of the present invention. The video signal processing apparatus, according to the present embodiment, comprises: an input unit or portion (1), into which a train of frames of moving picture is inputted, such as, the television broadcast signal, for example, a resolution converter unit or portion (8) for achieving high resolution, two (2) times in the horizontal direction and two (2) times in the vertical direction, respectively, with using four (4) pieces of frames inputted from this input portion (1), and further a display unit or portion (3) for displaying a picture thereon, upon basis of the frames, on which the high resolution is achieved in this resolution converter unit (8).In this resolution converter unit (8), the aliasing components in the 2-dimensional frequency area are removed from, by conducting the phase shifting in the horizontal direction, the vertical direction and the horizontal/vertical direction, respectively, upon each of the four (4) pieces of frames inputted, and thereby achieving the 2-dimensional high resolution. Hereinafter, explanation will be given on the details of the resolution converter unit (8).

In Fig. 54, firstly within position estimation portions or units (5406-2), (5406-3) and (5406-4), upon basis of a 2-dimensional sampling position of the pixel of the processing target on the frame #1 inputted from the input portion (1), the 2-dimensional estimation is conducted on the corresponding videos on the frame #2, the frame #3 and the frame #4, respectively, and thereby obtaining the horizontal phase differences θH2 (5406-2), θH3 (5406-3) and θH4 (5406-4), and the vertical phase differences θV2 (5406-2), θV3 (5406-3) and θV4 (54C6-4). Next, by means of horizontal/vertical up-raters (5401-1), (5401-2), (5401-3) and (5401-4) of a motion-compensate/up-rate portion or unit (5410), with using each information of the phase differences θH2 (5406-2), θH3 (5406-3) and θH4 (5406-4), and θV2 (5406-2), θV3 (5406-3) and θV4 (5406-4) mentioned above, the motion compensation is conducted on the frame #2, the frame #3 and the frame #4, so as to fit them to the position of the frame #1, and also the number of pixels of each frame is doubled in the horizontal and vertical directions, respectively; thereby achieving the high densification of four (4) times, in total. In a phase shifter portion or unit (5411), the phases of this high densification data are shifted by a certain or predetermined amount thereof, in the horizontal direction and the vertical direction, respectively, with using horizontal phase shifters (5403-1), (5403-2), (5403-3) and (5403-4),vertical phase shifters (5404-1), (5404-2), (5404-3) and (5404-4), and horizontal/vertical phase shifters (5405-1), (5405-2), (5405-3) and (5405-4). Herein, as a means for shifting the phase of data by the predetermined amount thereof, it is possible to apply the π/2 phase shifter, such as, a Hilbert converter, etc., for example. In an aliasing component removal portion or unit (5409), the aliasing components are cancelled or removed, respectively, in each of the horizontal/vertical directions, with using 16 pieces of the signals, in total, supplied from the phase shifter unit (5411) mentioned above, and 6 pieces of the phase signals, in total, supplied from a phase estimation portion or unit (5412), and thereby obtaining an output thereof. This output is supplied to the display portion 3. Further, the position estimation unit (5406-2), (5406-3) and (5406-4) can be achieved by applying the prior art mentioned above, as it is. The horizontal/vertical up-raters (5401-1), (5401-2), (5401-3) and (5401-4) can be obtained by extending the operations/structures of those shown in Figs. 5 and 6, 2-dimensionally, in the horizontal/vertical directions. Details thereof will be mentioned later, for each of the phase shifter unit (5411) and the aliasing component removal portion or unit (5409).

Fig. 55 shows an example of the structures of the hcrizontal/vertical phase shifters (5405-1), (5405-2), (5405-3) and (5405-4) . Since the phase of the video signal in the horizontal direction and that of the video signal in the vertical direction are independent from each other, the horizontal/vertical phase shifter (5405) can be achieved by connecting the vertical phase shifter (5404) and the vertical phase shifter (5403) in series, as shown in the same figure. Also, it is apparatus that the same operating can be obtained if disposing the vertical phase shifter (5403) in front of the vertical phase shifter (5404).

Figs. 56 (a) to 56 (h) show detailed operations of the phase shifterunit (5411) and the aliasing component removal unit (5409), respectively. Fig. 56(a) shows the 2-dimensional frequency area, wherein the horizontal frequency is indicated by "µ" and the vertical frequency by "υ", respectively. Assuming that the horizontal sampling frequency of an original input video is "µs", then it is well-known that the aliasing components are generated at the positions, (µ, υ)=(µs, 0), (µ, υ)=(0, υs) and (µ, υ) = (µs, υs), by using the signal in vicinity of an origin in Fig. 56(a) (i.e., (µ, υ)=(0, 0) as an original component). Further, though the aliasing components are also generated, at the positions symmetrical to those with respect to the origin (e. g. , (µ, υ) = (-µs, 0), (µ, υ)=(0, -υs) and (µ, υ)=(-µs, -υs)), however those are equivalents to the aliasing components at the positions, (µ, υ)=(µs, 0), (µ, υ)=(0, us) and (µ, υ)=(µs, υs), due to the symmetry of the frequencies. For achieving the high resolution, e.g., increasing the resolution up to two (2) times in the horizontal direction and 2 times in the vertical direction, within the resolution converter unit (8) shown in Fig. 54, it is enough to remove the aliasing components generating at the positions (µ, υ) = (µs, 0) , (µ, υ)=(0, υs) and (µ, υ) = (µs, υs), by using the signal in vicinity of an origin in Fig. 56(a) (i.e., (µ, υ) =(0, 0) shown in Fig. 56(a), after increasing the pixel number up to four (4) times by conducting the 2-times up-rating (inserting "0") upon them, respectively, in the motion-compensate/up-rate portion or unit (5410). Hereinafter, the operation thereof will be explained.

Fig. 56(b) shows the manners of a horizontal phase rotation and a vertical phase rotation for each component at the positions, (µ, υ)=(0, 0), (µ, υ) = (µs, 0), (µ, υ) = (0, υs) and (µ, υ) = (µs, υs). As is shown in Fig. 4, between the frames differing from each other in the sampling frequency thereof, there is generated no phase rotation of the original component, and only the aliasing component rotates the phase thereof, depending on the sampling phase difference. Then, by taking the fact that a component of phase crossing axis (e.g., an Im-axis) is generated in the horizontal, the vertical and horizontal/vertical directions by the phase shifter unit (5411) shown in Fig. 54, upon basis of the phase of the original component (i.e., a Re-axis) into the considering, as is shown in Fig. 56(b), it is possible to cancel the aliasing components, so as to extract only the original component, by changing only the value of the component (a total value of the signals after phase shifting for each), i.e., the horizontal Re-axis (=no phase rotation in the horizontal direction) and the vertical Im-axis of at (µ, υ)=(0, 0) (thus, #1) as the original component, into "1", while changing the values of other components (i.e., #2 to #16) into "0".

Fig. 56(c) shows a matrix operational expression for achieving the phase relationship shown in Fig. 56 (b) in the above. In the same figure, "M" is a matrix having 16×16 elements, and is an operation for indicating each phase rotation of the horizontal, the vertical, and the horizontal/vertical directions. Details of this matrix "M" will be mentioned later. Also, the left-hand side in the same figure shows "value" of Fig. 56(b), while C1ImIm to C4ImIm on the right-hand side thereof the coefficients to be multiplied onto each out put signal of the phase shifter unit (5411), within the aliasing component removal unit (5409) shown in Fig. 54. Thus, with the frame #1 shown in Fig. 54, a coefficient C1ReRe is multiplied on the output signal of the retardor (5402-1), a coefficient C1ImRe is on the output of the horizontal phase shifter (5403-1), a coefficient C1ReIm is on the output of the vertical phase shifter (5404-1), and a coefficient C1ImIm is on the output signal of the horizontal/vertical phase shifter (5405-1). Hereinafter, also in the similar manner, with the frame #2, a coefficient C2ReRe is multiplied on the output signal of the retardor (5402-2), a coefficient C2ImRe is on the output of the horizontal phase shifter (5403-2), a coefficient C2ReIm is on the output of the vertical phase shifter (5404-2), and a coefficient C2ImIm is on the output signal of the horizontal/vertical phase shifter (5405-2). With the frame #3, a coefficient C3ReRe is multiplied on the output signal of the retardor (5402-3), a coefficient C3ImRe is on the output of the horizontal phase shifter (5403-3), a coefficient C3ReIm is on the output of the vertical phase shifter (5404-3), and a coefficient C3ImIm is on the output signal of the horizontal/vertical phase shifter (5405-3). With the frame #4, a coefficient C4ReRe is multiplied on the output signal of the retardor (5402-4), a coefficient C4ImRe is on the output of the horizontal phase shifter (5403-4), a coefficient C4ReIm is on the output of the vertical phase shifter (5404-4), and a coefficient C4ImIm is on the output signal of the horizontal/vertical phase shifter (5405-4). By determining the coefficients C1ReRe to C4ImIm, so that the relationship shown in Fig. 56(c) can be always established, when adding all of 16 signals, in total, which are multiplied with the coefficients mentioned above, within the aliasing component removal unit (5409), it is possible to cancel the aliasing components therefrom, and extract only the original component.

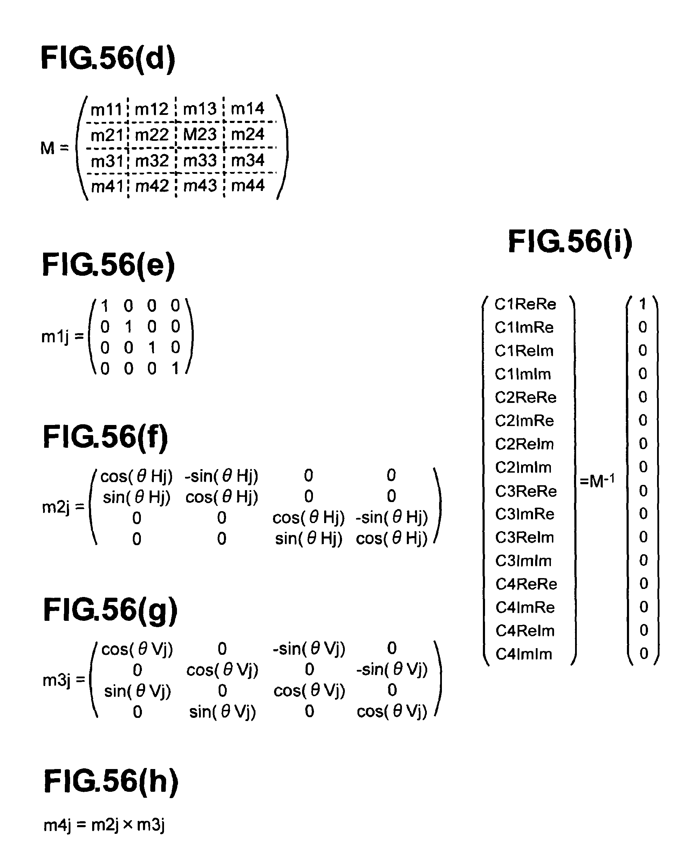

Fig. 56(d) shows the details of the matrix "M". The matrix "M" is the matrix having 16x16 elements, as was mentioned above, and it is constructed with partial matrixes, each having 4x4 elements, which can be expressed by mij (however, a line number "i" and a column number "j" are integers satisfying: 1≤i≤4 and 1≤j≤4). This partial matrix mij can be classified, as is shown by Figs. 56(e), 56(f), 56(g) and 56(h), corresponding to the line number "i".

Fig. 56(e) shows the respective elements (e.g., m11, m12, m13 and m14) of the partial matrix m1j, when the line number "i" is one (i=1) . This partial matrix m1j is an element functioning upon the component of (µ, υ)=(0, 0), and since no phase rotation in the horizontal/vertical directions, in spite of the sampling phase difference between the frames, therefore it comes to be a unit matrix (i.e., a matrix wherein all elements along a diagonal line falling in the right-hand side are "1" while the remaining elements are all "0").

Fig. 56(f) shows the respective elements (e.g., m21, m22, m23 and m24) of the partial matrix m2j, when the line number "i" is two (i=2). This partial matrix m2j is an element functioning upon the component of (µ, υ) = (µs, 0), and it is a rotation matrix for rotating the phase in the horizontal direction, corresponding to the horizontal phase difference θHj (however, "j" is an integer satisfying: 1≤j≤4). Thus, it is the rotation matrix for rotating the phase by θHj around the horizontal frequency axis, while combining #5 and #6, and #7 and #8 shown in Fig. 56(b), which are common with the vertical phase axis, into up pairs, respectively. However, when j=1, the horizontal phase difference θH1, though not shown in Fig. 54, can be deal with as θH1=0, by interpreting this to be the phase difference (=0) between the frame #1 (a reference) and the frame #1 (a target = the reference). Hereinafter, with the vertical phase difference θV1, it can be also deal with, in the similar manner, i.e., θV1=0.

Fig. 56(g) shows the respective elements (e.g., m31, m32, m33 and m34) of the partial matrix m3j, when the line number "i" is three (i=3). This partial matrix m3j is an element functioning upon the component of (µ, υ)=(0, υs), and it is a rotation matrix for rotating the phase in the horizontal direction, corresponding to the vertical phase difference θVj (however, "j" is an integer satisfying: 1≤j≤4). Thus, it is the rotation matrix for rotating the phase by θHj around the horizontal frequency axis, while combining #9 and #11, and #10 and #12 shown in Fig. 56(b), which are common with the vertical phase axis, into up pairs, respectively.

Fig. 56(h) shows the respective elements (e.g., m41, m42, m43 and m44) of the partial matrix m4j, when the line number "i" is four (i=4). This partial matrix m3j is an element functioning upon the component of (µ υ) = (µs, υs), and it is a rotation matrix for rotating the phase in both the horizontal direction and the vertical direction, corresponding to both of the horizontal phase difference θHj and the vertical phase difference θVj (however, "j" is an integer satisfying: 1≤j≤4). Thus, it is a multiplication between m2j and m3j mentioned above.

Seeing this from other viewpoint, if applying m1j, m2j and m3j as the rotation matrixes for rotating the phases in the horizontal direction and the vertical direction, as m4j does, and considering to set θHj=θVj=0 in case of m1j, θVj=0 in case of m2j, and θHj=0 in case of m3j, it comes to the partial matrix, being same to that explained in the above.

In this manner, the matrix "M" is determined upon basis of each sampling phase difference (θHj, θVj), and the 16 pieces of coefficients (C1ReRe to C4ImIm), in total thereof, are determined so that the equation shown in Fig. 56 (c) can be always established. In this instance, it is enough to determine the coefficients (C1ReRe to C41mlm) through the calculation shown in Fig. 56(i) while obtaining a reverse matrix "M⁻¹" to the matrix "M", in advance. As a method for obtaining the reverse matrix "M⁻¹", there are well-known the method of using a cofactor matrix, the method of using the sweeping method of Gauss-Jordan, and the method of calculation by dividing into triangular matrixes, etc., and therefore the illustration thereof will be omitted herein.

Fig. 57 shows an example of detailed structures of che aliasing component removal unit (5409) shown in Fig. 54. In the same figure, a coefficient determining portion or unit (5701) produces each of the coefficients (C1ReRe to C4ImIm), through the reverse matrix operation shown in Fig. 56(i), upon basis of the horizontal phase differences (θH2, θH3 and θH4) and the vertical phase differences (θV2, θV3 and θV4), which are outputted from the position estimation unit (5412). Those coefficients are multiplied with the signals of each frame, which are outputted from the phase shifter unit (5411), within a multiplexer (5702), and further all of them are adding in an adder (5703), and thereby obtaining an output signal of the aliasing component removal unit (5409) (i.e., an output signal of the resolution converter unit (8)). Further, since the horizontal phase differences (θH2, θH3 and θH4) and the vertical phase differences (θV2, θV3 and θV4) differ from in the value for each pixel on the input frame, in general, there is a necessity of conducting the reverse matrix operation mentioned above for each pixel. In this instance, the respective coefficients (C1ReRe to C4ImIm) may be produced, in advance, with using the horizontal phase differences (θH2, θH3 and θH4) and the vertical phase differences (θV2, θV3 and θV4) as the representative phase differences (such as, π/8 multiplied by an integer shown in Fig. 9(d), for example), so as to build up a table, with using a ROM (Read Only Memory), etc. This is well known as a table referencing method, in general, and therefore the illustration thereof will be omitted herein.

Fig. 58 shows other example of the structures of the aliasing component removal unit (5409) shown in Fig. 54. In the explanation given in the above, the coefficients (C1ReRe to C4ImIm) are determined through the operation shown in Fig. 56(i), while obtaining the reverse matrix "M⁻¹" to the matrix "M" in advance, when determining the 16 pieces of coefficients (C1ReRe to C4ImIm) so that the equation shown in Fig. 56 (c) can be always established; however, there is no such reverse matrix "M⁻¹" depending upon the value of the horizontal phase differences (θH2, θH3 and θH4) and the vertical phase differences (θV2, θV3 and θV4); i.e., there is a possibility that the coefficients (C1ReRe to C4ImIm) cannot be determined. On if there is reverse matrix "M⁻¹" or not can be determined, easily, on the way of operations of the method of using the cofactor matrix, the method of using the sweeping method of Gauss-Jordan, or the method of calculation by dividing into triangular matrixes, etc., when calculating out the reverse matrix "M⁻¹" in the coefficient determining unit (5701), and in case where there in no reverse matrix "M⁻¹", it is enough to exchange the output signal, so as to obtain the output with using the frame #1 and the frame #2, by means of the resolution converter unit (4) shown in Fig. 21, etc., mentioned above. Thus, with using the horizontal direction aliasing component removal unit (2108), the vertical direction aliasing component removal unit (5409), the pixel interpolation unit (2003) and (2007), which are shown in Fig. 58, it is enough to produce a resolution conversion result, upon basis of the frame #1 and the frame #2, which are outputted from the phase sifter unit (5411), and the horizontal phase difference θH2 (5407-2) and the vertical phase difference θV2 (5408-2), to be replaced with the result of the adder (5703) mentioned above, with using the exchanger (5801). However, it is also possible to build up in such a manner, that not changing in a binary manner with using the exchanger (5801), but the output of the adder (5703) and the output of the mixer (2009) are mixed continuously (i.e., weighting sum) ; for example, it may be so built up that a mixing ratio of the output of the mixer (2009) in the vicinity of pixel where there is no reverse matrix "M⁻¹".

With such the aliasing component removal process explained in the above, there can be achieved an effect of increasing the resolution in the 2-dimensional area shown in Fig. 56(a), in particular, from the center up to (µ, υ) = (µs, 0) in the horizontal direction. And, in the vertical direction, there can be achieve an effect of increasing the resolution from the center up to (µ, υ) = (µs, 0). Also, in the oblique direction, there can be achieved an effect of increasing the resolution from the center up to (µ, υ)=(µs, υs).

Herein, although the high resolution is achieved in the oblique direction, in addition to the horizontal direction and the vertical direction, also in the video signal processing apparatus and the video signal processing method according to the embodiment 7, however the effect of increasing the resolution in the oblique direction cannot reach to (µ, υ)= (µs, υs), as is shown in Fig. 31.

Therefore, the video signal processing apparatus shown in Fig. 54 has an effect of enabling an increase of resolution, in particular, in the oblique direction thereof, up to the high frequency component, comparing to the video signal processing apparatus according to the embodiment 7.

Next, explanation will be made on the difference in the operation, between the video signal processing apparatus according to the embodiment 11 of the present invention and the prior art, by referring to Fig. 60. In this Fig. 60, (a) shows the frame #1 (6001), the frame #2 (6002), the frame #3 (6003), the frame #4 (6004) and the frame #5 (6005), which are inputted into the resolution converter unit (8) shown in Fig. 54, while (b) of Fig. 60 shows the respective frames outputted from the resolution converter unit (8). In each of the frames, the object is shifted into the right-hand (or clockwise) by 1/4 pixel, so that the object turns one (1) round by four (4) frames, intentionally. This motion is continued in the similar manner, on the frame #5 and thereafter.

With the prior arts described in the Patent Document 1, the Patent Document 2 and the Non-Patent Document 1, as was mentioned above, because the aliasing comes from two (2) direction, i.e., the horizontal and vertical directions when conducting the high resolution upon the horizontal/vertical 2-dimensional input signal, then, if the band of the original signal is widen two (2) times in both the horizontal and vertical directions, three (3) aliasing components lie on one another, and for the purpose of canceling those, there are needed 2M+1=7 pieces of digital data (=video signals of 7 pieces of frames). Accordingly, when inputting such the signals turning one (1) turn by four (4) frames, as is shown in Fig. 34(a), it is impossible to obtain independent data even if selecting any one of the seven (7) frames, and therefore the solution comes into indefinite; i.e., unobtainable.

On the other hand, if applying the embodiment 11, the high resolution can be achieved by removing the aliasing components in the horizontal direction, the vertical direction and the horizontal/vertical direction, as is shown in (b) of Fig. 60, with using, for example, neighboringfour (4) frames (the frame #1 (6001), the frame #2 (6002), the frame #3 (6003) and the frame #4 (6004)). Thus, with using the input video shown in (a) of Fig. 60 as a test pattern, it is possible to confirm the operation condition of the present embodiment. With using a CZP (circular Zone Plate), which is well know, in general, as a design of this test pattern, an effect of the resolution conversion can be seen, directly, on the display unit (3) . Thus, if moving the circular Zone Plate one (1) turn by four (4) frames, as is shown in (a) of Fig. 60, it is possible to confirm an effect of improving the resolution, while always displaying the video, the resolution of which is increased in the horizontal direction and in the vertical direction.

As was mentioned above, within the video signal processing apparatus according to the embodiment 11, plural kinds of phase shifts, differing in the direction thereof (e.g., the horizontal direction, the vertical direction and the horizontal/vertical direction), are conducted upon each of the video signals of four (4) pieces of input video frames, and thereby producing 16 pieces of signals from the video signals of the 4 pieces of input video frames. Herein, upon basis of the phase differences among the 4 pieces of input video frames, for those 16 pieces of signals, the coefficient is calculated for each pixel, so as to compose those 16 pieces of signals while canceling the aliasing components of thereof. For each of the pixels of the video to be produced, a sum is calculated upon the products, each being obtained through multiplying the pixel value of the corresponding pixel owned by each one of those 16 pieces of signals by each coefficient, respectively, and thereby producing the pixel values of a new high-resolution video.

With this, the video signal processing apparatus, according to the embodiment 11, is able to produce the high-resolution video, upon which the high resolution is achieved also in the lower right direction and the upper right direction, in addition to the horizontal direction and the vertical direction.

Also, the effect of improving the resolution, with the video signal processing apparatus according to the embodiment 11, in particular, in the oblique direction, is enable an increase of the resolution up to the frequency components higher than that can achieved by the video signal processing apparatus according to the embodiment 7; i.e., it is possible to produce the high resolution video being higher in the picture quality.

### <Embodiment 12>

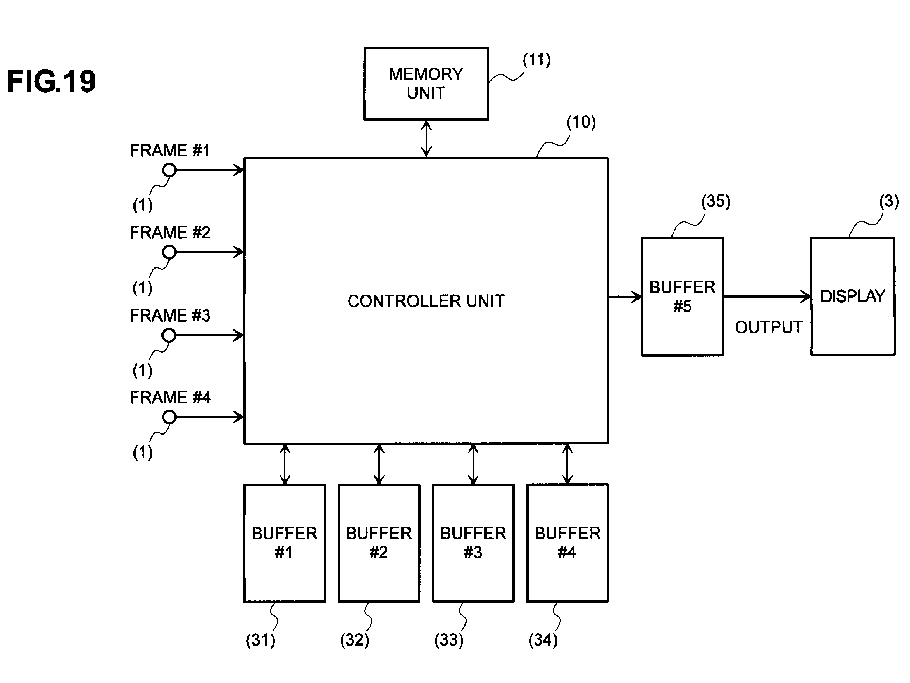

Explanation will be made on a video signal processing method according to an embodiment 12, by referring to Figs. 59 and 19 attached herewith.

The embodiment 12 relates to a video signal processing method for achieving the processing, being equivalent to the video signal processing in the video signal processing apparatus according to the embodiment 11, by means of a controller unit cooperating with software.

Herein, explanation will be made on the video signal processing apparatus for achieving the video signal processing method according to the present embodiment, by referring to Fig. 19.

The video signal processing apparatus shown in Fig. 19 comprises an input portion (1), to which a video signal is inputted, such as, a television broadcast signal, etc., for example, a memory portion (11) for memorizing software therein, for processing the signal inputted from the input portion (1), a controller portion (10) for conducting the video signal processing upon the signal inputted from the input portion (1) cooperating with the software memorized in the memory portion (11), a frame buffer #1 (31), a frame buffer #2 (32), a frame buffer #3 (33) and a frame buffer #4 (34), each to be used as a buffer by the controller unit (10) in the processing of that video signal, and a buffer #5 (35) for frame buffering the signal after video signal processing, to be outputted from the controller portion (10) to an output portion (3) .

Herein, the number of the input portions (1) provided on the video signal processing apparatus shown in Fig. 19 is four (4), being equal to the number of frames to be used in the video processing, but may be only one (1) of the input portion (1) for inputting the four (4) frames, continuously or in series.

Also, the frame buffer #1(31), the frame buffer #2 (32), frame buffer #3 (33) and a frame buffer #4 (34) for use of the memory butter, and also the memory portion (11) for memorizing the software therein, may be constructed with using the individual chips thereof, respectively, or with using one (1) piece of memory chiporaplural number of memory chips, while using i t/themdividing each data address thereof.

In the present embodiment, on the video signal inputted from the input portion (1), the controller portion (10) conducts the video signal processing in cooperation with the software memorized in the memory portion (11), and outputs it to the display portion (3). The details of that video signal processing will be explained by referring to Fig. 59.

The flowchart shown in Fig. 59 starts from a step (5901), and the video data of each of the frames are up-rated in both the horizontal and vertical directions up to two (2) times, respectively, insteps (5902-1), (5902-2), (5902-3) and (5902-4). Thus, in the step (5902-1) is up-rated the video data of the frame #1 to be written into the frame buffer #1, in the step (5902-2) is up-rated the video data of the frame #2 to be written into the frame buffer #2, in the step (5902-3) is up-rated the video data of the frame #3 to be written into the frame buffer #3, and in the step (5902-4) is up-rated the video data of the frame #4 to be written into the frame buffer #4. Herein, the up-rating can be achieved by writing data for every second pixel after once clearing values of each of the frame buffers to zero (0).

Next, in a step (5903), the first pixel (for example, the pixel at the upper left) of the frame buffer #1 is set to be the processing target, and then the processing is looped until the processing is completed upon all the pixel data with respect to the frame buffer #1.

In a step (5904-2), estimation is made on a position of the corresponding pixel within the frame buffer #2, upon basis of the target pixel of the frame buffer #1, and thereby outputting the horizontal phase difference θH2 and the vertical phase difference θV2. In the similar manner, in a step (5904-3), estimation is made on a position of the corresponding pixel within the frame buffer #3, upon basis of the target pixel of the frame buffer #1, and thereby outputting the horizontal phase difference θH3 and the vertical phase difference θV3. Also, in a step (5904-4), estimation is made on a position of the corresponding pixel within the frame buffer #4, upon basis of the target pixel of the frame buffer #1, and thereby outputting the horizontal phase difference θH4 and the vertical phase difference θV4. In this instance, as the method for estimating the position of the corresponding pixel can be applied the prior art mentioned above, as it is.

In a step (5905-2), upon basis of the horizontal phase difference θH2 and the vertical phase difference θV2 obtained in the step ((5904-2), motion compensation is conducted upon the pixels in the vicinity of the corresponding pixel within the frame buffer #2 . The operation of this motion compensation can be achieved by conducting the operation explained by referring to Figs. 5 and 6, in the horizontal direction and the vertical direction, respectively. In the similar manner, in a step (5905-3), upon basis of the horizontal phase difference θH3 and the vertical phase difference θV3 obtained in the step ((5904-3), motion compensation is conducted upon the pixels in the vicinity of the corresponding pixel within the frame buffer #3. Also, in a step (5905-4), upon basis of the horizontal phase difference θH4 and the vertical phase difference θV4 obtained in the step ((5904-4), motion compensation is conducted upon the pixels in the vicinity of the corresponding pixel within the frame buffer #4.

Following to the above, in a step (5913), shifting of the horizontal phase by a predetermined amount is made upon the frame buffer #1, and the frame buffer #2, the frame buffer #3 and the frame buffer #4, on which the motion compensation is made, in steps (5906-1), (5906-2), (5906-3) and (5905-4), and also in steps (5907-1), (5907-2), (5907-3) and (5907-4), shifting is made of the vertical phase by a predetermined amount. Also, on the results of the (5907-1), (5907-2), (5907-3) and (5907-4), further in steps (5908-1), (5908-2), (5908-3) and (5908-4), the horizontal phase is shifted by a predetermined amount; thereby shifting both the horizontal and vertical phases by a predetermined amount. Thus, the pixel data within each of the frame buffers are shifted by π/2 phase in the horizontal direction and the vertical direction.

Following to the above, in a step (5909), the pixel data of the frame buffers #1, #2, #3 and #4 are removed from the aliasing components thereof, by determining the each of the 16 pieces of coefficients (C1ReRe to C4ImIm), in total, in accordance with the method shown in Figs. 56(a) to 56(i) upon basis of the horizontal phase differences (θH2, θH3 and θH3) and the vertical phase differences (θV2, θV3 and θV4), and by adding multiplications between each of outputs of a step (5913) and each of each of the coefficients (i.e., weighted addition), thereby to be outputted to a frame buffer #5. The operation of removing the aliasing component is same to that explained by referring to Fig. 57 or 58 in the above.

Following to the above, in a step (5910), determination is made on whether the processing is completed or not on all pixels of the frame buffer #1. If determining that it is not completed, after setting the next pixel (for example, the pixel at the right-hand neighbor) as the processing target in a step (5911), the process turns back to those in the steps (5904-2), (5904-3) and (5904-4) and thereafter. On the other hand, if determining that it is completed, the process is ended in a step (5912).

With such the processing as was mentioned above, it is possible to output a high-resolution signal to the frame buffer #5 with using the pixel data of the frame buffer #1, the frame buffer #2, the frame buffer #3 and the frame buffer #4. In case when applying to the moving picture, it is enough to repeat the processes, for each frame, starting from the step (5901) and reaching to the step (5912).

However, in Figs. 54, 57, 58 and 59, the explanation was made that the number of pieces of the frames to be inputted is four (4), but it should not be limited to that, according to the present invention, and it is also possible to input "n" pieces of frames (however, "n" is an integer equal to four (4) or larger than that), to be used by selecting four (4) pieces of frames, being appropriate for the resolution conversion process mentioned above, among of those. For example, when outputting the reverse matrix operations shown in Fig. 56(i), it is also possible to adopt such structures that, the four (4) pieces of frames are selected to be applied into the resolution conversion process among the "n" pieces of frames, to be exchanged for each pixel or each area made up with a plural number of pixels, for the purpose of lessen the number of pixels, on which no reverse matrix "M⁻¹" exists, as small as possible.

Accordingly, the video signal processing method according to the embodiment 12 has an effect, in particular, in the oblique direction, to enable a further increase of the resolution up to the frequency components, higher than that obtainable by the video signal processing method according to the embodiment 10. The details of that effect are same to that of the video processing apparatus shown in Fig. 54, which was explained in the embodiment 11, and therefore the explanation thereof will be omitted herein.

As was explained in the above, with the video signal processing method according to the embodiment 12, four (4) signals are produced from each video signal, respectively, by conducting the phase shifting of plural kinds differing in the direction thereof (the horizontal direction, the vertical direction and the horizontal/vertical direction) upon each of the four (4) pieces input video frames. With this, sixteen (16) signals are produced from each video signal of four (4) pieces of the input video frames. Herein, upon the basis of the phase difference of four (4) pieces of the input video frames, the coefficient is calculated for each signal, so as to compose those sixteen (16) signals while canceling the aliasing components thereof, for each of that sixteen (16) signals. For each of the pixels of the vide produced, a sum is calculated upon products of the pixel value, which is owned by each of the sixteen signals, being multiplied by each coefficient, respectively, for each of the pixel of video produced, and thereby producing the pixel values of a new high resolution video.

With this, the video signal processing apparatus, according to the embodiment 12, is able to produce the high-resolution video, upon which the high resolution is achieved also in the lower right direction and the upper right direction, in addition to the horizontal direction and the vertical direction.

Also, the effect of improving the resolution, with the video signal processing apparatus according to the embodiment 12, is to enable an increase of the resolution up to the high frequency components, in particular, in the oblique direction thereof, comparing to the video signal processing method according to the embodiment 10; i.e., it is possible to produce the high resolution video, being higher in the picture quality thereof.

Further, with the video signal processing apparatus or the video signal processing method according to the embodiments 1 through 12, the explanation was made by referring to the case of increasing the pixel number up to two (2) times while increasing the resolution of the video, however it is also possible to increase the pixel numbers up to two (2) times, four (4) times, eight (8) times, (i.e., "n^{th}" power of 2), for example, by functioning this video signal processing apparatus or the video signal processing method, by a plural number of times or in a multistage-like manner. Thus, after increasing the pixel number up to two (2) times, by conducting the signal processing with using two (2) pieces of input video frames, to be an intermediate video frame, and further by conducting the signal processing as a new input video frame with using two (2) pieces of the intermediate frames, it is possible to obtain an output video frame, increasing the pixel number thereof further up to two (2) times thereof. In this instance, comparing to the input video frame, it is possible to obtain the output video frame having four (4) times of the pixel number. In the similar manner, if repeating the signal processing three (3) times, in total thereof, the pixel number of the output video frame comes to be eight (8) times, comparing to that of the input video frame. In this instance, also the number of pieces of the input video frame necessary for obtaining one (1) piece of the output video frame becomes two (2) times, four (4) times, eight (8) times, (i.e., "n^{th}" power of 2).

Further, regarding the final output video, it is also possible to output it with the pixel number other than two (2) times, four (4) times, eight (8) times, (i.e., "n^{th}" power of 2) mentioned above, by conducting a general resolution conversion process after the video processing mentioned above.

### <Embodiment 13>

Fig. 35 shows a video displaying apparatus, according to an embodiment 13 of the present invention. The video displaying apparatus according to the present embodiment is that of the structures, for conducting the video signal processing, which is described in either the embodiment 7 or 8 mentioned above.

In the same figure, the video displaying apparatus 3500 comprises an input unit 3501 for inputting the broadcast wave, including a television signal or the like, for example, and/or the broadcast signal or the picture contents or the video contents, etc., through a network, etc., a recording/reproduction portion or unit 3502 for recording or reproducing the contents, which are inputted from the input unit 3501, a contents accumulator portion or unit 3503, into which the recording/reproduction unit 3502 records the contents, a video signal processor portion or unit 3504 for conducting video signal processing, which is described in any one of the embodiments, i.e., the first to the eleventh embodiments, upon the picture signal or the video signal that the recording/reproduction unit 3502 reproduces, a display portion or unit 3505 for displaying the picture signal or the video signal thereon, which is processed within the video signal processor unit 3504, an audio output portion or unit 3506 for outputting an audio signal, which the recording/reproduction unit 3502 reproduces, a controller portion or unit 3507 for controlling the respective units of the video display apparatus 3500, and a user interface portion or unit 3508 for a user to conduct operations of the video display apparatus 3500, etc.

Detailed operations of the video signal processor unit 3504 are as described in the embodiment 7 or 8, and therefore the explanation thereof will be omitted herein.

With provision of the video signal processor unit 3504 for conducting the video signal process, which is described in either embodiment 7 or 8, the first to the eleventh embodiments, in the video display apparatus 3500, it is possible to display the picture signal or the video signal, which is inputted into the input unit 3501, to be the picture signal or the video signal of being more high in the resolution and high-quality. Therefore, it is possible to achieve a display of high-quality and high-definition while achieving the high resolution of the reproduced signal, even in the case when a signal of resolution lower than the resolution of a display device of the display unit 3505 is inputted from the input unit 3501.

Also, when reproducing the picture contents or the video contents, which are accumulated in the contents accumulator unit 3503, it is possible to display it on the display unit 3505 by converting it into the picture signal or the video signal, which is high in the resolution and high in the quality thereof.

Also, by conducting the video processing of the video signal processor unit 3504 after reproduction of the picture contents or the video contents, which are accumulated in the contents accumulator unit 3503, the data accumulated within the contents accumulator unit 3503 is relatively low in the resolution, comparing to that resolution displayed on the display unit 3505. Therefore, there can be obtained an effect of accumulating the data of contents to be small in the volume thereof, relatively.

Also, with containing the video signal processor unit 3504 into the recording/reproducing unit 3502, it is possible to conduct the video signal processing mentioned above when recording. In this case, there is no necessity of conducting the video signal processing mentioned above when reproducing, there can be obtained an effect of lowering a process load when reproducing.

Herein, although the explanation was made that the video signal processing mentioned above is conducted within the video signal processor unit 3504, but it may be achieved by means of the controller unit 3507 and the software. In this case, it is enough to conduct the video signal processing with the method, which is described in any one of the embodiments, i.e. , the first to the eleventh embodiments.

In the present embodiment, when recording, it is enough for the recording/reproducing unit 3502 to record the contents, such as, the picture or the like, which is inputted from the input unit 3501, into the contents accumulator unit 3503, after conducting the coding thereon, depending on the condition thereof.

Also, in the present embodiment, it is enough for the recording/reproducing unit 3502 to reproduce the contents, such as, the picture or the like, which is inputted from the input unit 3501, by conducting the decoding thereon, if the contents are under the condition of being coded.

Also, in the present embodiment, it is not always necessary to provide the contents accumulator unit 3503. In this case, the contents accumulator unit 3503 does not conduct the recording, but it may conduct reproduction of the contents, such as, the picture or the like, which is inputted from the input unit 3501.

In this case, it is also possible to obtain an effect of displaying the picture signal or the video signal, which is inputted into the input unit 3501, to be the high-quality picture signal or video signal, with higher resolution.

Also, the video display apparatus 3500 may be, for example, a plasma display, or a liquid crystal television, or a CRT tube or a projector, or it may be an apparatus applying other device therein. In the similar manner, the display unit 3505 may be, for example, a plasma display module, or a LCD module, or a device for use of the projector. Also, the contents accumulator unit 3503 may be, for example, a hard disk drive, or a flash memory, or a removable media disk drive. The audio output unit 3506 may be, for example, speakers, etc. Also, the input unit 3501 may be that having a tuner for receiving the broadcast wave, or that having a LAN connector fcr connecting with the network, or that having a USB connector . Further, it may be that having terminals for digital inputting of the picture signal and the audio signal, or may be that having analog input terminals, such as, composite terminals and/or component terminals, for example. Or, it may be a receiver portion or unit for transmitting data in a wireless manner.

With the video signal processing apparatus according to the embodiment 13, which was explained in the above, two (2) signals are produced from the each video signal, respectively, by conducting the phase shifting on the each video signal of two (2) pieces of the input video frames, which are included in the input picture signal or the input video signal. With this, four (4) signals can be produced from the two (2) pieces of the input video frames. Herein, upon basis of the phase difference between the two (2) pieces of the input video frames, the coefficient is calculated out, respectively, for composing those four (4) signals while canceling the aliasing components thereof, for each pixel, for each one of that four (4) signals. For each pixel of the video to be produced, a sum is calculated upon products of the pixel values of the corresponding pixels owned by each signal of the four (4) signals mentioned above, each being multiplied by each coefficient, respectively, and thereby producing pixel values of a new high resolution video. With conducting this upon each of the pixels of the video to be produced, it is possible to produce a video achieving high-resolution in one-dimensional direction more than the input video frame.

With conducting this upon the horizontal direction and the vertical direction, respectively, it is possible to produce a video achieving high resolution in the horizontal direction and a video achieving high resolution in the vertical direction. Upon that video achieving high resolution in the horizontal direction and that video achieving high resolution in the vertical direction is conducted the up-rating process in the vertical direction and the horizontal direction, respectively, and thereafter both are combined with or mixed up.

With this, it is possible to produce a high resolution video achieving the high resolution in both the vertical direction and the horizontal direction, from the each video signal of the two (2) pieces of input video frames, which are included in the input picture signal or the input video signal. Thus, 2-dimensional high-resolution video can be produced, and this can be displayed on a display portion or unit.

Also, with the video signal processing apparatus according to the embodiment 13, since two (2) pieces of input video frames are used, therefore it is possible to achieve the high resolution display with a lesser amount of necessity processes. With this, it is possible to achieve the video displaying apparatus, for displaying the picture or the video on the display unit, being high in the resolution thereof in both directions, i.e., the horizontal direction and the verticaldirection,withlessaliasing components therein.

### <Embedment 14>

The video signal displaying apparatus, according to an embodiment 14, is that replacing the video signal processing unit 3504 shown in Fig. 35, with the video signal processing apparatus described in the embodiment 9, within the video displaying apparatus according to the embodiment 13. Other elements or structures thereof are same to those of the video displaying apparatus according to the embodiment 13, and therefore the explanation thereof will be omitted herein.

Also, the detailed operations of the video signal processing unit 3504 are as described in the embodiment 9, and therefore the explanation thereof will be omitted herein.

With the video displaying apparatus according to the embodiment 14, it is possible to produce the high resolution video, upon which the high resolution is achieved in the horizontal direction, the vertical direction and the oblique direction, than the input picture or the input video, with using two (2) pieces of input video frames, which are included in the input picture signal or the input video signal. Also, it is possible to achieve the video displaying apparatus for displaying this on the display unit thereof.

### <Embodiment 15>

The video signal displaying apparatus, according to an embodiment 14, is that replacing the video signal processing unit 3504 shown in Fig. 35, with the video signal processing apparatus described in the embodiment 11, within the video displaying apparatus according to the embodiment 13. Other elements or structures thereof are same to those of the video displaying apparatus according to the embodiment 13, and therefore the explanation thereof will be omitted herein.

Also, the detailed operations of the video signal processing unit 3504 are as described in the embodiment 11, and therefore the explanation thereof will be omitted herein.

With the video displaying apparatus according to the embodiment 14, it is possible to produce the high resolution video, upon which the high resolution is achieved in the horizontal direction, the vertical direction and the oblique direction, than the input picture or the input video, with using four (4) pieces of input video frames, which are included in the input picture signal or the input video signal. Also, it is possible to achieve the video displaying apparatus for displaying this on the display unit thereof.

Also, the effect of the video displaying apparatus, according to the embodiment 15, is to enable an increase of the resolution up to the high frequency components, in particular, in the oblique direction thereof, comparing to the video displaying apparatus according to the embodiment 14; i.e., it is possible to display the high resolution video being higher in the picture quality thereof.

### <Embodiment 16>

The video signal displaying apparatus, according to an embodiment 16, is that replacing the video signal processing unit 3504 shown in Fig. 35, with the video signal processing apparatus described in one embodiment among the embodiment 11, the embodiment 3 and the embodiment 5, within the video displaying apparatus according to the embodiment 13. Other elements or structures thereof are same to those of the video displaying apparatus according to the embodiment 13, and therefore the explanation thereof will be omitted herein.

Also, the detailed operations of the video signal processing unit 3504 are as described in the embodiment 1, the embodiment 3 or the embodiment 5, and therefore the explanation thereof will be omitted herein.

With the video displaying apparatus according to the embodiment 16, it is possible to produce the high resolution video, upon which the high resolution is achieved in the one-dimensional direction comparing to the input picture signal or the input video signal, with using two (2) pieces of input video frames, which are included in the input picture signal or the input video signal, and thereby to achieve the video displaying apparatus for displaying it on the display unit thereof.

### <Embodiment 17>

Fig. 36 shows a recording/reproducing apparatus, according to an embodiment 17 of the present invention. The recording/reproducing apparatus according to the present embodiment is that having the structures for conducing the video signal processing, which is described in either the embodiment 7 or the embodiment 8 mentioned above.

In the same figure, the recording/reproducing apparatus 3600 comprises the an input portion or unit 3501 for inputting the broadcast wave, including a television signal or the like, for example, and/or the broadcast signal or the picture contents or the video contents, etc., through a network, etc., the recording/reproduction unit 3502 for recording or reproducing the contents, which are inputted from the input unit 3501, the contents accumulator unit 3503, into which the recording/reproduction unit 3502 records the contents, the video signal processor unit 3504 for conducting video signal processing, which is described in any one of the embodiments, i.e., the first to the eleventh embodiments, upon the picture signal or the video signal that the recording/reproduction unit 3502 reproduces, a video/picture output portion or unit 3605 for outputting the picture signal or the video signal, which is processed within the video signal processor unit 3504, to other apparatus(es) or device(s), etc., an audio output portion or unit 3606 for outputting the audio signal, which the recording/reproducing unit 3502 reproduces, to other apparatus(es) or device(s), etc., and a user interface portion or unit 3508 for a user to conduct operations of the recording/reproducing apparatus 3600, etc.

With provision of the video signal processor unit 3504 for conducting the video signal process, which is described in either one of the embodiments, i.e., the embodiment 7 or the embodiment 8, in the recording/reproducing apparatus 3600, it is possible to output the picture signal or the video signal, which is inputted into the input unit 3501, to be the picture signal or the video signal of being more high in the resolution and high-quality, to other apparatus(es) or device(s). Therefore, it is possible to achieve a high-quality and high-resolution signal converter apparatus, preferably, for converting the picture signal or the video signal of low resolution into the picture signal or the video signal of high-quality and high-definition while achieving the high resolution thereof.

Also, when reproducing the picture contents or the video contents, which are accumulated in the contents accumulator unit 3503, it is possible to output it to other apparatus(es) or device(s), with converting it into the picture signal or the video signal, which is high in the resolution and high in the quality thereof.

Therefore, it is possible to achieve the recording/reproducing apparatus, preferably, for outputting the picture signal or the video signal after converting it into that having the high picture quality and high definition with achieving the high resolution when reproducing/outputting, while inputting the picture signal or the video signal of low resolution for accumulating therein.

Also, by conducting the video processing of the video signal processor unit 3504 after reproduction of the picture contents or the video contents, which are accumulated in the contents accumulator unit 3503, the data accumulated within the contents accumulator unit 3503 is relatively low in the resolution, comparing to that resolution displayed on the display unit 3505. Therefore, there can be obtained an effect of accumulating the data of contents to be small in the volume thereof, relatively.

Also, with containing the video signal processor unit 3504 into the recording/reproducing unit 3502, it is possible to conduct the video signal processing mentioned above when recording. In this case, there is no necessity of conducting the video signal processing mentioned above when reproducing, there can be obtained an effect of lowering a process load when reproducing.

Herein, although the explanation was made that the video signal processing mentioned above is conducted within the video signal processor unit 3504, but it may be achieved by means of the controller unit 3507 and the software. In this case, it is enough to conduct the video signal processing with the method, which is described in either one of the embodiments, i.e., the embodiment 7 or the embodiment 8.

In the present embodiment, when recording, it is enough for the recording/reproducing unit 3502 to record the contents, such as, the picture or the like, which is inputted from the input unit 3501, into the contents accumulator unit 3503, after conducting the coding thereon, depending on the condition thereof.

Also, in the present embodiment, it is enough for the recording/reproducing unit 3502 to reproduce the contents, such as, the picture or the like, which is inputted from the input unit 3501, by conducting the decoding thereon, if the contents are under the condition of being coded.

Also, the video/picture output unit 3605 according to the present embodiment may be formed with the audio output unit 3606 in one body. In this case, there may be applied a connector configuration for outputting the picture signal and the audio signal on one piece of a cable.

Also, the recording/reproducing apparatus 3600 may be, for example, a HDD recorder, a DVD recorder, or an apparatus adapting other memory apparatus therein. In the similar manner, the contents accumulator unit 3503 may be, for example, a hard disk drive, or a flash memory, or a removable media disk drive.

Also, the input unit 3501 may be that having a tuner for receiving the broadcast wave, or that having a LAN connector for connect i ng with the network, or that having a USB connector. Further, it may be that having terminals for digital inputting of the picture signal and the audio signal, or may be that having analog input terminals, suchas, composite terminals and/or component terminals, for example . Or, it maybe a receiver portion or unit for transmitting data in a wireless manner.

Also, the video/picture output unit 3605 may be equipped with a terminal for outputting the digital picture signal thereon, or equipped with a composite terminal or a component terminal, for outputting an analog signal thereon. Or, it may be equipped with a LAN connector for connecting with the network, or may be equipped with a USB cable. Further, it may be a transmitter portion or unit for transmitting data in a wireless manner. In relation to the audio output unit 3606, it is also similar to the video/picture output unit 3605.

Further, the input unit 3501 may comprises an image pickup optical system and a light-receiving element therein. In this instance, the recording/reproducing apparatus 3600 can be applied into, such as, a digital camera, a video camera, an observation camera (or an observation camera system), etc., for example. In this case, the input unit 3501 takes a picture of a target of photographing on the light-receiving element through the image pickup optical system, and the video data or the picture data may be produced upon basis of the signal outputted from the light-receiving element, to be outputted to the recording/reproducing unit 3502.

When the recording/reproducing apparatus 3600 is applied into the digital camera, it is possible to obtain one (1) piece of high-quality picture with high-resolution, by recording a plural number of videos, differing in time sequence, by one (1) time of photographing, and thereafter conducting the video signal processing of the video signal processor unit 3504, upon the plural number of video data. However, the video signal processing of the video signal processor unit 3504 may be conducted upon the video to be recorded into the contents accumulator unit 3503, when outputting the data from the digital camera. Or, the video signal processing of the video signal processor unit 3504 may be conducted before recording the data into the contents accumulator unit 3503, by unifying recording/reproducing unit 3502 and the video signal processor unit 3504 as a unit, or so on. In this instance, it is enough to store only an enlarged or expanded video to be treated by the user, finally, in the contents accumulator unit 3503, and therefore a management comes to be easy when the user treats the video data later.

With the digital camera explained in the above, it is possible to obtain the video data of high picture quality, having the resolution exceeding the resolution of a light or photo receiving element(s) of that digital camera.

Also, when the recording/reproducing apparatus 3600 is applied into the video camera, for example, the picture being photographed on the light-receiving element through the image pickup optical system of the input unit 3501 may be outputted to the recording/reproducing unit 3502, in the form of the picture data. The recording/reproducing unit 3502 may record the video data into the contents accumulator unit 3503, and the video signal processor unit 3504 may produce the picture data of high resolution, from the video data recorded. With doing this, it is possible to obtain the high-quality picture data, which has the resolution exceeding the resolution power of the light-receiving element of the video camera. And in this instance, the video signal processor unit 3504 may produce a one (1) piece of still picture data, with using the data of the plural number of frames contained within the picture data recorded. With doing so, it is possible to obtain a one (1) piece of video data of high-quality from the picture data. Or, in the similar manner to the case of the digital camera mentioned above, the video processing of the video signal processor unit 3504 may be conducted before recording the picture data into the contents accumulator unit 3503, or after recording thereof.

With such the video camera as was mentioned above, it is possible to obtain the high-quality picture data, having the resolution exceeding the resolution power of the light-receiving element of the video camera, and/or the high-quality still video data, with using the picture data photographed.

Also when the recording/reproducing apparatus 3600 is applied into the observation camera (or the observation camera system), for example, in the similar manner to the case of the video camera mentioned above, it is possible to obtain the high-quality picture data, having the resolution exceeding the resolution power of the light-receiving element of the observation camera, and/or the high-quality still video data, with using the picture data photographed. In this instance, for example, even in case where the input unit 3501, which has the image pickup optical system and the light-receiving element therein, is separated from the recording/reproducing unit 3502 in the distance there between, and they are connected with each other through a network cable or the like, the picture data can be transmitted in the form of low resolution until the recording/reproducing unit 3502, and thereafter, the high-resolution can be obtained through the video signal processing within the video signal processor unit 3504. With this, it is possible to obtain the picture data of high-resolution, while using a band area of the transmission network for transmitting data from the input unit 3501 having the image pickup optical system and the light-receiving element therein.

With the video displaying apparatuses according to the embodiments 13 through 16 and the recording/reproducing apparatus according to the present embodiment, it is possible to obtain another embodiment of the present invention, by unifying or combining the operations and the structures of both of them. In this case, it is possible to display the picture signal or the video signal, upon which the video signal processing mentioned above was conducted, or to output it to other apparatus(es) or device (s) ; i.e., it can be used as any one of the display apparatus, the recording/reproducing apparatus, or the output apparatus, so that it is superior in the usability thereof.

With the video signal processing apparatus according to the embodiment 17, which was explained in the above, two (2) signals are produced from the each video signal, respectively, by conducting the phase shifting on the each video signal of two (2) pieces of the input video frames, which are included in the input picture signal or the input video signal. With this, four (4) signals can be produced from the two (2) pieces of the input video frames. Herein, upon basis of the phase difference between the two (2) pieces of the input video frames, the coefficient is calculated out, respectively, for composing those four (4) signals while canceling the aliasing components thereof, for each pixel, for each one of that four (4) signals. For each pixel of the video to be produced, a sum is calculated upon products of the pixel values of the corresponding pixels owned by each signal of the four (4) signals mentioned above, each being multiplied by each coefficient, respectively, and thereby producing pixel values of a new high resolution video. With conducting this upon each of the pixels of the video to be produced, it is possible to produce a video achieving high-resolution in one-dimensional direction more than the input video frame.

With conducting this upon the horizontal direction and the vertical direction, respectively, it is possible to produce a video achieving high resolution in the horizontal direction and a video achieving high resolution in the vertical direction. Upon that video achieving high resolution in the horizontal direction and that video achieving high resolution in the vertical direction is conducted the up-rating process in the vertical direction and the horizontal direction, respectively, and thereafter both are combined with or mixed up.

With this, it is possible to produce a high resolution video achieving the high resolution in both the vertical direction and the horizontal direction, from the each video signal of the two (2) pieces of input video frames, which are included in the input picture signal or the input video signal. Thus, 2-dimensional high-resolution video can be produced, and this can be outputted therefrom.

Also, while recording the input picture signal or the input video signal into the recording unit, it is possible to reproduce the 2-dimensional high-resolution video, upon which the high resolution is achieved in both directions, i.e., the vertical direction and the horizontal direction, from each of the video signals of the two (2) pieces of input video frames, which are included in the picture signal or the video signal, when reproducing from that recording unit, and thereby to output it therefrom.

Also, with the video signal processing apparatus according to the embodiment 17, since two (2) pieces of input video frames are used, therefore it is possible achieve the output of high resolution video with a lesser amount of necessity processes. With this, it is possible to achieve the recording/reproducing apparatus, for outputting the picture or the video, being high in the resolution thereof in both directions, i.e., the horizontal direction and the vertical direction, with less aliasing components therein.

### <Embedment 18>

The recording/reproducing apparatus, according to an embodiment 18, is that replacing the video signal processing unit 3504 shown in Fig. 36, with the video signal processing apparatus described in the embodiment 9, within the recording/reproducing apparatus according to the embodiment 17. Other elements or structures thereof are same to those of the recording/reproducing apparatus according to the embodiment 17, and therefore the explanation thereof will be omitted herein.

Also, the detailed operations of the video signal processing unit 3504 are as described in the embodiment 9, and therefore the explanation thereof will be omitted herein.

With the video displaying apparatus according to the embodiment 18, it is possible to produce the 2-dimensional high resolution video, upon which the high resolution is achieved in the horizontal direction, the vertical direction and the oblique direction, than the input picture or the input video, with using two (2) pieces of input video frames, which are included in the input picture signal or the input video signal, and thereby to output this.

Also, while recording the input picture signal or the input video signal into the recording unit, it is possible to reproduce the 2-dimensional high-resolution video, upon which the high resolution is achieved in both directions, i.e., the vertical direction and the horizontal direction, from each of the video signals of the two (2) pieces of input video frames, which are included in the picture signal or the video signal, when reproducing from that recording unit, and thereby to output it therefrom.

### <Embedment 19>

The recording/reproducing apparatus, according to an embodiment 19, is that replacing the video signal processing unit 3504 shown in Fig. 36, with the video signal processing apparatus described in the embodiment 11, within the recording/reproducing apparatus according to the embodiment 17. Other elements or structures thereof are same to those of the recording/reproducing apparatus according to the embodiment 17, and therefore the explanation thereof will be omitted herein.

Also, the detailed operations of the video signal processing unit 3504 are as described in the embodiment 11, and therefore the explanation thereof will be omitted herein.

With the video displaying apparatus according to the embodiment 19, it is possible to achieve the recording/reproducing apparatus, for enabling to produce the 2-dimensional high resolution video, upon which the high resolution is achieved in the horizontal direction, the vertical direction and the oblique direction, than the input picture or the input video, with using four (4) pieces of input video frames, which are included in the input picture signal or the input video signal, and thereby to output it therefrom.

Also, while recording the input picture signal or the input video signal into the recording unit, it is possible to reproduce the 2-dimensional high-resolution video, upon which the high resolution is achieved in both directions, i.e., the vertical direction and the horizontal direction, from each of the video signals of the two (2) pieces of input video frames, which are included in the picture signal or the video signal, when reproducing from that recording unit, and thereby to output this therefrom.

Also, the effect of improving the resolution, with the recording/reproducing apparatus according to the embodiment 19, in particular, in the oblique direction, is enable an increase of the resolution up to the frequency components higher than that can achieved by the recording/reproducing apparatus according to the embodiment 18; i.e., it is possible to produce the high resolution video being higher in the picture quality.

### <Embodiment 20>

The recording/reproducing apparatus, according to an embodiment 20, is such that the video signal processing unit 3504 shown in Fig. 36 is replaced by the video signal process ing apparatus described in any one of the embodiments, i.e., the embodiment 1, the embodiment 3, or embodiment 5, within the recording/reproducing apparatus according to the embodiment 17. Other elements or structures thereof are same to those of the recording/reproducing apparatus according to the embodiment 17, and therefore the explanation thereof will be omitted herein.

Also, the detailed operations of the video signal processing unit 3504 are as described in the embodiment 1, the embodiment 3 or the embodiment 5, and therefore the explanation thereof will be omitted herein.

With the video displaying apparatus according to the embodiment 20, it is possible to achieve the recording/reproducing apparatus, for enabling to produce the high resolution video, upon which the high resolution is achieved in the one-dimensional direction comparing to the input picture or the input video, with using two (2) pieces of input video frames, which are included in the input picture signal or the input video signal, and thereby to output it therefrom.

Also, while recording the input picture signal or the input video signal into the recording unit, it is possible to reproduce the high-resolution video, upon which the high resolution is achieved in one-dimensional direction, from each of the video signals of the two (2) pieces of input video frames, which are included in the picture signal or the video signal, when reproducing from that recording unit, and thereby to output this therefrom.

### <Embodiment 21>

Explanation will be made on an embodiment 21 of applying the present invention into an interlace progressive scanning line (hereinafter, being called an "I-P conversion"), by referring to Figs. 39 to 41. Before staring the explanation, explanation will be made on a general I-P conversion, according to the prior art, by referring to Fig. 37.

In (a) of Fig. 37 is shown the positional relationship of a scanning line of an interlace scanning (2:1 interlace), and in (b) of Fig. 37 the positional relationship of the scanning line of the progressive scanning, respectively. In each of those, the horizontal axis of the figure indicates a position (t) on the time direction (i.e., the frame direction), while the vertical axis the vertical direction (v). Within the interlace scanning shown in (a) of Fig. 37, a field (3703) is made up in a format of repeating the scanning line to be transmitted or displayed (i.e., an actual scanning line) (3701) or the scanning line (3702) to be jumped, so as not to be transmitted nor displayed, alternately. Also, in the next field, the scanning line (3701) is reverse (i.e., complementary) in the position thereof, to the scanning line (3702), and combining of two (2) pieces of the fields (3703) and (3704) builds up one (1) piece of the frame (3704) . The field (3703) is converted into the frame (3705), i.e., interpolating the scanning line (3702) to be jumped, so as not to be transmitted nor displayed, from the actual scanning line (3701) in the vicinity thereof, as an interpolated scanning line, and thereby converting into the progressive scanning, as shown in (b) of Fig. 37.

As the conventional representative method for achieving the I-P conversion, there are already known: a motion adaptive type I-P conversion as shown in Fig. 38(a), and a motion compensation type I-P conversion as shown in Fig. 38(b). With the (a) motion adaptive type I-P conversion, it is general to conduct an inter-field interpolation (3801) for producing a signal on the interpolation scanning line with using the signals on the actual scanning line of the past (or the future) field, when an object within a picture is standing still, while conducting an intra-field interpolation (3802) for producing a signal on the interpolation scanning line with using the signals on the scanning lines up and down within the same field when the object within the picture is moving. In this instance, it is well-known that, an idealistic progressive scanning picture or video can be obtained if the obj ect is completely standing still, through the inter-field interpolation (3801), however when the object moves only a little bit, the progressive scanning picture or video obtained is lowered in the vertical resolution, even if applying the inter-field interpolation (3801) or the intra-field interpolation (3802) . On the other hand, with the (b) motion compensation type I-P conversion, a motion vector (3803) is obtained by estimating the motion of the object, for each pixel, and upon this motion vector (3803), an interpolation scanning line is produced, including also the motion in the horizontal direction. For example, in Fig. 38(b) is shown a case where, after the obj ect moves into the lower direction, once, it stands still for the period of two (2) fields, and following thereto, it moves upper direction. In this instance, it is well known that, the idealistic progressive picture or video can be obtained in case where the motion vector indicates the interpolation line just from the actual scanning line, but the progressive picture or video is lowered in the vertical resolution in other cases (i.e., in case where the motion vector does not indicate the interpolation line just from the actual scanning line).

In Fig. 39, (a) and (b) show the operation of the embodiment 20, according to the present invention, for achieving an improvement over the defects of the conventional I-P conversion mentionedabove. Assuming that each field (#1, #2...) of the interlace scanning shown in (a) of Fig. 39 is a frame having 1/2 number of the scanning lines, a frame is produced through the vertical resolution conversion (3901) or (3902), with using the fact that for each field is changed the position of the scanning line (= a sampling phase in the vertical direction). For example, with using the field #1 and the field #2, a frame #2 is produced through the vertical resolution conversion (3901), and with using the field #2 and the field #3, a frame #3 is produced through the vertical resolution conversion (3902), and herein after, the similar process is conducted on the fields hereinafter, and thereby producing the frames, continuously. In this instance, as each of the vertical resolution conversion (3901) or (3902) can be used the resolution conversion unit (2) shown in Fig. 1, etc., but it is necessary to make the operation thereof for each field, as is shown in Fig. 40.

Explanation will be given about the operations, in details thereof, according to the embodiment 21 of the present invention, by referring to Figs. 40(a) and 40(b). Fig. 40(a) shows the position of the scanning line of an original interlace scanning. When the object is in standstill, as is shown in Fig. 40(a), the motion vector (4001) indicates the interpolation scanning line of the next field at the same vertical position. Herein, while assuming that each field (#1, #2...) is the frame having 1/2 number of the scanning lines, and if moving the field as a whole, by adding an offset (e.g. , the difference of special positions) in the vertical direction thereto, so that the position of the scanning line (= a sampling phase in the vertical direction) does not change for each field, as is shown in Fig. 40(b), the motion vector (4002) when standing still moves up and down for each field. Thus, if obtaining a phase difference θ (102) within the phase estimation unit (101) shown in Fig. 1, with inputting the signal of the scanning line position shown in Fig. 40(b), it results in that an erroneous result is outputted when conducting the vertical resolution conversion (3901) or (3902).

Fig. 41 shows the structures according to the embodiment 21 of the present invention, having an object to prevent the erroneous operations mentioned above. The structures shown in Fig. 41 is that of adding an offset compensation unit (4103) to the structures of the embodiment for conducting the resolution conversion in the one-dimensional direction (herein, the vertical direction) shown in Fig. 1, wherein the vertical resolution conversion is conducted while inputting a field #k (however, "k" is an integer) and a fi el d # (k-1) previous (or past) by one thereto, from the input unit (1), and thereby outputting the picture or video on the display unit (3). The offset compensation unit (4103) makes a new phase difference θ (102) by adding the phase difference offset (θoffset) (4102) to the phase difference θ obtained within the position estimation unit (101) by means of an adder (4101), to be used within the signal processing in the motion compensation/up-rate unit (115) and the aliasing component removal unit (117). Herein, when k=2n (here, "n" is an integer, thus, "k" is an even number), the value of the phase difference θ(102) is compensated downwards by 1/2 of the distance between the scanning lines of the input (i.e., only by the difference of the special position, being closest between two (2) pieces of the fields), by setting the phase difference offset (θoffset) (4102) to π, and when k=2n+1 (here, "n" is the integer, thus, "k" is an odd number), the value of the phase difference θ (102) is compensated upwards by 1/2 of the distance between the scanning lines of the input (i.e. , onlyby the difference of the special position, being closest between two (2) pieces of the fields), by setting the phase difference offset (θoffset) (4102) to -π. With doing this, it is possible to compensate the up/down motions of the motion vector (4002) when the picture stands still, as shown in Fig. 40(b). Further, for dealing with the 2-dimensional picture or video, including the horizontal direction therein, it is enough to bring the motion compensation/up-rate unit (115) into 2-dimensional one while keeping the position estimation unit (101) to output the horizontal phase difference θH and the vertical phase difference θVµ. Thus, a new vertical phase difference θV is obtained by adding the phase difference offset (θoffset) (4102) mentioned above to the vertical phase difference θV, and after conducting the up-rating (0 insertion) thereon in the vertical direction, it is put into a vertical filter having a tap coefficient Ck (=2sing(πk+θV)/(πk+θV)) shown in Fig. 6. On the other hand, in the horizontal direction, the general motion compensation is conductedon. Namely, without up-rating in the horizontal direction, it is enough to take a horizontal filtering having the tap coefficient Ck (=2sin (πk+θV) / (πk+θV) ) thereon, while shifting the sampling phase only by the horizontal phase difference θH, i.e., the tap coefficient shown in Fig. 12. While keeping each processing in the phase shift unit (116) or the aliasing component removal unit (117) as was mentioned previously, without changes, the phase shifting in the vertical direction (Hilbert transfer) and the removal of aliasing components (e.g., determining coefficient and weighted addition) are conducted. With those processes, it is possible to convert into the progressive scan through conducting the resolution conversion upon the input of the interlace scan.

In this instance, each of the coefficients in the aliasing component removal unit (117), C0, C1, C2 or C3 comes to a value, which can be obtained by replacing the phase difference θ shown in Fig. 9 by (θ±π). Thus, they come to C0=C2=1/2, C1= - (1+cos(θ±π))/(2sin(θ±π))=(1-cosθ)/sinθ, and C3= (1+cos(θ±π))/(2sin(θ±π) =-(1-cosθ)/sinθ, respectively. In this instance, for the purpose of preventing the coefficients C1 and C3 from becoming unstable when the phase difference θ is ±π, or preventing the coefficients C1 and C3 from becoming large, i.e., weak to noises, etc., as the phase difference θ comes close to ±π, in the embodiment 5 of the present invention shown in Fig. 11, it is enough to construct it to exchange to an output from the auxiliary pixel compensation portion or unit (1105) when the phase difference θ is in the vicinity of ±π. Thus, in the detailed embodiment of the coefficient determining portion or unit (1103) to be applied in the embodiment 5 of the present invention shown in Fig. 13, it is enough to replace θ by (θ±π) in the same figure, and when the phase difference θ is in the vicinity of ±π, it is enough to set the value of the coefficient C1 to zero (0), compulsively, as well as, the value of the coefficient C4 to 1.0. With this operation, within the structures shown in Fig. 11, when the phase difference θ (102) comes to ±π or in the vicinity of ±π, it is possible to exchange the output of the adder (1104) to the output of the interpolation low-pass filter (1101), automatically. Further, it is also possible to approach it from the coefficient shown in Fig. 12 to the coefficient shown in Fig. 13, gradually, as the phase difference θ comes close to ±π. Also, in case when determining that no pixel is on the frame #2 corresponding to the pixel of processing target on the frame #1, within the position estimation unit (101) in Fig. 1, it is also possible to exchange the output of the adder (1104) to the interpolation low-pass filter (1101), automatically, with controlling each of the coefficients in the similar manner when the phase difference θ (102) is in the vicinity of ±π.

Further, within the structures of each of the embodiments shown in Fig. 20, Fig. 21 and Fig. 27, it is possible to achieve the 2-dimensional resolution conversion for then input signal of the interlace scanning, by adding the phase difference offset (θoffset) (4102) shown in Fig. 41 to the value of the vertical phase difference θV, which is outputted from the position estimation unit.

Also, it is possible to add an offset, further to the vertical position of the pixel, for the frame picture or video of the progressive type outputted, and thereby obtaining an interlace scanning type being high in density of the scanning lines. For example, when converting into 960i type (e.g., the interlace scanning type of 960 pieces in the number of the scanning lines) while inputting a 480i type (e.g., the interlace scanning type of 480 pieces in the number of the scanning lines), with the technology according to the present invention mentioned above, after converting the 480i type into 480p type (i.e., a progressive scanning type of 480 pieces in the number of the scanning lines), it is enough to shift every second frame (for example, frames #2, #4, #6...) in the vertical direction, by 1/2 pixel (=1/2 scanning line), with using a general interpolation filter.

However, the frame #1, the frame #2 and the frame #3, etc., may be discontinuous frames time-sequentially, or may be reverse in the order thereof, time-sequentially. Also, the field #1, the field #2 and the field #3, etc., may be discontinuous frames time-sequentially, or may be reverse in the order thereof, time-sequentially, if determining the value of the phase difference offset (θoffset) by taking the positional relationship of the scanning lines as shown in Fig. 40 into the consideration thereof. For example, when conducting the resolution conversion process while inputting the fields of the odd number themselves or the fields of the even number themselves, it is enough to set the value of the phase difference offset (θoffset) mentioned above to zero (0).

With the video signal processing apparatus according to the embodiment 21, which was explained in the above, while assuming each field (#1, #2...) of the interlace scanning to be a frame having 1/2 of the number of the scanning lines, every second field as a whole is shifted, by adding the offset in the vertical direction. The position estimation is made upon two (2) pieces of the pictures or videos, among the continuous pictures or videos, which are produced in this manner, to calculate out the phase difference, and correction or compensation is conducted upon the said phase difference, by the phase difference offset corresponding to the offset mentioned above. Herein, the phase shift is conducted upon the signals of the two (2) pieces of videos, and two (2) signals are produced from each of the video signals, respectively. With this, four (4) signals are produced from two (2) pieces of the video signals. Herein, upon basis of the phase difference compensated, for each one of those four (4) signals, the coefficients are calculated for each of the pixels, so as to compose those four (4) signals wile canceling the aliasing components thereof. For each of the pixels to be produced, a sum is calculated upon the products, each obtained by multiplying each coefficient on the pixel value of the corresponding pixel, which is owned by each of the four (4) signals mentioned above; thereby producing a new pixel value for the high-resolution video or picture. Conducting this, for each of the pixels of the video or picture to be produced, enables to produce a new high-resolution video or picture, and thereby enabling to output that high-resolution video, as the frame video of the progressive scanning.

With this, the video signal processing apparatus according to the embodiment 21 enables to produced the progressive scanning video, being less in reduction of the vertical resolution, with using two (2) fields of the interlace scanning.

Also, with the video signal processing apparatus according to the embodiment 21, because of using two (2) pieces of the input video frames therein, an amount or volume is small of video processing necessary thereto. With this, it is possible to achieve the video signal processing apparatus for producing the progressive scanning video less in the reduction of the vertical resolution, with a low cost.

### <Embodiment 22>

Explanation will be given on the video signal processing method according to an embodiment 22 of the present invention, by referring to Fig. 41.

The embodiment 22 relates to the video signal processing method for achieving the processing, being equivalent to the video signal processing in the video signal processing apparatus according to the embodiment 21, by means of the controller portion cooperating with the software. Since the video signal processing apparatus for conducting the video signal processing method of the present embodiment is the video signal processing apparatus shown in Fig. 18, similar to the embodiment 2, then the explanation thereof will be omitted herein.

Fig. 42 shows an example of the flowchart of the operations of the video signal processing apparatus according to the present embodiment. The flowchart shown in Fig. 42 is that of adding a step (4201) for compensating the offset shown in Fig. 40(b) to the flowchart shown in Fig. 14, as well as, changing each of the inputs in the steps (1402) and (1403) from the frame #1 and the frame #2 into the field #1 and the field #2.

Other steps are same to those of the flowchart shown in Fig. 14, and therefore the explanation thereof will be omitted herein.

Herein, the step (4201) for compensating the offset shown in Fig. 42 is a step for determining the phase difference offset (θoffset), upon basis of the vertical position relationship of the scanning line shown in Fig. 40(b), thereby to be added to the phase difference θ. Thus, when conducting the vertical resolution conversion while inputting the field #k (however, "k" is an integer) and the field #(k-1) previous (or past) by one thereto, the value of the phase difference θ is compensated downwards by 1/2 of the distance between the scanning lines of the input, by setting the phase difference offset (θoffset) (4102) to π, when k=2n (here, "n" is the integer, thus, "k" is the even number), on the other hand when k=2n+1 (here, "n" is the integer, thus, "k" is an odd number), the value of the phase difference θ (102) is compensated upwards by 1/2 of the distance between the scanning lines of the input, by setting the phase difference offset (θoffset) (4102) to -π. With doing this, it is possible to compensate the up/down motions of the motion vector (4002) when the picture stands still, as shown in Fig. 40(b), and without changing other steps, it is possible to conduct the resolution conversion onto the input of the interlace scanning.

However, the frame #1, the frame #2 and the frame #3, etc., may be discontinuous frames time-sequentially, or may be reverse in the order thereof, time-sequentially. Also, the field #1, the field #2 and the field #3, etc., may be discontinuous frames time-sequentially, or may be reverse in the order thereof, time-sequentially, if determining the value of the phase difference offset (θoffset) by taking the positional relationship of the scanning lines as shown in Fig. 40 into the consideration thereof. For example, when conducting the resolution conversion process while inputting the fields of the odd number themselves or the fields of the even number themselves, it is enough to set the value of the phase difference offset (θoffset) mentioned above to zero (0).

With the video signal processing apparatus according to the embodiment 22, which was explained in the above, while assuming each field (#1, #2...) of the interlace scanning to be a frame having 1/2 of the number of the scanning lines, every second field as a whole is shifted, by adding the offset in the vertical direction. The position estimation is made upon two (2) pieces of the pictures or videos, among the continuous pictures or videos, which are produced in this manner, to calculate out the phase difference, and correction or compensation is conducted upon the said phase difference, by the phase difference offset corresponding to the offset mentioned above. Herein, the phase shift is conducted upon the signals of the two (2) pieces of videos, and two (2) signals are produced from each of the video signals, respectively. With this, four (4) signals are produced from two (2) pieces of the video signals. Herein, upon basis of the phase difference compensated, for each one of those four (4) signals, the coefficients are calculated for each of the pixels, so as to compose those four (4) signals wile canceling the aliasing components thereof. For each of the pixels to be produced, a sum is calculated upon the products, each obtained by multiplying each coefficient on the pixel value of the corresponding pixel, which is owned by each of the four (4) signals mentioned above; thereby producing a new pixel value for the high-resolution video or picture. Conducting this, for each of the pixels of the video or picture to be produced, enables to produce a new high-resolution video or picture, and thereby to output that high-resolution video, as the frame video of the progressive scanning.

With this, the video signal processing apparatus according to the embodiment 22 enables to produce the progressive scanning video, being less in reduction of the vertical resolution, with using two (2) fields of the interlace scanning.

Also, with the video signal processing apparatus according to the embodiment 22, because of using two (2) pieces of the input video frames therein, there can be obtained an effect of enabling to lessen an amount or volume of video processing necessary thereto.

### <Embodiment 23>

The embodiment 23 according to the present invention has such structures that the phase shift unit (116) is replaced by the phase sift unit (100) shown in Fig. 10, and also the aliasing component removal unit (117) is replaced by the aliasing component removal unit (1010) shown in Fig. 10, within the video signal processing apparatus according to the embodiment 21 shown in Fig. 41.

Other structures are same to those of the video signal processing apparatus shown in Fig. 41, and therefore the explanation thereof will be omitted herein.

The video signal processing apparatus according to the embodiment 23, which was explained in the above, in addition to the effects of the video signal processing apparatus according to the embodiment 21, can be achieved with lower cost, since it can be achieved by a circuit scale smaller than that of the video signal processing apparatus according to the embodiment 21.

### <Embodiment 24>

Explanation will be made on the video signal processing method according to an embodiment 24 of the present invention, by referring to Fig. 43.

The embodiment 24 relates to the video signal processing method for achieving the processing, being equivalent to the video signal processing conducted within the video signal processing apparatus according to the embodiment 23, by means of the controller unit cooperating with the software. Since the video signal processing apparatus, for executing the video signal processing method of the present embodiment therein, is the video signal processing apparatus shown in Fig. 18, similar to the embodiment 2, and therefore the explanation thereof will be omitted herein.

Fig. 43 shows an example of flowchart of the operations of the video signal processing apparatus according to the present embodiment. The flowchart shown in Fig. 43 is that of adding a step (4301) for compensating the offset shown in Fig. 40(b) to the flowchart shown in Fig. 15, as well as, changing each of the inputs in the steps (1502) and (1503) from the frame #1 and the frame #2 into the field #1 and the field #2.

Other steps are same to those of the flowchart shown in Fig. 15, and therefore the explanation thereof will be omitted herein.

Further, the details of the operation of the step (4301) for compensating the offset is same to that of the step (4201) for compensating the offset shown in Fig. 42, and therefore the explanation thereof will be omitted herein.

The video signal processing method according to the embodiment 24, which was explainedabove, has an effect of achieving the high resolution of the video signal, similar to the video signal processing method according to the embodiment 22. Further, the video signal processing method according to the embodiment 24 has an effect of enabling to achieve the same signal processing thereto, but with a less amount of processing (e.g., the number of calculations) than the video signal processing method according to the embodiment 22, by bringing the contents of a part of the processing steps to be common, comparing to the video signal processing method according to the embodiment 22.

### <Embodiment 25>

The video signal processing apparatus according to an embodiment 25 of the present invention has such structures that the phase shift unit (116) is replaced by the phase sift unit (1009) shown in Fig. 11, and also the aliasing component removal unit (117) is replaced by the aliasing component removal unit (1010) shown in Fig. 11, within the video signal processing apparatus according to the embodiment 21 shown in Fig. 41, and further comprises the complementary pixel interpolation unit (1055) shown in Fig. 11.

Other structures are same to those of the video signal processing apparatus shown in Fig. 41, and therefore the explanation thereof will be omitted herein.

The video signal processing apparatus according to the embodiment 25, which was explained in the above, in addition to the effects of the video signal processing apparatus according to the embodiment 21, has an effect of enabling to obtain a stable output video, because the processing result does not come to be indefinite, even when the phase difference θ comes to zero (0) or in the vicinity of zero (0) after adding the phase difference offset thereto, or when determining that no pixel is on the field #2, corresponding to the pixel of the processing target on the field #1, further than the video signal processing apparatus according to the embodiment 21.

### <Embodiment 26>

Explanation will be made on the video signal processing method according to an embodiment 26 of the present invention, by referring to Fig. 44.

The embodiment 26 relates to the video signal processing method for achieving the processing, being equivalent to the video signal processing conducted within the video signal processing apparatus according to the embodiment 25, by means of the controller unit cooperating with the software. Since the video signal processing apparatus, for executing the video signal processing method of the present embodiment therein, is the video signal processing apparatus shown in Fig. 18, similar to the embodiment 2, and therefore the explanation thereof will be omitted herein.

Fig. 44 shows an example of flowchart of the operations of the video signal processing apparatus according to the present embodiment. The flowchart shown in Fig. 44 is that of adding a step (4401) for compensating the offset shown in Fig. 40(b) to the flowchart shown in Fig. 15, as well as, changing each of the inputs in the steps (1402) and (1403) from the frame #1 and the frame #2 into the field #1 and the field #2.

Other steps are same to those of the flowchart shown in Fig. 16, and therefore the explanation thereof will be omitted herein.

Further, the details of the operation of the step (4401) for compensating the offset is same to that of the step (4201) for compensating the offset shown in Fig. 42, and therefore the explanation thereof will be omitted herein.

The video signal processing apparatus according to the embodiment 26, which was explained in the above, in addition to the effects of the video signal processing apparatus according to the embodiment 22, has an effect of enabling to obtain a stable output video, because the processing result does not come to be indefinite, even when the phase difference θ comes to zero (0) or in the vicinity of zero (0) after adding the phase difference offset thereto, or when determining that no pixel is on the field #2, corresponding to the pixel of the processing target on the field #1, further than the video signal processing apparatus according to the embodiment 22.

### <Embodiment 27>

The recording/reproducing apparatus, according to an embodiment 27, is such that the video signal processing unit 3504 shown in Fig. 36 is replaced by the video signal processing apparatus described in any one of the embodiments, i.e., the embodiment 21, the embodiment 23, or embodiment 25, within the recording/reproducing apparatus according to the embodiment 13. Other elements or structures thereof are same to those of the recording/reproducing apparatus according to the embodiment 13, and therefore the explanation thereof will be omitted herein.

Also, the detailed operations of the video signal processing unit 3504 are as described in the embodiment 21, the embodiment 23 or the embodiment 25, and therefore the explanation thereof will be omitted herein.

With the video signal processing apparatus according to the embodiment 27, which was explained in the above, while assuming each field (#1, #2...) of the interlace scanning to be a frame having 1/2 of the number of the scanning lines, every second field as a whole is shifted, by adding the offset in the vertical direction. The position estimation is made upon two (2) pieces of the pictures or videos, among the continuous pictures or videos, which are produced in this manner, to calculate out the phase difference, and correction or compensation is conducted upon the said phase difference, by the phase difference offset corresponding to the offset mentioned above. Herein, the phase shift is conducted upon the signals of the two (2) pieces of videos, and two (2) signals are produced from each of the video signals, respectively. With this, four (4) signals are produced from two (2) pieces of the video signals. Herein, upon basis of the phase difference compensated, for each one of those four (4) signals, the coefficients are calculated for each of the pixels, so as to compose those four (4) signals wile canceling the aliasing components thereof. For each of the pixels to be produced, a sum is calculated upon the products, each obtained by multiplying each coefficient on the pixel value of the corresponding pixel, which is owned by each of the four (4) signals mentioned above; thereby producing a new pixel value for the high-resolution video or picture. Conducting this, for each of the pixels of the video or picture to be produced, enables to produce a new high-resolution video or picture, and thereby to output that high-resolution video, as the frame video of the progressive scanning.

With this, the video signal processing apparatus according to the embodiment 27 enables to produced the progressive scanning video, being less in reduction of the vertical resolution, with using two (2) fields of the interlace scanning, and thereby to display it on the display unit.

Also, with the video signal processing apparatus according to the embodiment 27, because of using two (2) pieces of the input video frames therein, an amount or volume of video processing necessary thereto is small. With this, it is possible to achieve the video signal processing apparatus for producing and displaying the progressive scanning video, being less in reduction of the vertical resolution, with a low cost.

### <Embodiment 28>

The recording/reproducing apparatus, according to an embodiment 27, is such that the video signal processing unit 3504 shown in Fig. 36 is replaced by the video signal processing apparatus described in any one of the embodiments, i.e., the embodiment 21, the embodiment 23, or embodiment 25, within the recording/reproducing apparatus according to the embodiment 17. Other elements or structures thereof are same to those of the recording/reproducing apparatus according to the embodiment 17, and therefore the explanation thereof will be omitted herein.

Also, the detailed operations of the video signal processing unit 3504 are as described in the embodiment 21, the embodiment 23 or the embodiment 25, and therefore the explanation thereof will be omitted herein.

With the video signal processing apparatus according to the embodiment 28 of the present invention, while assuming each field (#1, #2...) of the interlace scanning to be a frame having 1/2 of the number of the scanning lines, every second field as a whole is shifted, by adding the offset in the vertical direction. The position estimation is made upon two (2) pieces of the pictures or videos, among the continuous pictures or videos, which are produced in this manner, to calculate out the phase difference, and correction or compensation is conducted upon the said phase difference, by the phase difference offset corresponding to the offset mentioned above. Herein, the phase shift is conducted upon the signals of the two (2) pieces of videos, and two (2) signals are produced from each of the video signals, respectively. With this, four (4) signals are produced from two (2) pieces of the video signals. Herein, upon basis of the phase difference compensated, for each one of those four (4) signals, the coefficients are calculated for each of the pixels, so as to compose those four (4) signals wile canceling the aliasing components thereof. For each of the pixels to be produced, a sum is calculated upon the products, each obtained by multiplying each coefficient on the pixel value of the corresponding pixel, which is owned by each of the four (4) signals mentioned above; thereby producing a new pixel value for the high-resolution video or picture. Conducting this, for each of the pixels of the video or picture to be produced, enables to produce a new high-resolution video or picture, and to produce that high-resolution video, as the frame video of the progressive scanning, and thereby to output it therefrom.

With this, the video signal processing apparatus according to the embodiment 28 enables to produce the progressive scanning video, being less in reduction of the vertical resolution, with using two (2) fields of the interlace scanning, and output it therefrom.

Also, while recording the input video signal with the interlace scanning into the recording unit, it is possible to produce the progressive scanning video, being less in reduction of the vertical resolution, with using two (2) fields of the interlace scanning to be reproduced, when reproducing it from that recording unit, and thereby to output it therefrom.

Also, with the video signal processing apparatus according to the embodiment 28, because of using two (2) pieces of the input video frames therein, an amount or volume of video processing necessary thereto is small. With this, it is possible to achieve the video signal processing apparatus for producing and displaying the progressive scanning video, being less in reduction of the vertical resolution, with a low cost.

### <Embodiment 29>

Figs. 45(a) and 45(b) show the structures according to the embodiment 20 of the present invention. As was mentioned above, in the present digital television broadcasting with using the terrestrial waves or satellite (i.e., BS, CS), programs are put on the air through a video signal of HD (high Definition), in addition to the conventional video signal of SD (Standard Definition). However, as is shown in the structures of a receiver (4505) in Fig. 45(a), not all the programs are replaced by the video signals, which are photographed or picked up by a HD camera (4501), but it is well known that, the video signal picked up by a SD camera (4502) is converted into a signal having the same pixel number to that of the HD (i.e., up-conversion) through a SD→HD converter (4503), and it is exchanged for a program or a scene, by an exchanger (4504), so as to be outputted on a transmission line (4506). However, the transmission line (4506) should not be limited only to the broadcasting, but it includes communication and accumulation (such as, recording), etc. With the conventional receiver, since the video having high resolution is reproduced when the signal received is reproduced is the video signal, which is picked up by the HD camera (4501), and the video having low resolution is reproduced when it is the video signal after the SD→HD conversion (e.g., the up-conversion), therefore the resolution is changed, frequently, for each program or scene, and this brings about a case of causing it to be difficult to see.

Then, with constructing the receiver (4514) as is shown in Fig. 45(b), it is possible to lighten the difference of resolution mentioned above, and to prevent the resolution from being exchanged, frequently. Hereinafter, explanation will be given on this structure, in details thereof.

However, a combination of the low resolution video signal and the high resolution video signal should not be limited to that between the SD video signal and the HD video signal, but it may be one combining the signals, as far as the signals differs from each other in the pixel number thereof. For example, while inputting the video having a pixel number of 1440x1080 as the low resolution video signal, it may be combined with the high resolution video signal having a pixel number 1920x1080. Or, while inputting the video having a pixel number of 720x480 as the low resolution video signal, it may be combined with the high resolution video signal having a pixel number 720x576. In the description given below, for the purpose of explanation thereof, the video signal of SD (Standard Definition) is used as one example of the low resolution video signal, while the video signal of HD (High Definition) is used as one example of the high resolution video signal.

In Fig. 45(b), the signal is received within the input unit (1), and by means of an up-conversion detector unit (4507), a determining result (UC_on_off) is outputted, i.e. , on whether the signal received is that, upon which the SD→HD conversion (e.g., the up-conversion) is conducted, or not, and at the same time, if it is the signal, upon which the SD→HD conversion (e.g., the up-conversion) is conducted, it outputs a horizontal magnifying ratio (MR-H) and a vertical magnifying ratio (MR-V), which will be mentioned later. In case of the signal, upon which the SD→HD' conversion (e.g., the up conversion) is conducted, then in a video signal processing unit (4515), upon basis of the horizontal magnifying ratio (MR-H) and the vertical magnifying ratio (MR-V), the signal received is reversely converted (e.g. , down conversion) back to that having the pixel number before conducting the up conversion within the HD-SD converter (4508) . The signal reversely converted is converted, again, into the same resolution to the signal that is received by a resolution converter block (4509), which will be mention later, and it is inputted into an exchanger (4510). The exchanger (4510), upon basis of the determining result (UC_on_off) mentioned above, is switched "on" side when it is the signal, upon which the SD→HD conversion (e.g., the up conversion) is conducted, thereby to output a result of the resolution converter block (4509) therefrom, while it is switched "off" side when it is not the signal, upon which the SD→HD conversion (e.g., the up conversion) is conducted, thereby to output the signal received as it is. Thus, the resolution converter block (4509) functions thereupon, selectively, only when it is the signal, upon which the SD→HD conversion (e.g., the up conversion) is conducted. In case where the receiver (4514) is a television receiver, the output of the exchanger (4510) may be displayed on a display unit (4511), as it is. In case where the receiver (4514) is a relay or an editor or a recorder (e.g., a video recorder), etc. , it is enough to transmit it after converting into the signal format suitable for the transmission line (4513) within a transmitter (4512). Further, the transmission line (4513) includes, not only the broadcasting, but also communication and accumulation (video recording), etc. Also, as the transmitter (4512) may be applied the conventional technology of the general relay, editor, recorder (video recorder), etc., as it is.

Fig. 46 shows the general structures of the SD→HD converter (4503) and the HD-SD converter (4508) . Both of the converters are sampling frequency converters, each for converting a number of pixels (or a number of samples) building up one (1) piece of picture, and it is well known that they can be achieved by using the conventional arts, such as, the structures of a poly-phase type shown in Fig. 46 (a) and an over sampling type shown in Fig. 46 (b) . For example, when changing the pixel number intom/n times (however, "m" and "n" are integers), in the converter of the poly-phase type shown in Fig. 46 (a) are prepared "m" sets of interpolation low-pass filters (4510), each having a predetermined characteristic, and outputs of the interpolation low-pass filters (4510) are outputted, being switched by the exchanger (4602), in accordance with a predetermined order determined by "m" and "n". In the converter of the over sampling type shown in Fig. 46(b), after conducting the up-rating up to "m" times within an up-rater (4603), first (i.e., aligning the input data in an order by "m" pixels, and "0" is inserted into (m-1) pieces of pixels between them), the input is treated with an interpolation low-pass filter (4604) having the predetermined characteristic, and it is down-rated into 1/n time within a down-rater (4605) (i.e., the output is thinned-out by selecting one (1) pixel for each "n" pixels at an equal distance there between). Those may be achieved by using the conventional arts, etc.

Fig. 47 shows operations of the general SD→HD conversion (up-conversion), from (a) to (e), in details thereof. As the SD picture (an aspect ratio=4:3) picked up by the SD camera (4502), there are forms as shown in (a), (b) and (c) of Fig. 47, for example. The SD picture or video shown in (a) of Fig. 47 is the picture of picking up a picture with filling up the screen, and a regular circle is picked up as the regular circle, without distortion. The SD picture or video shown in (b) of Fig. 47 is the picture, being picked up so as to produce no-picture portions (black portions) in an upper portion and a lower portion of the screen, assuming that it will be displayed filling up the screen when it is converted into the HD picture having a wide aspect (16:9), in advance, wherein the regular circle is also picked up as the regular circle, without distortion. The SD picture or video shown in (c) of Fig. 47 is the picture, being picked up so as not to produce the no-picture portions (black portions) therein, as well as, assuming that it will be displayed filling up the screen when it is converted into the HD picture having a wide aspect (16:9), in advance, wherein the regular circle is picked up in the form of an ellipse extending in the vertical direction. It is well known that, when converting those SD videos into the HD videos, respectively, due to the difference in the aspect ratio between both of them, they come into the forms as shown in (d) and (e) of Fig. 47. The HD picture shown in (d) of Fig. 47 is expanded so that the regular circle is displayed as the regular circle without distortion, and is also converted in the pixel number thereof so as to produce no-picture portions (black portions) on both sides, i.e., the left and right sides. The HD picture shown in (e) of Fig. 47 is converted in the pixel number thereof, by expanding the SD pictures shown in (b) and (c) of Fig. 47 so as to fill up the screen, respectively, so that no such no-picture portions (black portions) is produced.

Fig. 48 shows an example of each magnifying ratio in the horizontal direction and the vertical direction, within the general SD→HD conversion (up-conversion) mentioned above. Herein, it is assumed that the SD picture has 720 pixels in the horizontal direction x 480 pixels in the vertical direction, and the HD picture has 1920 pixels in the horizontal direction x 1080 pixels in the vertical direction. A side-cut format shown in (1) of the same figure is the format for converting from the SD picture shown in (a) of Fig. 47 into the HD picture shown in (d) of Fig. 47, wherein the magnifying ratio is 2 times (=1920/720×3/4) in the horizontal direction and the magnifying ratio is 9/4 times (=1080/480) in the vertical direction. A letterbox format shown in (2) of the same figure is the format for converting from the SD picture shown in (b) of Fig. 47 into the HD picture shown in (e) of Fig. 47, wherein the magnifying ratio is 8/3 times in the horizontal direction (=1920/720) and the magnifying ratio is 3 times (=1080/480x4/3) in the vertical direction. A squeeze format shown in (3) of the same figure is the format for converting the SD picture shown in (c) of Fig. 47 into the HD picture shown in (e) of Fig. 47, wherein the magnifying ratio is 8/3 times (=1920/720) in the horizontal direction and the magnifying ratio is 9/4 times (=1080/480) in the vertical direction. However, other than the above-mentioned, as the HD picture can be made assumption upon the pixels = 1440 pixels in the horizontal direction × 1080 pixels in the vertical direction, or 1280 pixels in the horizontal direction x 720 pixels in the vertical direction, etc., but the horizontal magnifying ratio and the vertical magnifying ratio can be obtained in the similar manner to the above.

Fig. 49 shows an example of the detailed structures of the up-conversion detector unit (4507) shown in Fig. 45. Herein, it is assumed that the magnifying ratios when conducting the SD→HC conversion (up-conversion) are the horizontal magnifying ratio and the vertical magnifying ratio shown in Fig. 48. In the same figure, the signal inputted into the up-conversion detector unit (4507) is limited on the band thereof, through horizontal high-pass filters (4901-1) and (4901-2) and vertical high-pass filters (4901-3) and (4901-4), each having a band-pass characteristic, which will be mentioned later, and thereafter it is inputted into a signal component presence determining portion or units (4902-1), (4902-2), (4902-3) and (4902-4), respectively. In the signal component presence determining unit (4902-1), after obtaining an envelope of the signal by means of an absoluter (4903-1) and a smoother (4904-1), it is digitized with comparing to a predetermined threshold value within a digitizer (4905-1), and a frequency of exceeding that threshold value is measured by a frequency measuring device (4906-1), and thereby determining on the presence of the signal component. Thus, if a number of signals passing through the high-pass filter (4901-1) mentioned above is large, per a unit of time (for example, per one (1) frame), then it is determined "signal component exists", on the other hand if a number of signals passing through the high-pass filter (4901-1) mentioned above is small, it is determined "no signal component". As the smoother (4904-1) may be applied a general 2-dimentsional low-pass filter. Other signal component presence determining units (4902-1), (4902-2), (4902-3) and (4902-4) are similar in the structures thereof, and the similar determination is conducted therewith. Within a horizontal magnifying ratio determining unit (4907) and a vertical magnifying ratio determining unit (4908), analysis is made on the result of each of the signal component presence determining unit mentioned above, upon basis of a determining method which will be mentioned later, and they output the detection result (UC_on_off) about whether the signal is conducted with the SD→HD conversion (up-conversion) thereon or not, and also the horizontal magnifying ratio (MR-H) or the vertical magnifying ratio (MR-V), respectively. A total determining device (4909) totalizes the detection results (UC_on_off) of the horizontal magnifying ratio determining unit (4907) and the vertical magnifying ratio determining unit (4908), and if any one of them is determined not to be the signal, upon which the SD→HD conversion (up-conversion) is conducted (off), then it provides an output by changing the detection results (UC_on_off) into "off". Also, since it is assumed that the SD→HD conversion (up-conversion) produces the same result continuously, for several frames or several seconds, then it is preferable to hold a past history within a history holder (4910), which is made up with a memory, so that majority decision is made between plural numbers of past results within the total determining device (4909), thereby conducting a process, for escaping the detection results (UC_on_off) and/or each magnifying ratio (MR-H) or (MR-V), from being changed, abruptly.

Herein, assuming that the maximum frequency (e.g., angular frequency) is "π", which can be expressed by the pixel number of the HD picture or video, and that the frequency (e.g., angular frequency) of the component is "ω", which is included in the signal, then upon basis of the magnifying ratios shown in Fig. 48, the horizontal high-pass filter (4901-1) has a band for passing the horizontal frequency (π/2≤ω≤π), the horizontal high-pass filter (4901-2) a band for passing the horizontal frequency (3π/8≤ω≤π), the vertical high-pass filter (4901-3) has a band for passing the horizontal frequency (4π/9≤ω≤π), and the horizontal high-pass filter (4901-4) a band for passing the horizontal frequency (4π/9≤ω≤π), respectively. Thus, a value obtained by multiplying an inverse of each magnifying ratio onto the maximum frequency (e.g., angular frequency) "π" is a cutoff frequency for each high-pass filter.

Figs. 50(a) and 50(b) show each operation of (a) the horizontal magnifying ratio determining unit (4907) or (b) the vertical magnifying ratio determining unit (4908), respectively. In each determining device (4907) or (4908), each magnifying ratio is determined, with using a general property "an amount or volume of the high-frequency component, included in the expanded picture, changes depending on the magnifying ratio". Thus, in (a) the horizontal magnifying ratio determining unit (4907), from a relationship 3π/8<π/2, it is determined "no magnification is made" (e.g., using the HD camera when picking up) when the horizontal frequency "ω" includes a component (π/2≤ω≤π), and the detection results (UC_on_off) is changed to the "off" side (i.e., the up-conversion is not conducted). When the horizontal frequency "ω" has not the component (π/2≤ω≤π), but includes the component (3π/8≤ω≤π) therein, it is determined "being expanded two (2) times or more, but not yet expanded to 8/3 times or more", and the horizontal magnifying ratio is determined 2 times, and the detection results (UC_on_off) is "on" side (i.e., the up-conversion is conducted). When the horizontal frequency "ω" also has no component (3π/8≤ω≤π), it is determined "expanded to 8/3 times or more", and the horizontal magnifying ratio is determined 8/3 times, and the detection results (UC_on_off) is "on" side (i.e., the up-conversion is conducted). In the similar manner, in (b) the vertical magnifying ratio determining unit (4908), from a relationship π/3<4π/9, it is determined "no magnification is made" (e.g., using the HD camera when picking up) when the vertical frequency "ω" includes a component (4π/9≤ω≤π) , and the detection results (UC_on_off) is changed to the "off" side (i.e., the up-conversion is not conducted) . When the vertical frequency "ω" has not the component (4π/9≤ω≤π) , but includes the component (π/3≤ω≤ π) therein, it is determined "being expanded two 9/4 times or more, but not yet expanded to 3 times or more", and the vertical magnifying ratio is determined 9/4 times, and the detection results (UC_on_off) is "on" side (i.e., the up-convers ion is conducted) . When the vertical frequency "ω" also has no component (π/3≤ω≤π), it is determined "expanded to 8 times or more", and the vertical magnifying ratio is determined 3 times, and the detection results (UC_on_off) is "on" side (i.e., the up-conversion is conducted). If exchanging the exchanger (4510) shown in Fig. 45 upon basis of those determining results, it is possible to function the resolution converter block (4509), selectively, only upon the signal, upon which the SD→HD conversion (up-conversion) is conducted, and also to control the operation of the HD/SD converter (4508) so that the input of the resolution converter block (4509) comes to the pixel number of the SD camera (4502) when it is picked up.

Fig. 51(a) shows the detailed structures of the resolution converter block (4509) shown in Fig. 45. In the same figure, if assuming that the horizontal pixel number is converted to 1/MR-H=nH/mH times (however, "nH" and "mH" are integers) and also the vertical pixel number is converted to 1/MR-V=nV/mV times (however, "nV" and "mV" are integers), within the resolution converter block (4509), it is desirable to achieve the high resolution, while converting the horizontal pixel number to nH/mH times and the vertical pixel number to nV/mV times, with using the structures (the embodiment 1 through the embodiment 12), which are shown in the embodiments of the present invention mentioned above.

Then, in the present embodiment, as is shown in Fig. 51(a), after expanding the picture, i.e., magnifying the horizontal pixel number to kH times and the vertical pixel number to kV times within a resolution converter unit (5101), once, it is preferable to conduct the picture size conversions of remaining magnifying ratios (in horizontal direction: mH/ (nHxkH) times, in vertical direction: mV/(nV×kV) times), by functioning the general pixel number converter (5102) in the horizontal direction and the vertical direction, respectively. In this instance, as the resolution converter unit (5101) may be the video processing apparatus for conducting the 2-dimensional video high solution, shown as the embodiment 7 through the embodiment 12. However, the structures of the video processing apparatuses shown as the embodiment 7 through the embodiment 12 are already explained, in each of the embodiments, and therefore the explanation thereof will be omitted herein.

For example, when trying to expand the picture size up to 8/3 times in the horizontal direction and 9/4 times in the vertical direction within the resolution converter block (4509), after expanding the picture size to two (2) times in the horizontal direction and two (2) times in the vertical direction within the resolution converter unit (5101), it is enough to, after making magnification of 4/3 times in the horizontal direction within a general pixel number converter (5102-H), expand the picture size up to 9/8 times large in the vertical direction within a general pixel number converter(5102-V).Also,for example,afterexpanding the picture size to four (4) times in the horizontal direction and four (4) times in the vertical direction within the resolution converter unit (5101), it is also possible to, after reducing it down to 2/3 time in the horizontal direction within the general pixel number converter (5102-H), reduce it down to 9/16 in the vertical direction within the general pixel number converter (5102-V) . There is a possibility that the resolution rises up as the magnifying ratio of the resolution converter unit (5101) comes to be large, however accompanying this, since the circuit scale comes to be large with an increase of the number of the input frames necessary for the resolution converting process, therefore it is a tradeoff between the picture quality and the cost. However, the general pixel number converters (5102-H) and (5102-V) may be constructed in either one of (a) the poly-phase type and (b) the up-sampling type shown in Fig. 46.

Also, it does not matter to reverse the order of the processing in the horizontal/vertical directions.

However, in the explanation mentioned above, though the conversion magnifying ratios of the general pixel number converters (5102-H) and (5102-V) was explained to be such values that the pixel size of the input video of the HD/SD converter (4508) and the output size from the resolution converter block (4509) are same; however, it is also possible to use other values altered, for the purpose of fitting the output size from the resolution converterblock (4509) to the pixel value of the display unit (4511) .

In Figs. 52(a) to 52(k), in relation to the conversion process in the horizontal direction within the structures shown in Fig. 45, Fig. 52(a) shows the operation of the SD→HD converter (4503) of the receiver (4505), Fig. 52(b) the operations of the HD/SD converter (down-converter) (4508) and the resolution converter block (4509) of the receiver (4514), respectively. However, in relation to the vertical direction, since the operations are similar thereto, and therefore the explanation thereof will be omitted herein, in particular, in relation to the vertical direction. Herein, as the resolution converter block (4509) is assumed the structure shown in Figs. 51(a) through 51(c), and as well as, the SD→HD converter (4503), the HD/SD converter (4508) and a general sampling rate converters (5102) are assumed to be that of the poly phase type, respectively. Also, as an example of the operations, explanation will be given hereinafter, assuming that the horizontal magnifying ratio is 8/3 (=1920/720) when converting from the SD picture into the HD picture.

Figs. 52(a) to 52(k) show a frequency spectrum of an output at each portion, wherein the horizontal axes in Figs. 52(a) to 52(k) indicate the frequency "f", the vertical axes the intercity of the signal components, and arrows directing upward the position (frequency) of sampling carriers, respectively. Also, it is assumed that a horizontal sampling frequency of the SD picture is "fs" and a horizontal sampling frequency of the HD picture after the SD-HD conversion is "fs'(=8/3fs)".

Fig. 52(a) shows the frequency spectrum of the output signal of the SD camera (4502), and it is assumed that it includes frequency components, equal to Nyquist frequency (=fs/2) or lower than that, inherently or originally. Upon this signal, for the purpose of expanding it to 8/3 times in the horizontal direction, each of the following processes is conducted; i.e., the 8 times up-ra ting, the interpolation low-pass filter and the 1/3 time down-rating, within the SD→HD converter (4503).

Fig. 52(b) shows the frequency spectrum of the output signal of the 8 times up-rater (4603) within the SD→HD converter (4503), and this indicates that the distance between the sampling carries shown in Fig. 52(a) is expanded from "fs" to "8fs".

Fig. 52(c) shows the frequency spectrum of the output signal of the interpolation low-pass filter (4604) within the SD→HD converter (4503). Assuming that the cutoff frequency of the interpolation low-pass filter (4604) is "fs/2", then as shown in the same figure, other frequency components are removed while remaining only the frequency components in the vicinity of f=0 and f=8fs. In this instance, the frequency components equal to the Nyquist frequency (=fs/2) and higher than that remains as the aliasing components.

Fig. 52(d) shows the frequency spectrum of the output signal of the 1/3 time down-rater (4605) within the SD→HD converter (4503), i.e., a new sampling carrier is generated at a new position of the sampling frequency "fs' (=8fs/3)" after the SD→HD conversion, multiplied by an integer. To this sampling carrier, it is indicated that the frequency component passing through the interpolation low-pass filter (4604) is folded into.

Herein, Fig. 52(d) shows the frequency spectrum of the signal after the SD→HD conversion, which flows on the transmission line (45069 shown in Fig. 45, andthisdiffersfromthe frequency spectrum of the original signal shown in Fig. 3 or 4, in an aspect that the frequency components equal to the Nyquist frequency (=fs/2) and higher than that to do not remain at the original positions thereof. Thus, this indicates that the frequency components equal to the Nyquist frequency (=fs/2) and higher than that cannot be reproduced, even if conducting the resolution conversion process of the present invention, as it is.

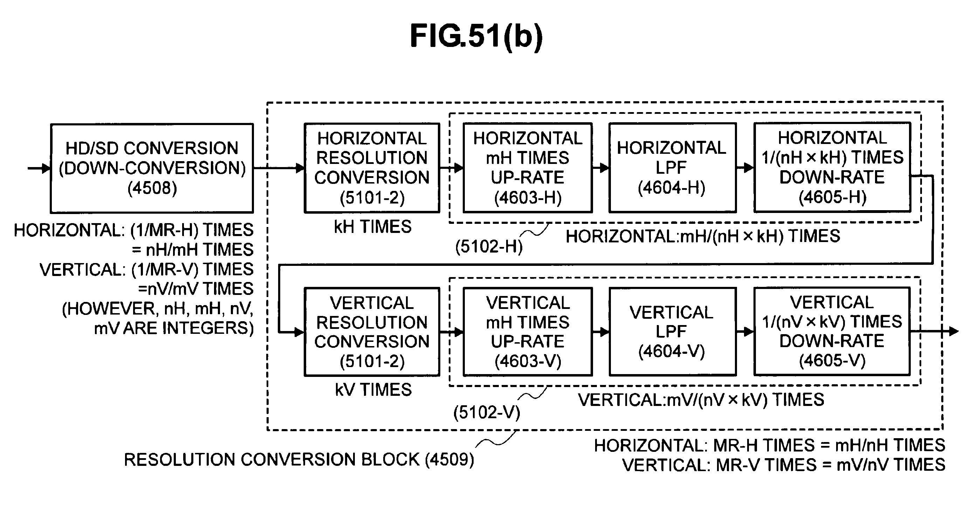

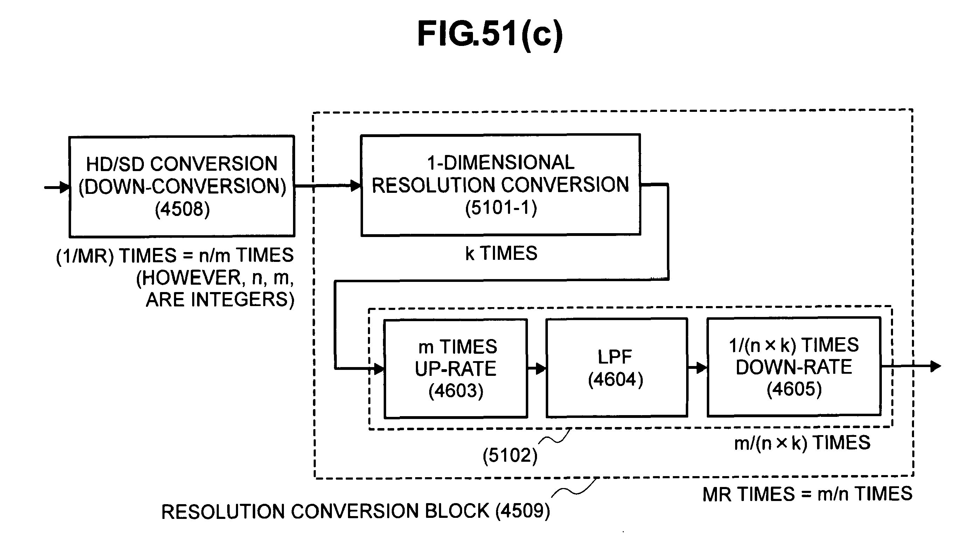

Then, for the purpose of reproducing the frequency components equal to the Nyquist frequency (=fs/2) and higher than that from the signal after the SD→HD conversion, there are needed the HD/SD converter (4508) and the resolution converter block (4509) shown in the receiver side (4514) in Fig. 45(b). Hereinafter, explanation will be given on each of the frequency spectra shown in Figs. 52(e) to 52(k), upon basis of the structures shown in Fig. 51. However, the explanation hereinafter will be made by assuming that the respective variables (n, m, k) indicative of the magnifying ratios shown in Fig. 51 are n=3, m=8 and k=2, respectively.

Fig. 52(e) shows the frequency spectrum of the output of the 3 times up-rater (4603) within the HD/SD converter (4508), and this indicates that the distance between the sampling carriers shown in Fig. 52(d) is expanded from "fs' (=8fs/3)" to "3fs' (=8fs)".

Fig. 52(f) shows the frequency spectrum of the output of the interpolation low-pass filter (4604) withintheHD/SDconverter (4508). Assuming that the cutoff frequency of the interpolation low-pass filter is "fs/2", as is shown in the same figure, other frequency components are removed from while remaining only the frequency components in the vicinity of f=0 and f=8fs. In this instance, the frequency components equal to the Nyquist frequency (=fs/2) and higher than that remains as the aliasing components. Further, as is apparent from the frequency spectrum shown in Fig. 52(e), if setting the cutoff frequency of the interpolation low-pass filter within a range from "fs/2" to "fs -fs/2=13fs/6", it is possible to remove or cancel the unnecessary frequency components around "fs'(=8fs/3)" and "2fs'(=16fs/3)".

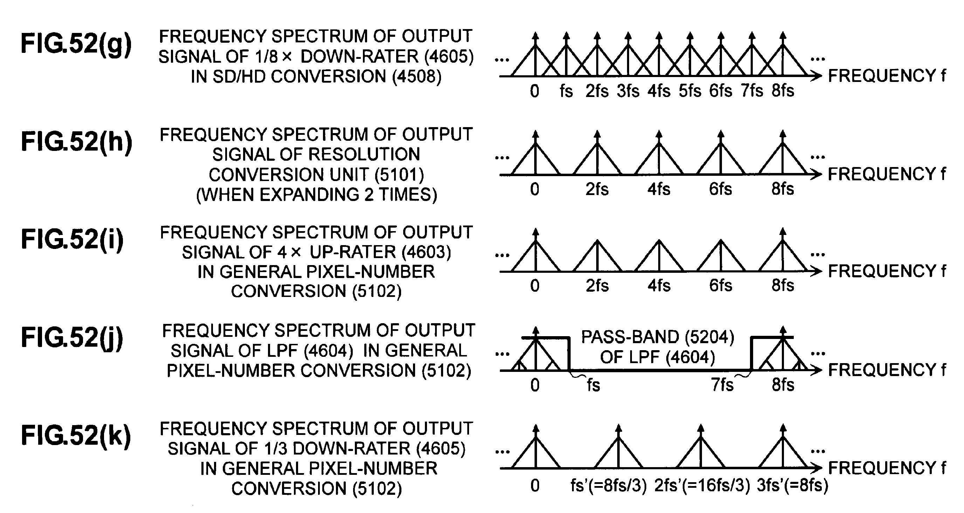

Fig. 52(g) shows the frequency spectrum of the output signal of the 1/8 time down-rater (4605) within the HD/SD converter (4508), i.e., a new sampling carrier is generated at a new position of the sampling frequency "fs (=3fs'/8)" after the SD→HD conversion, multiplied by an integer. To this sampling carrier, it is indicated that the frequency component passing through the interpolation low-pass filter (4604) is folded into.

Herein, in Fig. 52(g) remains the frequency components equal to the Nyquist frequency (=fs/2) and higher than that at the original positions thereof, and it is same to the frequency spectrum of the original signal shown in Figs. 3 and 4. Thus, this indicates that the frequency components equal to the Nyquist frequency (=fs/2) and higher than that can be reproduced, if conducting the resolution conversion process of the present invention, as it is.

Fig. 52(h) shows the frequency spectrum of the output signal of the resolution converter (5101) according to the present invention, wherein as was explained by referring to Fig. 4, etc., the unnecessary aliasing components around "fs", "3fs", "5fs" and "7fs" are canceled; i.e. , the frequency components of the original signal, equal to the Nyquist frequency (=fs/2) and higher than that, can be reproduced. Hereinafter, for the purpose of fitting to the pixel number of the HD signal transmitted, the signal is expanded up to 4/3 times within a general sampling rate converter (5102).

Fig. 52(i) shows the frequency spectrum of the output signal of the 4 times up-rater (4603) within the sampling rate converter (5102), and this indicates that the distance between the sampling carriers shown in Fig. 52(h) is expanded from "2fs" to "8fs".

Fig. 52(j) shows the frequency spectrum of the output signal of the interpolation low-pass filter (4604) within the sampling rate converter (5102). If assuming that the cutoff frequency of the interpolation low-pass filter (4604) is "fs", as is shown in the same figure, other frequency components are removed while remaining only the frequency components in the vicinity of f=0 and f=8fs.

Fig. 52(k) shows the frequency spectrum of the output signal of the 1/3 time down-rater (4605) within the sampling rate converter (5102), i.e., a new sampling carrier is generated at a new position of the sampling frequency "fs'(=8fs/3)" same to the signal transmitted from the transmitter side, multiplied by an integer. To this sampling carrier, it is indicated that the frequency component passing through the interpolation low-pass filter (4604) is folded into.

With the operations mentioned above, the signal transmitted from the transmitter side with the frequency spectrum shown in Fig. 52(d) is converted, as shown in Fig. 52(k), by means of the receiver (4514) shown in Fig. 45(b), and an output video, having the high resolution than that of the video outputted from the SD camera (4502), is reproduced on the display unit (4511). Accordingly, it is possible to lighten the difference of resolution between the video signal, which is picked up by the HD camera (4501), and the video signal, which is picked up by the SD camera and SD→HD converted (up-converted), and thereby dissolving the problem that the picture is difficult to see due to frequent exchanges of the resolution thereof.

Further, in Fig. 52(a) to 52(k), the explanation was made y listing up the example of picture expansion, in particular, in the horizontal direction; however, it is also apparent that the operations for picture expansion in the vertical direction are also similar to that mentioned above. Also, the magnifying ratio should not be limited to 8/3 times, but the operations are same for other magnifying ratios.

Also, the signal processing on the receiver side (4514) shown in Fig. 45 need not to be a real-time operation, i.e., the signal received from the transmission line (4506), after recoding it into a video recorder, etc., once, may be treated with the resolution conversion process through a non-real time process (e.g., an offline process), and thereafter it may be recorded into the video recorder, etc., again, and thereby to achieve a real-time display when reproducing it on the display unit (4511). This portion for recording it into the video recorder, etc., again, corresponds to that, when considering that the transmitter (4512) shown in the receiver unit (4514) shown in Fig. 45(b) is the recording unit of the video recorder, and that the transmission line (4513) is the recording medium (e.g., a video disc, and a video tape, etc.).

Also, in Fig. 45, also for the signal picked up by the HD camera (4501), within (a) the transmitter (4505), in case of desiring to display it on the display unit (4511), through converting it to the further high resolution within (b) the receiver (4514), it is enough to insert the resolution converter block (4509) according to the present invention, after the exchanger (4510). Or, alternatively, it is apparent to obtain the same operations, while inserting the resolution converter block (4509) according to the present invention at an input of the exchanger (4510) on the "off" side, so as to convert the signal picked up by the HD camera (4501), and also increasing the magnifying ratio of the resolution converter block (4509) after the HD/SD conversion (down-conversion).

Also, in Fig. 45, it is not essential to provide the display unit (4511) and/or the transmitter (4512) within the (b) receiver (4514). Thus, not unifying it/them within the same housing of the (b) receiver (4514), but they may be in other configuration with using the output signal of the exchanger (4510) as an interface.

Also, in Fig. 45, though was mentioned about the structures for detecting the detection result (UC_on_off) on whether the signal is SD→HD converted (up-converted) or not, the horizontal magnifying ratio (MR-H) and the vertical magnifying ratio (MR-V), within the up-conversion detector unit (4507), automatically; however, in case where this is clear in advance, the up-conversion detector unit (4507) is not necessary. For example, in case where mode identification information is transmitted together with the video frame, from the transmitter (4510) through the transmission lien (4506), and into this mode identification information are stored each information, such as, the detection result (UC_on_off) on whether the signal is SD→HD converted (up-converted) or not, the horizontal magnifying ratio (MR-H) and the vertical magnifying ratio (MR-V), then the mode identification information may be read out in the receiver (4514), so as to use the each information as it is. Or, alternatively, in case where the horizontal magnifying ratio (MR-H) and the vertical magnifying ratio (MR-V) are apparent, originally, via the standard regulation, etc., then it is enough to use a fixed value determined by that standard regulation, etc.

Also in Fig. 45, for simplifying the explanation thereof, the (a) transmitter (4505) is explained to transmit the signal obtained from the HD camera (4501) or the SD camera (4502) as it is, on real-time; however the present invention should not be limited to this, but it is needless to say that the similar effects can be obtained for the signal, obtained through conducting recording/reproducing upon the signal obtained from the HD camera (4501) or the SD camera (4502), or the signal edited.

Also in Fig. 45, it is apparent that the similar effects can be obtained if disposing the SD→HD converter (4503), not wi thin the (a) transmitter (4505), but in a front stage of the (b) receiver (4514). For example, within the same television receiver, when trying to achieve the high resolution with a configuration of plural numbers of LSI chips, after conducting the SD→HD conversion (4503) within the chips in the front stage, the resolution conversion process may be conducted, which is shown in the receiver (4514) by (b) in Fig. 45. In this instance, the pixel number of the HD video need not to be the predetermined number of pixel, which is determined by a broadcasting regulation, etc., but it may be, for example, horizontal 1024 pixels x vertical 1024 pixels, or horizontal 1366 pixels x vertical 768 pixels, etc.

Next, Fig. 53 shows a flowchart of operations of the receiver, according to the present embodiment. In the flowchart shown in Fig. 53, the process starts from a step (5301), and determination is made on whether the plural number of video signals, which are inputted in the step (5302), are signals or not, upon which the SD→HD conversion (up-conversion) is conducted, in a step (5302), and if they are the signals, upon which the SD→HD conversion (up-conversion) is not conducted, then the process is ended in a step (5307). On the other hand, if they are the signals, upon which the SD→HD conversion (up-conversion) is conducted, then in a step (5303), determination is made on the horizontal magnifying ratio (MR-H) and the vertical magnifying ratio (MR-V). As this determining method, since the above steps explained by referring to Figs. 49 and 50 can be applied as they are, and therefore the illustration thereof will be omitted herein. Following to the above, in a step (5304) is conducted the HD/SD conversion (down-conversion), upon basis of the horizontal magnifying ratio (MR-H) and the vertical magnifying ratio (MR-V) which are determined, so that the video signals turn back to the pixel number when picking up them. Thus, in the step (5304) is conducted the video reduction of the horizontal magnifying ratio (1/MR-H) and the vertical magnifying ratio (1/MR-V). In a step (5305), with using any one of the processing step (5) shown in Figs. 14 to 16, the step (6) shown in Fig. 33, or the step (7) shown in Figs. 42 to 44, the resolution conversion (i.e., high resolution) is conducted for producing the high resolution video from the plural number of videos, which are converted in the step (5304). Herein, in the step (5305) are conducted the video expansions of magnifying by an integer number in the horizontal direction and the vertical direction, respectively. Now, it is assumed that the horizontal magnifying ratio is (kH) and the vertical magnifying ratio is (kV), in the step (5305), for example. Thereafter, in a step (5306), upon basis of themagnifying ratios (MR-H, MR-V, kH, kV) is conducted the general pixel number conversion, so as to provide an output therefrom. Thus, in the step (5306), the video expansion (or reduction) of the horizontal magnifying ratio (MR-H/kH) and the vertical magnifying ratio (MR-V, kV) is conducted, so as to provide the output. However, the operations in the step (5302) and the step (5303) correspond to the operations of the up-conversion detection (4507) shown in Fig. 45, the operation in the step (5304) to the operation of the HD/SD conversion (4508) shown in Fig. 45, the operation in the step (5305) to the operation of the resolution converter unit (5101) shown in Fig. 51, and the operation in the step (5306) to the general pixel number converter unit (5102) shown in Fig. 51, respectively.

Within the receiving apparatus according to the embodiment 29 explained in the above, discrimination is made, from beginning of inputting the video therein, between the video obtained via the up-conversion of the low resolution video up to the high resolution while remaining the aliasing components, and the high resolution video having a small number of aliasing components inherently. When determining that the input video is the former video, upon that up-converted video is conducted the high resolution processing in the 2-dimensional directions, which is shown in the embodiments 7 to 12, after conducting the down-conversion thereupon. With this, it is possible to convert into the high-resolution video, while reducing the aliasing components thereof, even if it is the former video.

Therefore, on the video displayed or outputted by the receiving apparatus according to the embodiment 29, it is possible to reduce the difference of the resolution between the former video and the latter video, and also to prevent the resolution from being exchanged, frequently.

### <Embodiment 30>

A receiving apparatus, according to an embodiment 30 of the present invention, is that of replacing the resolution conversion block (4509) shown in Fig. 51(a) by the resolution conversionblock (4509) described in Fig. 51(b), within the receiving apparatus according to the embodiment 29.

Within the resolution conversion block (45C9) described in Fig. 51(b), differing from the resolution conversion block (4509) shown in Fig. 51(a), after conducting the resolution conversion/up-rating process/down-rating process in the horizontal direction, the resolution conversion/up-rating process/down-rating process are conducted in the vertical direction. In this instance, the order of each of the processes in the vertical/horizontal directions may be reversed. In this manner, conducting the resolution conversion/up-rating process/down-rating process, respectively and independently, it is possible to build up the hardware, for conducting the resolution conversion/up-rating process/down-rating process in each direction, in common. Thus, it is enough to provide the hardware having the common structure in a plural number thereof, so as to conduct the processed in the horizontal direction and the vertical direction, respectively. In this case, because of making the hardware common brings about an effect of achieving the reduction of the parts cost.

In this instance, the resolution converter unit (5101-H) in the H direction and the resolution converter unit (5101-V) in the V direction may conduct the high-resolution process in one-dimensional direction shown in the embodiments 1 to 6. Further, with the structures for conducting the high-resolution process in one-dimensional direction, which is shown in the embodiments 1 to 6, was already explained in each of the embodiments, and therefore the explanation thereof will be omitted herein.

Since the other structures are same to those of the receiving apparatus according to the embodiment 29, then the explanation thereof will be omitted.

The receiving apparatus according to the embodiment 30 mentioned above has an effect, in addition to the effect of the receiving apparatus according to the embodiment 29, of enabling to achieve the receiving apparatus, but with a low cost, comparing to that according to the embodiment 29.

### <Embodiment 31>

A receiving apparatus according to an embodiment 31 of the present invention is that of replacing the resolution conversion block (4509) shown in Fig. 51(a) by the resolution conversion block (4509) described in Fig. 51(c), within the receiving apparatus according to the embodiment 29.

Within the resolution conversion block (4509) described in Fig. 51(c), differing from the resolution conversion block (4509) shown in Fig. 51(a), the resolution conversion/up-rating process/down-rating process are conducted only in the one-dimensional direction. For example, a one-dimensional resolution conversion unit (5101-1) may conduct the high resolution process in one-dimensional direction as shown in the embodiments 1 to 6. Further, with the structures for conducting the high-resolution process in one-dimensional direction, which is shown in the embodiments 1 to 6, was already explained in each of the embodiments, and therefore the explanation thereof will be omitted herein.

Since the other structures are same to those of the receiving apparatus according to the embodiment 29, then the explanation thereof will be omitted.

Thus, the receiving apparatus according to the embodiment 31 mentioned above relates to the receiving apparatus, for achieving the high resolution only in one-dimensional direction, for example, when receiving the broadcasting, of which the video to be received is up-converted only in one-dimensional direction.

In this instance, the structures of the resolution converter unit described in Fig. 51(c) can be constructed, easily, comparing to the resolution conversion block (4509) shown in Fig. 51(a). Therefore, there can be obtained an effect of achieving reduction of the parts cost.

Within the receiving apparatus according to the embodiment 31 explained in the above, discrimination is made, from beginning of inputting the video therein, between the video obtained via the up-conversion of the low resolution video up to the high resolution while remaining the aliasing components, and the high resolution video having a small number of aliasing components inherently. When determining that the input video is the former video, upon that up-converted video is conducted the high resolution processing of one-dimensional direction, which is shown in the embodiments 1 to 6, after conducting the one-dimensional down-conversion thereupon. With this, it is possible to convert into the high-resolution video, while reducing the aliasing components thereof, even if it is the former video.

Therefore, on the video displayed or outputted by the receiving apparatus according to the embodiment 29, it is possible to reduce the difference of the resolution between the former video and the latter video, and also to prevent the resolution from being exchanged, frequently.

The receiving apparatus according to the embodiment 31 mentioned above has an effect, in addition to the effect of the receiving apparatus according to the embodiment 29, of enabling to achieve the receiving apparatus, but with a low cost, comparing to that according to the embodiment 29.

Further, each embodiment of the present invention may be applied into, other than the apparatuses explained in the embodiments given in the above, for example, a DVD player, amagnetic disc player, or a semiconductor memory player, in the similar manner. Also, it may be applied into a mobile video display terminal (for example, a portable telephone) for receiving one-segment broadcasting, for example.

Also, as the video frame may be applied the video frame of the signal other than the television broadcasting signal. Also, a streaming video transmitted through the Internet may be applied, for example, or the video frame reproduced from the DVD player or a HDD player.

Also, each embodiment mentioned above was explained by listing up the high resolution thereof, by a unit of frame, for example. However, the target of the high resolution should not always be the frame as a whole. For example, the high resolution may be made on the target, such as, an input video or a part of frame of the input video. Thus, with conducting the video processing of one of the embodiments of the present invention mentioned above, upon the target, i.e., a plural frames of a part of frames of the input video, it is possible to obtain an enlarged picture of high picture quality of the input video or the part of the input video. This can be applied into, such as, an enlarging display of a part of the video, for example.

Further, if combining any one of the embodiments mentioned above, it is also possible to obtain another embodiment of the present invention.

With each of the embodiments of the present invention mentioned above, it is possible to conduct the process, preferably, for converting the video of low resolution into the enlarged video, thereby obtaining the high-resolution video of high picture quality. Thus, it is possible to obtain the high resolution of the video signal, preferably.

Also, with each of the embodiments of the present invention mentioned above, it is possible to reduce the frame number of the video necessary for obtaining the high-resolution picture of high picture quality.

## Claims

1. A video displaying apparatus, comprising:
an input unit, to which a first video field and a second video field of an interlace scanning type are inputted;
a video signal processing unit, which is configured to calculate out a difference of sampling position with using each video data corresponding thereto on said first video field and said second video fiel d, to compensate said difference of position, with using a special difference of scanning lines of said first video field and said second video field, and to compose said first video field and said second video field through conversion process, and thereby producing one (1) piece of video frame of a progressive scanning type; and
a display unit, which is configured to display the video frame produced by said video signal processing unit.

2. The video displaying apparatus, as described in the claim 1, wherein said video signal processing unit conducts positioning of said first video field and said second video field with using said positional difference compensated, produces two (2) pieces of high pixel-number video by increasing a pixel number of the fields, respectively, produces two (2) video data after phase shifting by shifting phases of the video data of said two (2) pieces of high pixel-number videos, respectively, determines coefficients with using information of said compensated phase difference, and adds products obtained by multiplying said coefficients on each video data of four (2) video data, including two (2) video data before said phase shifting and two (2) video data after said phase shifting, thereby producing one (1) piece of the video frame of progressive scanning type.

3. The video displaying apparatus, as described in the claim 1, wherein said video signal processing unit conducts processes, being similar to that conducted on said first video field and said second video field, upon said second video field and a third video field, when said third video field is further inputted into said input unit, and thereby producing one (1) piece of the video frame of progressive scanning type.

4. A video signal processing apparatus, comprising:
an input unit, to which a first video field and a second video field of an interlace scanning type are inputted;
a position estimation unit, which is configured to calculate out a sampling difference with using each video data corresponding thereto on said first video field and said second video field;
an offset compensation unit, which is configured to compensate the phase difference calculated in said position estimation unit, with using a special difference of scanning lines of said first video field and said second video field; and
a resolution converter unit, which is configured to produce one (1) piece of output video frame of a progressive scanning type, increasing resolution thereof by composing said first video field and said second video field after conducting conversion process thereupon, with using the phase difference compensated by said offset compensation unit.

5. The video signal processing apparatus, as described in the claim 4, wherein said resolution converter unit comprises:
a motion compensation/up-rater unit, which is configured to produce two (2) pieces of high pixel-number videos, by conducting positioning of said first video field and said second video field, with using the phase difference compensated by said offset compensation unit, and increasing pixel numbers of the fields, respectively;
a phase shifting unit, which is configured to shift phases of two (2) pieces of videos, respectively, pixel number of which is increased by said motion compensation up-rater unit, and thereby producing two (2) pieces of new video data;
a coefficient determination unit, which is configured to determine coefficients with using information of the phase difference compensated by said offset compensation unit; and
an adder, which is configured to add products obtained by multiplying said coefficients on each video data of four (4) video data, including two (2) video data before said phase shifting and two (2) video data after said phase shifting, thereby producing one (1) piece of the video frame of progressive scanning type.

6. The video signal processing apparatus, as described in the claim 4, wherein said video signal processing unit conducts processes, being similar to that conducted on said first video field and said second video field, upon said second video field and a third video field, when said third video field is further inputted into said input unit, and thereby producing one (1) piece of the video frame of progressive scanning type.

7. A video signal processing method, comprising the following steps of:
an inputting step, in which a first video field and a second video field of an interlace scanning type are inputted;
an up-rate processing step, which is configured to increase a pixel number of each field of said first video field and said second video field, respectively;
a position estimating step, which is configured to calculate out a sampling difference with using each video data corresponding thereto on said first video field and said second video field;
an offset compensating step, which is configured to compensate the phase difference calculated in said position estimating step, with using a special difference of scanning lines of said first video field and said second video field; and
a resolution converting step, which is configured to produce one (1) piece of output video frame of a progressive scanning type, increasing resolution thereof by composing said first video field and said second video field after conducting conversion process thereupon, with using the phase difference compensated by said offset compensating step.

8. The video signal processing method, as described in the claim 7, wherein said resolution converting step further comprises the following steps of:
a phase shifting step, which is configured to shift phases of two (2) pieces of videos, respectively, pixel number of which is increased by said up-rate processing step, and thereby producing two (2) pieces of new video data;
a coefficient determining step, which is configured to determine coefficients with using information of the phase difference compensated by said offset compensating step; and
an outputting step, which is configured to add products obtained by multiplying said coefficients on each video data of four (4) video data, including two (2) video data before said phase shifting and two (2) video data after said phase shifting, and thereby producing one (1) piece of the video frame of progressive scanning type.

9. The video signal processing method, as described in the claim 7, wherein, in said inputting step,
when a third video field is inputted, in addition to said first video field and said second video field,
said up-rate processing step, said position estimating step, said offset compensating step and said resolution converting step are conducted upon said first video field and said second video field, and thereby outputting one (1) piece of frame; and
further, said up-rate processing step, said position estimating step, said offset compensating step and said resolution converting step are conducted upon said second video field and said third video field, and thereby outputting one (1) piece of frame.

10. A video signal processing apparatus, comprising:
an input unit, to which a plural number of video frames, each being built up with pixels of a first pixel number;
a pixel number conversion detecting unit, which is configured to detect that the plural number of video frames inputted into said input unit are video frames, which are converted from video frames, each being built up with pixels of a second pixel number smaller than the first pixel number; and
a video signal processing unit, which is configured to produce one (1) video frame built up with pixels of a third pixel number larger than said second pixel number, with using said plural number of video frames;
wherein, a characteristic of said video signal processing unit is changed upon basis of a detection result of said pixel number conversion detecting unit.

11. The video signal processing apparatus, as described in the claim 10, wherein said video signal processing unit further comprises:
a pixel number reduction processing unit, which is configured to conduct a conversion to reduce the pixel number of the plural number of video frames inputted; and
a resolution converter unit, which is configured to produce one (1) piece of video built up with pixels of a pixel number, being larger than the pixel number of pixels of the video frames, which are outputted from said pixel number reduce processing unit;
wherein said pixel number reduction processing unit conducts a process to convert said plural number of video frames from the frame built up with pixels of said first pixel number into the video frame built up with pixels of said second pixel number, when said pixel number conversion detecting unit detects that the plural number of video frames inputted into said input unit are frames, which are converted from the video frame built up with pixels of said second pixel number, and said resolution converter unit produces one (1) piece of video frame built up with pixels of said third pixel number, with using the plural number of video frames, which are converted by said pixel number reduction processing unit.

12. The video signal processing apparatus, as described in the claim 11, wherein said pixel number reduction processing unit conducts a conversion process to reduce the pixel number of said plural number of video frames in a horizontal direction and a vertical direction, and
said resolution converter unit comprises:
a position estimation unit, which is configured to calculate out a phase difference in the horizontal direction and the vertical direction, about the plural number of video frames converted by said pixel number reduction processing unit, and thereby outputting a plural number of sampling phase difference data;
a pixel number increasing unit, which is configured to change a position of video data of the frame converted by said pixel number reduction processing unit, with using the plural number of sampling data outputted by said position estimating unit, and thereby producing two (2) high pixel-number video data, each being higher in the pixel number than the frames converted by said pixel number reduction processing unit; and
a phase shifting unit, which is configured to conduct a plural number of phase shifting processes upon video data of said two (2) high pixel-number video frames, which are outputted from said pixel number increasing unit, and thereby producing four (4) video data;
wherein the one (1) piece of the video frame is outputted, which is built up with pixels of the pixel number larger than said second pixel number, by multiplying the plural number of coefficients calculated from the plural number of sampling phase data, which are outputted from said position estimating unit, upon said four (4) video data, which are outputted from said phase shifting unit.

13. The video signal processing apparatus, as described in the claim 11,
wherein said pixel number reduction processing unit conducts a conversion process to reduce the pixel number of said plural number of video frames inputted, in any one of a horizontal direction or a vertical direction,
wherein said resolution converter unit comprises:
a position estimation unit, which is configured to calculate out a phase difference in the direction, the pixel number of which is reduced, about the plural number of video frames converted by said pixel number reduction processing unit, and thereby outputting a plural number of sampling phase difference data;
a pixel number increasing unit, which is configured to produce high pixel-number video data being larger in the pixel number than the video frame, which is converted by said pixel number reduction processing unit, while changing a position of video data of the frame converted by said pixel number reduction processing unit, with using the sampling data outputted by said position estimating unit; and
a phase shifting unit, which is configured to conduct a phase shifting process upon said two (2) high pixel-number video data, which is outputted from said pixel number increasing unit, and thereby producing two (2) video data, including the video data before the phase shifting process and the video data after the phase shifting process;
and wherein the one (1) piece of the video frame is outputted, which is built up with pixels of the pixel number larger than said second pixel number, by multiplying the plural number of coefficients calculated from the plural number of sampling phase data, which are outputted from said position estimating unit, upon said two (2) video data, which are outputted from said phase shifting unit.

14. The video signal processing apparatus, as described in the claim 10, wherein said pixel number conversion detecting unit detects that the plural number of video frames inputted into said input unit are video frames, which are converted from video frames, each being built up with pixels of the second pixel number smaller than the first pixel number, upon basis of a data amount after conducting a high-pass filtering process on the plural number of video frames, which are inputted into said input unit.

15. A video signal processing method; comprising the following steps of:
a pixel-number conversion detecting step, which is configured to determine on whether a plural number of input videos are videos or not, which are produced by conducting a conversion to expand a low resolution video;
a magnifying ratio calculating step, which is configured to calculate a magnifying ratio in a horizontal direction or a vertical direction, when said pixel-number conversion detecting step determines that said plural number of input videos are produced by conducting a conversion to expand a low resolution video;
a reducing conversion step, which is configured to conduct a conversion to reduce said input videos down to a pixel number of said low resolution video, with using the magnifying ratio calculated in said magnifying ratio calculating step; and
a high resolution video producing step, which is configured to produce a high resolution video from the plural number of videos, which are converted within said reducing conversion step.

16. A video signal processing apparatus, comprising:
an input unit, into which four (4) pieces of video frames are inputted; and
a resolution converter unit, which is configured to output an output video frame, in which a pixel number of pixels building up the video frame is increased in a horizontal direction and a vertical direction.

17. The video signal processing apparatus, as described in the claim 16, wherein said resolution converter unit comprises:
a position estimation unit, which is configured to calculate phase differences in the horizontal direction and the vertical direction, about a set of two (2) pieces of the input video frames, which can be selected from the four (4) pieces of input video frames inputted into said input unit, and thereby outputting a plural number of sampling phase difference data;
a pixel number increasing unit, which is configured to produce four (4) pieces of high pixel-number video data, being larger in the pixel number than said input video frame, while changing a position of the video data of said input video frame, with using said plural number of sampling phase difference data, which is outputted by said position estimation unit;
a phase shifting unit, which is configured to conduct a plural number of phase shifting processes upon the video data of said four (4) high pixel-number video frames, which are outputted from said pixel number increasing unit, respectively, and thereby producing sixteen (16) video data; and
an output unit, which is configured to multiply a plural number of coefficients, which are calculated from the plural number of sampling phase difference data outputted from said position estimation unit, upon said sixteen (16) video data, which are outputted from said phase shifting unit, and thereby outputting one (1) piece of video frame built up with pixels of a pixel number larger than the pixel number of said input video frame.

18. The video signal processing apparatus, as described in the claim 16, wherein said resolution converter unit comprises:
a position estimation unit, which is configured to calculate sampling phase differences in the horizontal direction and the vertical direction, respectively, with using the video data on a reference video frame and respective video data corresponding thereto on other three (3) input video frames, respectively, while using one (1) of input video among four (4) pieces of input video frames, which are inputted into said input unit, and thereby calculating three (3) sets of the sampling phase differences in the horizontal direction and the vertical direction;
a motion compensation/up-rater unit, which is configured to conduct motion compensation on the video data of said four (4) pieces of input video frames, with using said three (3) sets of sampling phase differences in the horizontal direction and the vertical direction, and also to produce four (4) pieces of video frames of high pixel-number, which are obtained by increasing the pixel numbers of said four (4) pieces of video frames in the horizontal direction and the vertical direction;
a phase shifting unit, which is configured to produce video data by shifting the video data in the horizontal direction, video data by shifting the video data in the vertical direction, and video data by shifting the video data in the horizontal/vertical direction, for the four (4) pieces of high pixel-number video frames produced by said motion compensation/up-rater unit, respectively, and to output three (3) pieces of the video data after shifting as well as, the video data before the phase shifting, which are produced for the high pixel-number video frames, respectively; and
an aliasing component removal unit, which is configured to multiply the coefficients to be calculated from the three (3) sets of sampling phase differences in the horizontal direction and the vertical direction, which are calculated by said position estimation unit, upon the plural number of video frames outputted from said phase shifting unit, thereby to compose and output an output video frame, increasing the pixel number of pixels building up the video frame thereof.

19. A video signal processing method, comprising the following steps of:
an inputting step, in which four (4) pieces of video frame are inputted; and
a resolution conversion step, which is configured to output an output video frame, increasing the pixel number of pixels building up the video frame thereof, by composing said four (4) pieces of video frame inputted.

20. The video signal processing method, as described in the claim 19, wherein said resolution converter step comprises the following steps of:
a position estimating step, which is configured to calculate phase differences in the horizontal direction and the vertical direction, about a set of two (2) pieces of the input video frames, which can be selected from the four (4) pieces of input video frames inputted into said inputting step, and thereby outputting a plural number of sampling phase difference data;
a pixel number increasing step, which is configured to produce four (4) pieces of high pixel-number video data, being larger in the pixel number than said input video frame, while changing a position of the video data of said input video frame, with using said plural number of sampling phase difference data, which is calculated in said position estimating step;
a phase shifting step, which is configured to conduct a plural number of phase shifting processes upon the video data of said four (4) pieces of high pixel-number video frames, which produced in said pixel number increasing step, respectively, and thereby producing sixteen (16) video data; and
an output step, which is configured to multiply a plural number of coefficients calculated upon basis of the plural number of sampling phase difference data, which are calculated within said position estimating step, upon said sixteen (16) video data, which are calculated in said phase shifting step, and thereby outputting one (1) piece of video frame built up with pixels of a pixel number larger than the pixel number of said input video frame.

21. The video signal processing method, as described in the claim 19, wherein said resolution converting step comprises the following steps of:
a position estimating step, which is configured to calculate sampling phase differences in the horizontal direction and the vertical direction, respectively, with using the video data on a reference video frame and respective video data corresponding thereto on other three (3) input video frames, respectively, while using one (1) of input video among four (4) pieces of input video frames, which are inputted in said inputting step, and thereby calculating three (3) sets of the sampling phase differences in the horizontal direction and the vertical direction;
a motion compensating/up-rating step, which is configured to conduct motion compensation on the video data of said four (4) pieces of input video frames, with using said three (3) sets of sampling phase differences in the horizontal direction and the vertical direction, and also to produce four (4) pieces of video frames of high pixel-number, which are obtained by increasing the pixel numbers of said four (4) pieces of video frames in the horizontal direction and the vertical direction;
a phase shifting step, which is configured to produce video data by shifting the video data in the horizontal direction, video data by shifting the video data in the vertical direction, and video data by shifting the video data in the horizontal /vertical direction, for the four (4) pieces of high pixel-number video frames produced in said motion compensating/up-rating step, respectively, and to output three (3) pieces of the video data after shifting as well as, the video data before the phase shifting, which are produced for the high pixel-number video frames, respectively; and
an aliasing component removing step, which is configured to multiply the coefficients to be calculated from the three (3) sets of sampling phase differences in the horizontal direction and the vertical direction, which are calculated in said position estimating step, upon the plural number of video frames produced in said phase shifting step, thereby to compose and output an output video frame, increasing the pixel number of pixels building up the video frame thereof.
